(19) Europäisches Patentamt / European Patent Office / Office européen des brevets

(11) **EP 4 319 015 A1**

(12) **EUROPEAN PATENT APPLICATION**
published in accordance with Art. 153(4) EPC

(43) Date of publication:
**07.02.2024 Bulletin 2024/06**

(21) Application number: **22778548.2**

(22) Date of filing: **14.03.2022**

(51) International Patent Classification (IPC):
***H04L 5/00*** *(2006.01)*

(52) Cooperative Patent Classification (CPC):
**H04L 1/18; H04L 5/00; H04W 72/00; H04W 72/04**

(86) International application number:
**PCT/CN2022/080778**

(87) International publication number:
**WO 2022/206364 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.04.2021 CN 202110363931**

(71) Applicant: **Datang Mobile Communications Equipment Co., Ltd.**
**Beijing 100085 (CN)**

(72) Inventors:
• **WANG, Junwei**
  **Beijing 100085 (CN)**
• **SI, Qianqian**
  **Beijing 100085 (CN)**
• **GAO, Xuejuan**
  **Beijing 100085 (CN)**

(74) Representative: **Studio Torta S.p.A.**
**Viale Antonio Silvani, 6**
**40122 Bologna (IT)**

(54) **METHOD FOR SENDING AND METHOD FOR RECEIVING HARQ CODEBOOK, APPARATUS, AND STORAGE MEDIUM**

(57) The embodiments of the present disclosure provide a method for sending and a method for receiving a HARQ codebook, an apparatus, and a storage medium. The method for sending a HARQ codebook comprises: determining the total quantity of candidate PDSCH receiving occasions on the basis of HARQ feedback time sets of a plurality of candidate services, and determining a codebook sequence corresponding to a candidate PDSCH receiving occasion in each time unit; determining the value of each bit in the HARQ codebook according to whether downlink data is correctly received at a receiving occasion of each candidate PDSCH; and sending the HARQ codebook. According to the method for sending and method for receiving a HARQ codebook, the apparatus, and the storage medium provided in the embodiments of the present disclosure, the total quantity of candidate PDSCH receiving occasions is determined on the basis of HARQ feedback time sets of a plurality of candidate services, so that the length of a generated HARQ codebook is shortened, thus improving resource utilization.

```
Determining a total number of occasions for candidate physical
downlink shared channel (PDSCH) reception based on sets of slot timing
values for HARQ feedback for multiple candidate services, and
determining a codebook order corresponding to the occasions for
candidate PDSCH reception in each time unit                              501

Determining a value of each bit in the HARQ codebook based on
whether downlink data is correctly received at each occasion for        502
candidate PDSCH reception

Transmitting the HARQ codebook                                          503
```

FIG. 5

Processed by Luminess, 75001 PARIS (FR)

EP 4 319 015 A1

**Description**

**CROSS-REFERENCE TO RELATED APPLICATION**

The present application claims priority to Chinese Patent Application No. 202110363931.8, filed on April 02, 2021, entitled "Method for Sending and Method for Receiving HARQ Codebook, Apparatus, and Storage Medium", which is hereby incorporated by reference in its entirety.

**FIELD**

The present application relates to the field of communication, and in particular to method and apparatus for transmitting and receiving hybrid automatic repeat request (HARQ) codebook, and a storage medium.

**BACKGROUND**

In the 5th generation (5G) mobile communication system, feedback of a static (type-1) hybrid automatic repeat request (HARQ) codebook for multicast broadcast services (MBSs) is supported, and frequency division multiplexing (FDM) more than two physical downlink shared channels (PDSCHs) over one slot is supported.

In related art, when a terminal/user equipment (UE) supports FDM between different services over one slot, an HARQ codebook for each service is generated and when the HARQ codebook is fed back on a physical uplink control channel (PUCCH), an HARQ codebook corresponding to a service is taken as a sub-codebook to be concatenated to generate a final HARQ codebook.

However, the length of the HARQ codebook generated by the current art is large and information redundancy occurs. Particularly for the scenario that multiple candidate services are allowed to be scheduled in one slot, the information redundancy is higher, which causes low information transmission efficiency and waste of radio resources.

**SUMMARY**

Embodiments of the present application provide method and apparatus for transmitting and receiving a hybrid automatic repeat request (HARQ) codebook, and a storage medium, which solve the problem of low utilization rate of resources in the related art.

An embodiment of the present application provides a method for transmitting a hybrid automatic repeat request (HARQ) codebook, applied to a UE, including:

determining a total number of occasions for candidate physical downlink shared channel (PDSCH) reception based on sets of slot timing values for HARQ feedback for multiple candidate services, and determining a codebook order corresponding to the occasions for candidate PDSCH reception in each time unit;
determining a value of each bit in the HARQ codebook based on whether downlink data is correctly received at each occasion for candidate PDSCH reception; and
transmitting the HARQ codebook.

In an embodiment, in case that at most one time division multiplexing (TDM) is supported in one time unit, the determining the total number of occasions for candidate PDSCH reception based on the sets of slot timing values for HARQ feedback for multiple candidate services include:

determining, based on a set of slot timing values for HARQ feedback for each candidate service, a union set of sets of slot timing values for HARQ feedback for all candidate services;
determining, based on the number of occasions for candidate PDSCH reception for frequency division multiplexing (FDM) supported by the UE and/or a maximum number of occasions for candidate PDSCH reception in frequency domain in each time unit of the union set, the number of occasions for candidate PDSCH reception in each time unit; and
determining, based on the number of occasions for candidate PDSCH reception in all time units, the total number of occasions for candidate PDSCH reception.

In an embodiment, in case that the number of occasions for candidate PDSCH reception in each time unit is determined based on the number of occasions for candidate PDSCH reception for FDM supported by the UE and the maximum number of occasions for candidate PDSCH reception in frequency domain in each time unit of the union set, the number of occasions for candidate PDSCH reception in each time unit is determined by the following formula:

$$MA_{t(n-i)} = min(count_{t(n-i)}, numFDM);$$

where $MA_{t(n-i)}$ is the number of occasions for candidate PDSCH reception in (n-i)-th time unit, $count_{t(n-i)}$ is the maximum number of occasions for candidate PDSCH reception in frequency domain in the (n-i)-th time unit and *numFDM* is the number of occasions for candidate PDSCH reception for FDM supported by the UE.

In an embodiment, in case that at most one FDM is supported in one time unit, the determining the total number of occasions for candidate PDSCH reception based on the sets of slot timing values for HARQ feedback for multiple candidate services include:

> determining, based on a set of slot timing values for HARQ feedback for each candidate service, a union set of sets of slot timing values for HARQ feedback for all candidate services;
> determining, based on the number of occasions for candidate PDSCH reception for TDM supported by the UE and/or a maximum number of non-overlapping occasions for candidate PDSCH reception in time domain in each time unit of the union set, the number of occasions for candidate PDSCH reception in each time unit; and
> determining, based on the number of occasions for candidate PDSCH reception in all time units, the total number of occasions for candidate PDSCH reception.

In an embodiment, in case that the number of occasions for candidate PDSCH reception in each time unit is determined based on the number of occasions for candidate PDSCH reception for TDM supported by the UE and the maximum number of non-overlapping occasions for candidate PDSCH reception in time domain in each time unit of the union set, the number of occasions for candidate PDSCH reception in each time unit is determined by the following formula:

$$MA_{t(n-i)} = min(TDRA\_comput_{t(n-i)}, numTDM);$$

where $MA_{t(n-i)}$ is the number of occasions for candidate PDSCH reception in (n-i)-th time unit, $TDRA\_comput_{t(n-i)}$ is the maximum number of non-overlapping occasions for candidate PDSCH reception in time domain in the (n-i)-th time unit and *numTDM* is the number of occasions for candidate PDSCH reception for TDM supported by the UE.

In an embodiment, in case that the multiple candidate services only include multicast broadcast services (MBSs), the determining the total number of occasions for candidate PDSCH reception based on the sets of slot timing values for HARQ feedback for multiple candidate services include:

> determining, based on a set of slot timing values for HARQ feedback for each candidate service, a union set of sets of slot timing values for HARQ feedback for all candidate services;
> determining, based on the number of occasions for candidate PDSCH reception for FDM supported by the UE and the number of occasions for candidate PDSCH reception for TDM supported by the UE, the number of occasions for candidate PDSCH reception in each time unit; and
> determining, based on the number of occasions for candidate PDSCH reception in all time units, the total number of occasions for candidate PDSCH reception.

In an embodiment, the number of occasions for candidate PDSCH reception in each time unit is determined by the following formula:

$$MA_{t(n-i)} = numTDM * numFDM;$$

where $MA_{t(n-i)}$ is the number of occasions for candidate PDSCH reception in (n-i)-th time unit, *numTDM* is the number of occasions for candidate PDSCH reception for TDM supported by the UE and *numFDM* is the number of occasions for candidate PDSCH reception for FDM supported by the UE.

In an embodiment, in case that the multiple candidate services only include MBSs, the determining the total number of occasions for candidate PDSCH reception based on the sets of slot timing values for HARQ feedback for multiple candidate services include:

> determining, based on a set of slot timing values for HARQ feedback for each candidate service, a union set of sets of slot timing values for HARQ feedback for all candidate services;
> determining the number of occasions for candidate PDSCH reception in each time unit based on the maximum number of occasions for candidate PDSCH reception in frequency domain in each time unit of the union set and a maximum number of non-overlapping occasions for candidate PDSCH reception in time domain in each time unit of the union set; and

determining, based on the number of occasions for candidate PDSCH reception in all time units, the total number of occasions for candidate PDSCH reception.

In an embodiment, the number of occasions for candidate PDSCH reception in each time unit is determined by the following formula:

$$MA_{t(n-i)} = TDRA\_comput_{t(n-i)} * count_{t(n-i)};$$

where $MA_{t(n-i)}$ is the number of occasions for candidate PDSCH reception in (n-i)-th time unit, $TDRA\_comput_{t(n-i)}$ is the maximum number of non-overlapping occasions for candidate PDSCH reception in time domain in the (n-i)-th time unit and $count_{t(n-i)}$ is the maximum number of occasions for candidate PDSCH reception in frequency domain in the $(n-i)$-th time unit.

In an embodiment, in case that the multiple candidate services only include MBSs, the determining the total number of occasions for candidate PDSCH reception based on the sets of slot timing values for HARQ feedback for multiple candidate services include:

determining, based on a set of slot timing values for HARQ feedback for each candidate service, a union set of sets of slot timing values for HARQ feedback for all candidate services;

determining the number of occasions for candidate PDSCH reception in each time unit based on the number of occasions for candidate PDSCH reception for FDM supported by the UE, the number of occasions for candidate PDSCH reception for TDM supported by the UE, a maximum number of occasions for candidate PDSCH reception in frequency domain in each time unit of the union set and a maximum number of non-overlapping occasions for candidate PDSCH reception in time domain in each time unit of the union set; and

determining, based on the number of occasions for candidate PDSCH reception in all time units, the total number of occasions for candidate PDSCH reception.

In an embodiment, the number of occasions for candidate PDSCH reception in each time unit is determined by the following formula:

$$MA_{t(n-i)} = TDRA\_comput_{t(n-i)} * min(count_{t(n-i)}, numFDM);$$

where $MA_{t(n-i)}$ is the number of occasions for candidate PDSCH reception in (n-i)-th time unit, $TDRA\_comput_{t(n-i)}$ is the maximum number of non-overlapping occasions for candidate PDSCH reception in time domain in the (n-i)-th time unit, $count_{t(n-i)}$ is the maximum number of occasions for candidate PDSCH reception in frequency domain in the $(n-i)$-th time unit and $numFDM$ is the number of occasions for candidate PDSCH reception for FDM supported by the UE.

In an embodiment, in case that the multiple candidate services include MBS and unicast service, the determining the total number of occasions for candidate PDSCH reception based on the sets of slot timing values for HARQ feedback for multiple candidate services include:

determining, based on a set of slot timing values for HARQ feedback for each candidate service, a union set of sets of slot timing values for HARQ feedback for all candidate services;

determining the number of occasions for candidate PDSCH reception in each time unit based on the number of occasions for candidate PDSCH reception for FDM supported by the UE, a maximum number of occasions for candidate PDSCH reception in frequency domain in each time unit of the union set, a maximum number of non-overlapping occasions for candidate PDSCH reception in time domain in time units only including MBS of the union set, a maximum number of non-overlapping occasions for candidate PDSCH reception in time domain in time units only including unicast service of the union set and a maximum number of non-overlapping occasions for candidate PDSCH reception in time domain in time units including MBS and unicast service of the union set; and

determining, based on the number of occasions for candidate PDSCH reception in all time units, the total number of occasions for candidate PDSCH reception.

In an embodiment, the number of occasions for candidate PDSCH reception in each time unit is determined by the following formula:

$$MA_{t(n-i)} = \begin{cases} B & , & \text{when the } (n-i)-th \text{ time unit only includes MBS} \\ max \quad (B, \ C) & , & \text{when the } (n-i)-th \text{ time unit includes MBS and unicast service,} \\ D & , & \text{when the } (n-i)-th \text{ time unit only includes unicast service} \end{cases}$$

$$B = min(count_{t(n-i)}, numFDM) * MBS\_TDRA\_comput_{t(n-i)},$$

$$C = unite\_TDRA\_comput_{t(n-i)}$$

$$+$$

$$[min(count_{t(n-i)}, numFDM) - 1] * MBS\_TDRA\_comput_{t(n-i)}, \text{ and}$$

$$D = unicast\_TDRA\_comput_{t(n-i)};$$

where $MA_{t(n-i)}$ is the number of occasions for candidate PDSCH reception in (n-i)-th time unit, $count_{t(n-i)}$ is the maximum number of occasions for candidate PDSCH reception in frequency domain in the (n-i)-th time unit, $numFDM$ is the number of occasions for candidate PDSCH reception for FDM supported by the UE, $MBS\_TDRA\_comput_{t(n-i)}$ is the maximum number of non-overlapping occasions for candidate PDSCH reception in time domain in a time unit only including MBS of the union set, $unite\_TDRA\_comput_{t(n-i)}$ is the maximum number of non-overlapping occasions for candidate PDSCH reception in time domain in a time unit including MBS and unicast service of the union set and $unicast\_TDRA\_comput_{t(n-i)}$ is the maximum number of non-overlapping occasions for candidate PDSCH reception in time domain in a time unit only including unicast service of the union set.

In an embodiment, the value of *numFDM* is 1 or 2.

In an embodiment, the determining the codebook order corresponding to the occasions for candidate PDSCH reception in each time unit includes:

receiving first information, where the first information is used for indicating the codebook order corresponding to the occasions for candidate PDSCH reception in each time unit; and

determining the codebook order corresponding to the occasions for candidate PDSCH reception in each time unit based on the first information.

In an embodiment, the first information is included in downlink control information (DCI).

In an embodiment, the first information is associated with one of the followings:

a radio network temporary identity (RNTI) used for scrambling downlink data on an occasion for candidate PDSCH reception;

a control resource set (CORESET) of physical downlink control channel (PDCCH) for transmitting DCI;

a search space of PDCCH for transmitting DCI;

a start location of PDSCH in frequency domain; and

a time domain resource allocation (TDRA).

In an embodiment, in case that a scheduled service is a unicast service, an HARQ feedback order corresponding to the unicast service is a given order.

An embodiment of the present application provides a method for receiving a hybrid automatic repeat request (HARQ) codebook, applied to a network side device, including:

receiving an HARQ codebook transmitted from a UE; the HARQ codebook is transmitted after the UE, based on a set of slot timing values for HARQ feedback for each candidate service in multiple candidate services, determines a total number of occasions for candidate physical downlink shared channel (PDSCH) reception, and determines a codebook order corresponding to occasions for candidate PDSCH reception in each time unit and a value of each bit in the HARQ codebook based on whether downlink data is correctly received at each occasion for candidate PDSCH reception.

In an embodiment, before the receiving the HARQ codebook transmitted from the UE, the method further includes:

transmitting first information, where the first information is used for indicating the codebook order corresponding to the occasions for candidate PDSCH reception in each time unit.

In an embodiment, the first information is included in downlink control information (DCI).

In an embodiment, the first information is associated with one of the followings:

a radio network temporary identity (RNTI) used for scrambling downlink data on an occasion for candidate PDSCH reception;

a control resource set (CORESET) of physical downlink control channel (PDCCH) for transmitting DCI;

a search space of PDCCH for transmitting DCI;
a start location of PDSCH in frequency domain; and
a time domain resource allocation (TDRA).

An embodiment of the present application provides a UE, includes a memory, a transceiver and a processor;

where the memory is used for storing computer programs; the transceiver is used for transmitting and receiving data under control of the processor; and the computer programs, when executed by the processor, cause the UE to perform the following operations:
determining a total number of occasions for candidate physical downlink shared channel (PDSCH) reception based on sets of slot timing values for hybrid automatic repeat request (HARQ) feedback for multiple candidate services, and determining a codebook order corresponding to the occasions for candidate PDSCH reception in each time unit; determining a value of each bit in the HARQ codebook based on whether downlink data is correctly received at each occasion for candidate PDSCH reception; and
transmitting the HARQ codebook.

In an embodiment, in case that at most one time division multiplexing (TDM) is supported in one time unit, the determining the total number of occasions for candidate PDSCH reception based on the sets of slot timing values for HARQ feedback for multiple candidate services include:

determining, based on a set of slot timing values for HARQ feedback for each candidate service, a union set of sets of slot timing values for HARQ feedback for all candidate services;
determining, based on the number of occasions for candidate PDSCH reception for FDM supported by the UE and/or a maximum number of occasions for candidate PDSCH reception in frequency domain in each time unit of the union set, the number of occasions for candidate PDSCH reception in each time unit;
determining, based on the number of occasions for candidate PDSCH reception in all time units, the total number of occasions for candidate PDSCH reception.

In an embodiment, in case that the number of occasions for candidate PDSCH reception in each time unit is determined based on the number of occasions for candidate PDSCH reception for FDM supported by the UE and the maximum number of occasions for candidate PDSCH reception in frequency domain in each time unit of the union set, the number of occasions for candidate PDSCH reception in each time unit may be determined by the following formula:

$$MA_{t(n-i)} = min(\ count_{t(n-i)}, numFDM\ );$$

where $MA_{t(n-i)}$ is the number of occasions for candidate PDSCH reception in the (n-i)-th time unit, $count_{t(n-i)}$ is the maximum number of occasions for candidate PDSCH reception in frequency domain in the (n-i)-th time unit and $numFDM$ is the number of occasions for candidate PDSCH reception for FDM supported by the UE.

In an embodiment, in case that at most one FDM is supported in one time unit, the determining the total number of occasions for candidate PDSCH reception based on the sets of slot timing values for HARQ feedback for multiple candidate services include:

determining, based on the set of slot timing values for HARQ feedback for each candidate service, the union set of sets of slot timing values for HARQ feedback for all candidate services;
determining, based on the number of occasions for candidate PDSCH reception for TDM supported by the UE and/or a maximum number of non-overlapping occasions for candidate PDSCH reception in time domain in each time unit of the union set, the number of occasions for candidate PDSCH reception in each time unit;
determining, based on the number of occasions for candidate PDSCH reception in all time units, the total number of occasions for candidate PDSCH reception.

In an embodiment, in case that the number of occasions for candidate PDSCH reception in each time unit is determined based on the number of occasions for candidate PDSCH reception for TDM supported by the UE and the maximum number of non-overlapping occasions for candidate PDSCH reception in time domain in each time unit of the union set, the number of occasions for candidate PDSCH reception in each time unit may be determined by the following formula:

$$MA_{t(n-i)} = min(TDRA\_comput_{t(n-i)}, numTDM);$$

where $MA_{t(n-i)}$ is the number of occasions for candidate PDSCH reception in the (n-i)-th time unit, $TDRA\_comput_{t(n-i)}$ is the maximum number of non-overlapping occasions for candidate PDSCH reception in time domain in the (n-i)-th time unit and $numTDM$ is the number of occasions for candidate PDSCH reception for TDM supported by the UE.

In an embodiment, in case that the multiple candidate services only include multicast broadcast service (MBS), the determining the total number of occasions for candidate PDSCH reception based on the sets of slot timing values for HARQ feedback for multiple candidate services include:

determining, based on the set of slot timing values for HARQ feedback for each candidate service, the union set of sets of slot timing values for HARQ feedback for all candidate services;
determining, based on the number of occasions for candidate PDSCH reception for FDM supported by the UE and the number of occasions for candidate PDSCH reception for TDM supported by the UE, the number of occasions for candidate PDSCH reception in each time unit; and
determining, based on the number of occasions for candidate PDSCH reception in all time units, the total number of occasions for candidate PDSCH reception.

In an embodiment, the number of occasions for candidate PDSCH reception in each time unit may be determined by the following formula:

$$MA_{t(n-i)} = numTDM * numFDM;$$

where $MA_{t(n-i)}$ is the number of occasions for candidate PDSCH reception in the (n-i)-th time unit, $numTDM$ is the number of occasions for candidate PDSCH reception for TDM supported by the UE and $numFDM$ is the number of occasions for candidate PDSCH reception for FDM supported by the UE.

In an embodiment, in case that the multiple candidate services only include MBS, the determining the total number of occasions for candidate PDSCH reception based on the sets of slot timing values for HARQ feedback for multiple candidate services include:

determining, based on the set of slot timing values for HARQ feedback for each candidate service, the union set of sets of slot timing values for HARQ feedback for all candidate services;
determining the number of occasions for candidate PDSCH reception in each time unit based on the maximum number of occasions for candidate PDSCH reception in frequency domain in each time unit of the union set and the maximum number of non-overlapping occasions for candidate PDSCH reception in time domain in each time unit of the union set;
determining, based on the number of occasions for candidate PDSCH reception in all time units, the total number of occasions for candidate PDSCH reception.

In an embodiment, the number of occasions for candidate PDSCH reception in each time unit may be determined by the following formula:

$$MA_{t(n-i)} = TDRA\_comput_{t(n-i)} * count_{t(n-i)};$$

where $MA_{t(n-i)}$ is the number of occasions for candidate PDSCH reception in the (n-i)-th time unit, $TDRA\_comput_{t(n-i)}$ is the maximum number of non-overlapping occasions for candidate PDSCH reception in time domain in the (n-i)-th time unit and $count_{t(n-i)}$ is the maximum number of occasions for candidate PDSCH reception in frequency domain in the (n-i)-th time unit.

In an embodiment, in case that the multiple candidate services only include MBS, the determining the total number of occasions for candidate PDSCH reception based on the sets of slot timing values for HARQ feedback for multiple candidate services include:

determining, based on the set of slot timing values for HARQ feedback for each candidate service, the union set of sets of slot timing values for HARQ feedback for all candidate services;
determining the number of occasions for candidate PDSCH reception in each time unit based on the number of occasions for candidate PDSCH reception for FDM supported by the UE, the number of occasions for candidate PDSCH reception for TDM supported by the UE, the maximum number of occasions for candidate PDSCH reception in frequency domain in each time unit of the union set and the maximum number of non-overlapping occasions for candidate PDSCH reception in time domain in each time unit of the union set; and

determining, based on the number of occasions for candidate PDSCH reception in all time units, the total number of occasions for candidate PDSCH reception.

In an embodiment, the number of occasions for candidate PDSCH reception in each time unit may be determined by the following formula:

$$MA_{t(n-i)} = TDRA\_comput_{t(n-i)} * min(count_{t(n-i)}, numFDM);$$

where $MA_{t(n-i)}$ is the number of occasions for candidate PDSCH reception in the (n-i)-th time unit, $TDRA\_comput_{t(n-i)}$ is the maximum number of non-overlapping occasions for candidate PDSCH reception in time domain in the (n-i)-th time unit, $count_{t(n-i)}$ is the maximum number of occasions for candidate PDSCH reception in frequency domain in the (n-i)-th time unit and $numFDM$ is the number of occasions for candidate PDSCH reception for FDM supported by the UE.

In an embodiment, in case that the multiple candidate services include MBS and unicast service, the determining the total number of occasions for candidate PDSCH reception based on the sets of slot timing values for HARQ feedback for multiple candidate services include:

determining, based on the set of slot timing values for HARQ feedback for each candidate service, the union set of sets of slot timing values for HARQ feedback for all candidate services;

determining the number of occasions for candidate PDSCH reception in each time unit based on the number of occasions for candidate PDSCH reception for FDM supported by the UE, the maximum number of occasions for candidate PDSCH reception in frequency domain in each time unit of the union set, a maximum number of non-overlapping occasions for candidate PDSCH reception in time domain in time units only including MBS of the union set, a maximum number of non-overlapping occasions for candidate PDSCH reception in time domain in time units only including unicast service of the union set and a maximum number of non-overlapping occasions for candidate PDSCH reception in time domain in time units including MBS and unicast service of the union set; and

determining, based on the number of occasions for candidate PDSCH reception in all time units, the total number of occasions for candidate PDSCH reception.

In an embodiment, the number of occasions for candidate PDSCH reception in each time unit may be determined by the following formula:

$$MA_{t(n-i)} = \begin{cases} B & , & \text{when the } (n-i)-th \text{ time unit only includes MBS} \\ max & (B, C) & , & \text{when the } (n-i)-th \text{ time unit includes MBS and unicast service,} \\ D & , & \text{when the } (n-i)-th \text{ time unit only includes unicast service} \end{cases}$$

$$B = min(count_{t(n-i)}, numFDM) * MBS\_TDRA\_comput_{t(n-i)},$$

$$C = unite\_TDRA\_comput_{t(n-i)}$$
$$+$$
$$[min(count_{t(n-i)}, numFDM) - 1] * MBS\_TDRA\_comput_{t(n-i)}, \text{ and}$$
$$D = unicast\_TDRA\_comput_{t(n-i)};$$

where $MA_{t(n-i)}$ is the number of occasions for candidate PDSCH reception in the (n-i)-th time unit, $count_{t(n-i)}$ is the maximum number of occasions for candidate PDSCH reception in frequency domain in the (n-i)-th time unit, $numFDM$ is the number of occasions for candidate PDSCH reception for FDM supported by the UE, $MBS\_TDRA\_comput_{t(n-i)}$ is the maximum number of non-overlapping occasions for candidate PDSCH reception in time domain in a time unit only including MBS of the union set, $unite\_TDRA\_comput_{t(n-i)}$ is the maximum number of non-overlapping occasions for candidate PDSCH reception in time domain in a time unit including MBS and unicast service of the union set and $unicast\_TDRA\_comput_{t(n-i)}$ is the maximum number of non-overlapping occasions for candidate PDSCH reception in time domain in a time unit only including unicast service of the union set.

In an embodiment, the value of $numFDM$ is 1 or 2.

In an embodiment, the determining the codebook order corresponding to the occasions for candidate PDSCH reception in each time unit includes:

receiving first information, where the first information is used for indicating the codebook order corresponding to the occasions for candidate PDSCH reception in each time unit; and
determining the codebook order corresponding to the occasions for candidate PDSCH reception in each time unit based on the first information.

In an embodiment, the first information is included in downlink control information (DCI).
In an embodiment, the first information is associated with one of the followings:

a radio network temporary identity (RNTI) used for scrambling downlink data on an occasion for candidate PDSCH reception;
a control resource set (CORESET) of physical downlink control channel (PDCCH) for transmitting DCI;
a search space of PDCCH for transmitting DCI;
a start location of PDSCH in frequency domain; and
a time domain resource allocation (TDRA).

In an embodiment, in case that a scheduled service is a unicast service, an HARQ feedback order corresponding to the unicast service is a given order.
An embodiment of the present application provides a network side device, includes a memory, a transceiver and a processor;

where the memory is used for storing computer programs; the transceiver is used for transmitting and receiving data under control of the processor; and the computer programs, when executed by the processor, cause the network side device to perform the following operations:
receiving an HARQ codebook transmitted from a UE; the HARQ codebook is transmitted after the UE, based on set of slot timing values for HARQ feedback for each candidate service in multiple candidate services, determines a total number of occasions for candidate physical downlink shared channel (PDSCH) reception, and determines a codebook order corresponding to the occasion for candidate PDSCH reception in each time unit and a value of each bit in the HARQ codebook based on whether downlink data is correctly received at each occasion for candidate PDSCH reception.

In an embodiment, before the receiving the HARQ codebook transmitted from the UE, the computer programs, when executed by the processor, cause the network side device to further:
transmitting first information, the first information is used for indicating the codebook order corresponding to the occasions for candidate PDSCH reception in each time unit.
In an embodiment, the first information is included in downlink control information (DCI).
In an embodiment, the first information is associated with one of the followings:

a radio network temporary identity (RNTI) used for scrambling downlink data on an occasion for candidate PDSCH reception;
a control resource set (CORESET) of physical downlink control channel (PDCCH) for transmitting DCI;
a search space of PDCCH for transmitting DCI;
a start location of PDSCH in frequency domain; and
a time domain resource allocation (TDRA).

An embodiment of the present application provides an apparatus for transmitting a hybrid automatic repeat request (HARQ) codebook, including:

a first determining module, used for determining a total number of occasions for candidate physical downlink shared channel (PDSCH) reception based on sets of slot timing values for HARQ feedback for multiple candidate services, and determining a codebook order corresponding to the occasions for candidate PDSCH reception in each time unit;
a second determining module, used for determining a value of each bit in the HARQ codebook based on whether downlink data is correctly received at each occasion for candidate PDSCH reception; and
a transmitting module, used for transmitting the HARQ codebook.

In an embodiment, in case that at most one time division multiplexing (TDM) is supported in one time unit, the first determining module includes a first determining unit, a second determining unit and a third determining unit;

the first determining unit is used for determining, based on a set of slot timing values for HARQ feedback for each candidate service, the union set of sets of slot timing values for HARQ feedback for all candidate services;

the second determining unit is used for determining, based on the number of occasions for candidate PDSCH reception for FDM supported by the UE and/or a maximum number of occasions for candidate PDSCH reception in frequency domain in each time unit of the union set, the number of occasions for candidate PDSCH reception in each time unit;

the third determining unit is used for determining, based on the number of occasions for candidate PDSCH reception in all time units, the total number of occasions for candidate PDSCH reception.

In an embodiment, in case that the number of occasions for candidate PDSCH reception in each time unit is determined based on the number of occasions for candidate PDSCH reception for FDM supported by the UE and the maximum number of occasions for candidate PDSCH reception in frequency domain in each time unit of the union set, the number of occasions for candidate PDSCH reception in each time unit may be determined by the following formula:

$$MA_{t(n-i)} = min(\ count_{t(n-i)}, numFDM\ );$$

where $MA_{t(n-i)}$ is the number of occasions for candidate PDSCH reception in the (n-i)-th time unit, $count_{t(n-i)}$ is the maximum number of occasions for candidate PDSCH reception in frequency domain in the (n-i)-th time unit and $numFDM$ is the number of occasions for candidate PDSCH reception for FDM supported by the UE.

In an embodiment, in case that at most one FDM is supported in one time unit, the first determining module includes a fourth determining unit, a fifth determining unit and a sixth determining unit;

the fourth determining unit is used for determining, based on the set of slot timing values for HARQ feedback for each candidate service, the union set of sets of slot timing values for HARQ feedback for all candidate services;

the fifth determining unit is used for determining, based on the number of occasions for candidate PDSCH reception for TDM supported by the UE and/or a maximum number of non-overlapping occasions for candidate PDSCH reception in time domain in each time unit of the union set, the number of occasions for candidate PDSCH reception in each time unit; and

the sixth determining unit is used for determining, based on the number of occasions for candidate PDSCH reception in all time units, the total number of occasions for candidate PDSCH reception.

In an embodiment, in case that the number of occasions for candidate PDSCH reception in each time unit is determined based on the number of occasions for candidate PDSCH reception for TDM supported by the UE and the maximum number of non-overlapping occasions for candidate PDSCH reception in time domain in each time unit of the union set, the number of occasions for candidate PDSCH reception in each time unit may be determined by the following formula:

$$MA_{t(n-i)} = min(TDRA\_comput_{t(n-i)}, numTDM);$$

where $MA_{t(n-i)}$ is the number of occasions for candidate PDSCH reception in the (n-i)-th time unit, $TDRA\_comput_{t(n-i)}$ is the maximum number of non-overlapping occasions for candidate PDSCH reception in time domain in the (n-i)-th time unit and $numTDM$ is the number of occasions for candidate PDSCH reception for TDM supported by the UE.

In an embodiment, in case that the multiple candidate services only include MBS, the first determining module includes a seventh determining unit, an eighth determining unit and a ninth determining unit;

the seventh determining unit is used for determining, based on the set of slot timing values for HARQ feedback for each candidate service, the union set of sets of slot timing values for HARQ feedback for all candidate services;

the eighth determining unit is used for determining, based on the number of occasions for candidate PDSCH reception for FDM supported by the UE and the number of occasions for candidate PDSCH reception for TDM supported by the UE, the number of occasions for candidate PDSCH reception in each time unit; and

the ninth determining unit is used for determining, based on the number of occasions for candidate PDSCH reception in all time units, the total number of occasions for candidate PDSCH reception.

In an embodiment, the number of occasions for candidate PDSCH reception in each time unit may be determined by the following formula:

$$MA_{t(n-i)} = numTDM * numFDM;$$

where $MA_{t(n-i)}$ is the number of occasions for candidate PDSCH reception in the (n-i)-th time unit, *numTDM* is the number of occasions for candidate PDSCH reception for TDM supported by the UE and *numFDM* is the number of occasions for candidate PDSCH reception for FDM supported by the UE.

In an embodiment, in case that the multiple candidate services only include MBS, the first determining module includes a tenth determining unit, an eleventh determining unit and a twelfth determining unit;

the tenth determining unit is used for determining, based on the set of slot timing values for HARQ feedback for each candidate service, the union set of sets of slot timing values for HARQ feedback for all candidate services; the eleventh determining unit is used for determining the number of occasions for candidate PDSCH reception in each time unit based on the maximum number of occasions for candidate PDSCH reception in frequency domain in each time unit of the union set and the maximum number of non-overlapping occasions for candidate PDSCH reception in time domain in each time unit of the union set; the twelfth determining unit is used for determining, based on the number of occasions for candidate PDSCH reception in all time units, the total number of occasions for candidate PDSCH reception.

In an embodiment, the number of occasions for candidate PDSCH reception in each time unit may be determined by the following formula:

$$MA_{t(n-i)} = TDRA\_comput_{t(n-i)} * count_{t(n-i)};$$

where $MA_{t(n-i)}$ is the number of occasions for candidate PDSCH reception in the (n-i)-th time unit, *TDRA_comput*$_{t(n-i)}$ is the maximum number of non-overlapping occasions for candidate PDSCH reception in time domain in the (n-i)-th time unit and *count*$_{t(n-i)}$ is the maximum number of occasions for candidate PDSCH reception in frequency domain in the *(n-i)*-th time unit.

In an embodiment, in case that the multiple candidate services only include MBS, the first determining module includes a thirteenth determining unit, a fourteenth determining unit and a fifteenth determining unit;

the thirteenth determining unit is used for determining, based on the set of slot timing values for HARQ feedback for each candidate service, the union set of sets of slot timing values for HARQ feedback for all candidate services; the fourteenth determining unit is used for determining the number of occasions for candidate PDSCH reception in each time unit based on the number of occasions for candidate PDSCH reception for FDM supported by the UE, the number of occasions for candidate PDSCH reception for TDM supported by the UE, the maximum number of occasions for candidate PDSCH reception in frequency domain in each time unit of the union set and the maximum number of non-overlapping occasions for candidate PDSCH reception in time domain in each time unit of the union set; and the fifteenth determining unit is used for determining, based on the number of occasions for candidate PDSCH reception in all time units, the total number of occasions for candidate PDSCH reception.

In an embodiment, the number of occasions for candidate PDSCH reception in each time unit may be determined by the following formula:

$$MA_{t(n-i)} = TDRA\_comput_{t(n-i)} * min(count_{t(n-i)}, numFDM);$$

where $MA_{t(n-i)}$ is the number of occasions for candidate PDSCH reception in the (n-i)-th time unit, *TDRA_comput*$_{t(n-i)}$ is the maximum number of non-overlapping occasions for candidate PDSCH reception in time domain in the (n-i)-th time unit, *count*$_{t(n-i)}$ is the maximum number of occasions for candidate PDSCH reception in frequency domain in the *(n-i)*-th time unit and *numFDM* is the number of occasions for candidate PDSCH reception for FDM supported by the UE.

In an embodiment, in case that the multiple candidate services include MBS and unicast service, the first determining module includes a sixteenth determining unit, a seventeenth determining unit and an eighteenth determining unit;

the sixteenth determining unit is used for determining, based on the set of slot timing values for HARQ feedback for each candidate service, the union set of sets of slot timing values for HARQ feedback for all candidate services;
the seventeenth determining unit is used for determining the number of occasions for candidate PDSCH reception in each time unit based on the number of occasions for candidate PDSCH reception for FDM supported by the UE, the maximum number of occasions for candidate PDSCH reception in frequency domain in each time unit of the union set, a maximum number of non-overlapping occasions for candidate PDSCH reception in time domain in time units only including MBS of the union set, a maximum number of non-overlapping occasions for candidate PDSCH reception in time domain in time units only including unicast service of the union set and a maximum number of non-overlapping occasions for candidate PDSCH reception in time domain in time units including MBS and unicast service of the union set; and and
the eighteenth determining unit is used for determining, based on the number of occasions for candidate PDSCH reception in all time units, the total number of occasions for candidate PDSCH reception.

In an embodiment, the number of occasions for candidate PDSCH reception in each time unit may be determined by the following formula:

$$MA_{t(n-i)} = \begin{cases} B & , & when\ the\ (n-i)-th\ time\ unit\ only\ includes\ MBS \\ max\ (B,\ C) & , & when\ the\ (n-i)-th\ time\ unit\ includes\ MBS\ and\ unicast\ service \\ D & , & when\ the\ (n-i)-th\ time\ unit\ only\ includes\ unicast\ service \end{cases},$$

$$B = min(count_{t(n-i)}, numFDM) * MBS\_TDRA\_comput_{t(n-i)},$$
$$C = unite\_TDRA\_comput_{t(n-i)}$$
$$+$$
$$[min(count_{t(n-i)}, numFDM) - 1] * MBS\_TDRA\_comput_{t(n-i)},\ and$$
$$D = unicast\_TDRA\_comput_{t(n-i)};$$

where $MA_{t(n-i)}$ is the number of occasions for candidate PDSCH reception in the (n-i)-th time unit, $count_{t(n-i)}$ is the maximum number of occasions for candidate PDSCH reception in frequency domain in the (n-i)-th time unit, $numFDM$ is the number of occasions for candidate PDSCH reception for FDM supported by the UE, $MBS\_TDRA\_comput_{t(n-i)}$ is the maximum number of non-overlapping occasions for candidate PDSCH reception in time domain in a time unit only including MBS of the union set, $unite\_TDRA\_comput_{t(n-i)}$ is the maximum number of non-overlapping occasions for candidate PDSCH reception in time domain in a time unit including MBS and unicast service of the union set and $unicast\_TDRA\_comput_{t(n-i)}$ is the maximum number of non-overlapping occasions for candidate PDSCH reception in time domain in a time unit only including unicast service of the union set.

In an embodiment, the first determining module further includes a first receiving unit and a nineteenth determining unit;

the first receiving unit is used for receiving first information, where the first information is used for indicating the codebook order corresponding to the occasions for candidate PDSCH reception in each time unit; and
the nineteenth determining unit is used for determining the codebook order corresponding to the occasions for candidate PDSCH reception in each time unit based on the first information.

In an embodiment, the first information is included in downlink control information (DCI).

In an embodiment, the first information is associated with one of the followings:

a radio network temporary identity (RNTI) used for scrambling downlink data on an occasion for candidate PDSCH reception;
a control resource set (CORESET) of physical downlink control channel (PDCCH) for transmitting DCI;
a search space of PDCCH for transmitting DCI;
a start location of PDSCH in frequency domain; and
a time domain resource allocation (TDRA).

In an embodiment, in case that a scheduled service is a unicast service, an HARQ feedback order corresponding to the unicast service is a given order.

An embodiment of the present application provides an apparatus for receiving a hybrid automatic repeat request (HARQ) codebook, including:

a first receiving module, used for receiving an HARQ codebook transmitted from a UE; the HARQ codebook is transmitted after the UE, based on set of slot timing values for HARQ feedback for each candidate service in multiple candidate services, determines a total number of occasions for candidate physical downlink shared channel (PDSCH) reception, and determines a codebook order corresponding to the occasion for candidate PDSCH reception in each time unit and a value of each bit in the HARQ codebook based on whether downlink data is correctly received at each occasion for candidate PDSCH reception.

In an embodiment, the apparatus further includes a second receiving module;

the second receiving module is used for receiving a random access request transmitted from the UE, and the UE transmits the HARQ codebook after accesses a network.

In an embodiment, the apparatus further includes a first transmitting module:

the first transmitting module is used for transmitting first information, the first information is used for indicating the codebook order corresponding to the occasions for candidate PDSCH reception in each time unit.

In an embodiment, the first information is included in downlink control information (DCI).

In an embodiment, the first information is associated with one of the followings:

a radio network temporary identity (RNTI) used for scrambling downlink data on an occasion for candidate PDSCH reception;
a control resource set (CORESET) of physical downlink control channel (PDCCH) for transmitting DCI;
a search space of PDCCH for transmitting DCI;
a start location of PDSCH in frequency domain; and
a time domain resource allocation (TDRA).

An embodiment of the present application provides a processor readable storage medium storing computer programs that, when executed by a processor, causes the processor to perform the method for transmitting HARQ codebook or the method for receiving HARQ codebook.

In the method and the apparatus for transmitting and receiving HARQ codebook, and the storage medium provided by the present application, the total number of occasions for candidate PDSCH reception is determined based on the sets of slot timing values for HARQ feedback for multiple candidate services, which shortens the length of generated HARQ codebook, and improves a utilization rate of resources.

## BRIEF DESCRIPTION OF DRAWINGS

In order to more clearly illustrate the solutions of the embodiments according to the present application or the related art, the accompanying drawings used in the description of the embodiments or the related art are briefly introduced below. It should be noted that the drawings in the following description are only some embodiments of the present application. For those of ordinary skill in the art, other drawings may be obtained based on these drawings.

FIG. 1 is a first schematic principle diagram of generating a hybrid automatic repeat request (HARQ) codebook;
FIG. 2 is a schematic principle diagram of frequency division multiplexing (FDM) between multiple physical downlink shared channels (PDSCHs) in a 5th generation (5G) multicast broadcast service (MBS) HARQ scheme;
FIG. 3 is a second schematic principle diagram of generating an HARQ codebook;
FIG. 4 is a third schematic principle diagram of generating an HARQ codebook;
FIG. 5 is a schematic flowchart of a method for transmitting an HARQ codebook according to an embodiment of the present application;
FIG. 6 is a first schematic diagram of generation of *union_k1* and calculation of a maximum number (count) of candidate PDSCHs;
FIG. 7 is a first schematic diagram of a generation of an HARQ codebook supporting PDSCH FDM;
FIG. 8 is a schematic diagram of an order of HARQ feedback bits;
FIG. 9 is a second schematic diagram of generation of *union_k1* and calculation of a maximum number (count) of candidate PDSCHs;
FIG. 10 is second schematic diagram of a generation of an HARQ codebook supporting PDSCH FDM;
FIG. 11 is a first schematic diagram of an example of start and length indicator value (SLIV) in time domain resource assign (TDRA);
FIG. 12 is a second schematic diagram of an example of SLIV in TDRA;
FIG. 13 is a schematic flowchart of a method for receiving an HARQ codebook according to an embodiment of the present application;
FIG. 14 is a schematic structural diagram of a UE according to an embodiment of the present application;
FIG. 15 is a schematic structural diagram of a network side device according to an embodiment of the present application;
FIG. 16 is a schematic structural diagram of an apparatus for transmitting HARQ codebook according to an embodiment of the present application; and
FIG. 17 is a schematic structural diagram of an apparatus for receiving HARQ codebook according to an embodiment of the present application.

## DETAILED DESCRIPTION OF THE EMBODIMENTS

A mechanism for generating a type-1 (static) hybrid automatic repeat request (HARQ) codebook is as follows.

In current 5G mobile communication system, the mechanism for generating a static HARQ codebook is supported, and the principle is: assuming that on each possible occasion for candidate physical downlink shared channel (PDSCH) reception (candidate time domain and frequency domain resource for the PDSCH), a base station always schedules downlink data, if the UE does not receive corresponding downlink data on an occasion for candidate PDSCH reception, the UE determines that downlink control information (DCI) is missed and feeds back a negative acknowledgement (NACK) message on an HARQ feedback channel.

Assuming that within one slot, the UE schedules at most one occasion for candidate PDSCH reception, and the base station configures a time interval between downlink reception and HARQ feedback using a set of slot timing values for HARQ feedback *dl-DataToUL-ACK* (k1). The k1 is corresponding to the set of slot timing values for HARQ feedback.

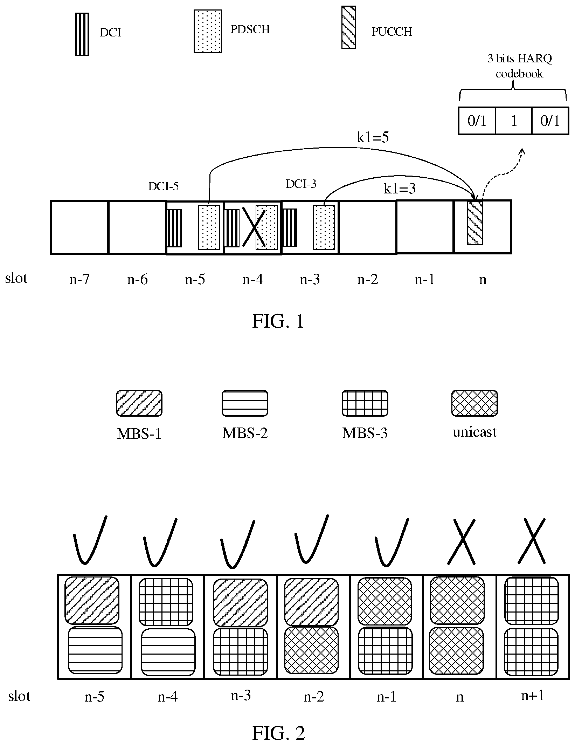

FIG. 1 is a first schematic diagram of a principle of an HARQ codebook generation. As shown in FIG. 1, it is assumed that a value of k1 is {3,4,5} with a unit of slot. In case that a UE receives PDSCH scheduling information in a slot (n-5) and an HARQ feedback slot is indicated by k1 as 5, the HARQ codebook (a decoding result of PDSCH) is fed back in a slot n. In case that the UE receives the PDSCH scheduling information in a slot (n-3) and an HARQ feedback slot is indicated by k1 as 3, the HARQ codebook is fed back in a slot n. At this point, a feedback channel for the HARQ codebook in the slot n is a physical uplink control channel (PUCCH) (a physical uplink shared channel (PUSCH), for simplicity, the PUCCH is adopted as examples below), and 2 bits of HARQ codebook information needs to be fed back (assuming 1 bit of HARQ codebook is fed back on 1 occasion for candidate PDSCH reception). A base station defines the value range of k1 as {3,4,5}, and the UE knows that in a slot (n-4), the base station may or may not schedule downlink data. Nonetheless, for keeping a consistency of calculation of an HARQ codebook length, the UE assumes that the base station schedules the downlink data.

The UE determines that 3 bits of HARQ codebook needs to be fed back on the PUCCH, that is, an HARQ codebook with a length of 3 bits is formed. Where a first bit feeds back a decoding result of PDSCH on the slot (n-5) (negative acknowledgement (NACK)/acknowledgement (ACK)), a second bit feeds back NACK (no scheduling data is received, assuming NACK=1), and a third bit feeds back a decoding result (NACK/ACK) of PDSCH on the slot (n-3).

The base station receives an HARQ codebook on the PUCCH according to the length of 3 bits in the slot n.

In current 5G multicast broadcast service (MBS) HARQ schemes, feedback of static HARQ codebook is supported, and frequency division multiplexing (FDM) of multiple PDSCH is also supported, which includes the following scenarios:

1. PDSCH FDM for two or more different MBSs;
2. PDSCH FDM for one unicast or one or more MBSs.

FIG. 2 is a first schematic diagram of an FDM principle of multiple PDSCH in a 5G MBS HARQ scheme. As shown in FIG. 2, in a slot (n-5), the base station may schedule an FDM of first type MBS (MBS-1) data and second type MBS (MBS-2) data. In a slot (n-2), the base station may schedule an FDM of third type MBS (MBS-3) data and unicast service data. However, in a slot n, and cannot schedule an FDM of the unicast service data of a same UE.

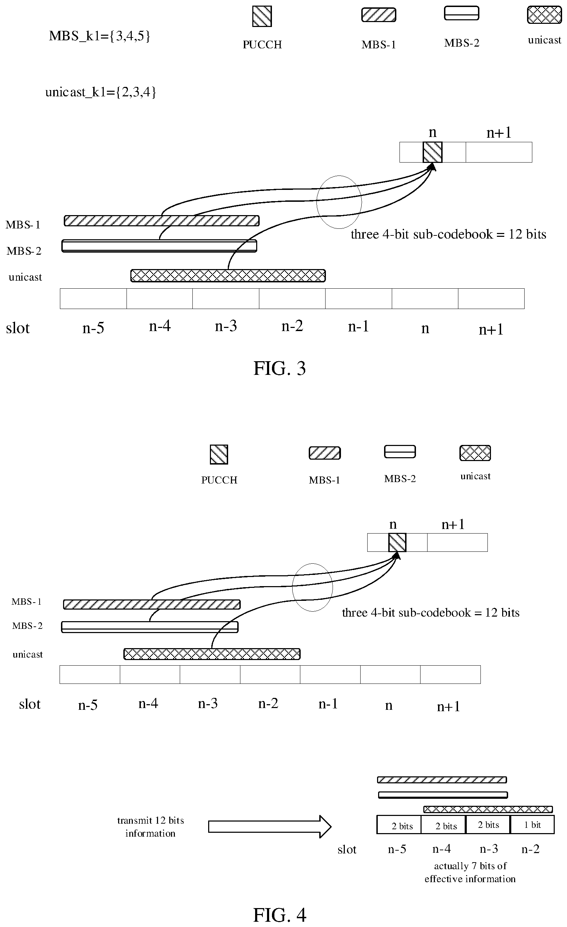

For an FDM scenario, current schemes generate HARQ sub-codebooks based on respective services, and then concatenate all HARQ sub-codebooks to generate a final HARQ codebook. FIG. 3 is a second schematic diagram of a principle of an HARQ codebook generation. As shown in FIG. 3, assuming a set of slot timing values for HARQ feedback for an MBS is {3,4,5} (the set of slot timing values for HARQ feedback for MBS-1 and MBS-2 are both {3,4,5}), a set of slot timing values for HARQ feedback for the unicast service is {2,3,4}, then the HARQ codebook is generated according to the increment of slots first and the increment of the feedback order (ACK order), a first ACK order corresponds to a 4-bit sub-codebook, a second ACK order corresponds to a 4-bit sub-codebook, a third ACK order corresponds to a 4-bit sub-codebook, and the three sub-codebooks are concatenated to generate a 12-bit HARQ codebook.

A disadvantage of the above scheme is that a length of the generated HARQ codebook is large and information redundancy occurs, especially in a scenario where multiple candidate services are allowed to be scheduled in one slot, the information redundancy is higher, which causes low information transmission efficiency and waste of radio resources.

FIG. 4 is third schematic diagram of a generation principle of an HARQ codebook. As shown in FIG. 4, assuming that there are at most 2 occasions for candidate PDSCH reception in one slot, the length of the generated HARQ codebook according to the current scheme is 12 bits. However, a length of effective information is 7 bits, which causes low information transmission efficiency and waste of radio resources.

In view of the above-mentioned problem, the present application provides a method and apparatus for transmitting HARQ codebook, a method and apparatus for receiving HARQ codebook, and storage medium, which determines a total number of occasions for candidate PDSCH reception based on the sets of slot timing values for HARQ feedback for multiple candidate services, which shortens the length of generated HARQ codebook, and improves a utilization rate of resources.

The solutions according to the present application are clearly described below in combination with the accompanying drawings in the embodiments of the present application. It should be noted that the described embodiments are some embodiments of the present application, rather than all the embodiments. According to the embodiments of the present application, all other embodiments obtained by those of ordinary skill in the art without creative effort are within the scope of protection of the present application.

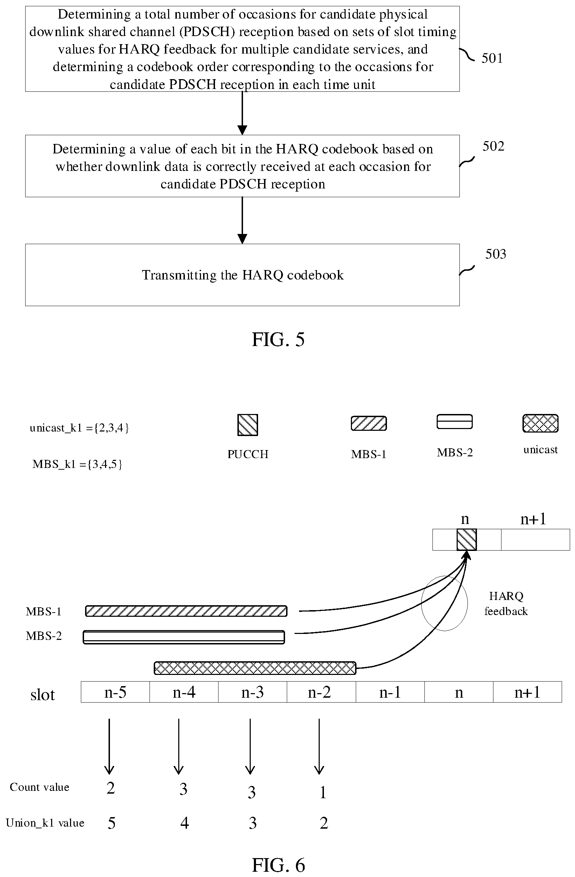

FIG. 5 is a schematic flowchart of a method for transmitting a hybrid automatic repeat request (HARQ) codebook according to an embodiment of the present application. As shown in FIG. 5, a method for transmitting an HARQ codebook is provided by the embodiments of the present application, where the method may be performed by a UE, such as a mobile phone and the like. The method includes the following steps.

Step 501: determining a total number of occasions for candidate physical downlink shared channel (PDSCH) reception based on sets of slot timing values for HARQ feedback for multiple candidate services, and determining a codebook order corresponding to the occasions for candidate PDSCH reception in each time unit.

In particular, before a UE transmits the HARQ codebook, both the total number of the occasions for candidate PDSCH reception and the codebook order corresponding to the occasions for candidate PDSCH reception in each time unit need to be determined first.

In the present application, the total number of occasions for candidate PDSCH reception is determined based on the sets of slot timing values for HARQ feedback for multiple candidate services.

For example, for a scenario where the UE supports at most one time division multiplexing (TDM) in one time unit, firstly, a union set of sets of slot timing values for HARQ feedback for all candidate services may be determined based on the set of slot timing values for HARQ feedback for each candidate service.

The number of occasions for candidate PDSCH reception in each time unit is determined based on the number of occasions for candidate PDSCH reception for FDM supported by the UE and a maximum number of occasions for candidate PDSCH reception in frequency domain in each time unit of the union set.

A total number of occasions for candidate PDSCH reception is determined by summing up occasions for candidate PDSCH reception in all time units.

For another example, for a scenario where the UE supports at most one FDM in one time unit, firstly, the union set of sets of slot timing values for HARQ feedback for all candidate services may be determined based on the set of slot timing values for HARQ feedback for each candidate service.

The number of occasions for candidate PDSCH reception in each time unit is determined based on the number of occasions for candidate PDSCH reception for TDM supported by the UE and a maximum number of non-overlapping occasions for candidate PDSCH reception in time domain in each time unit of the union set.

The total number of occasions for candidate PDSCH reception is determined by summing up the occasions for candidate PDSCH reception in all time units.

For another example, for a scenario where only MBS service is included in multiple candidate services, firstly, the union set of sets of slot timing values for HARQ feedback for all candidate services may be determined based on the set of slot timing values for HARQ feedback for each candidate service.

Secondly, based on the number of occasions for candidate PDSCH reception for FDM supported by the UE and the number of occasions for candidate PDSCH reception for TDM supported by the UE, the number of occasions for candidate PDSCH reception in each time unit is determined.

Thirdly, the total number of occasions for candidate PDSCH reception is determined by summing up the occasions for candidate PDSCH reception in all time units.

In the embodiments of the present application, the UE may determine the codebook order corresponding to the occasions for candidate PDSCH reception in each time unit based on a configuration message transmitted from a network side device, the UE may determine the codebook order corresponding to the occasions for candidate PDSCH reception in each time unit based on a pre-agreed order in a protocol, or the UE may determine the codebook order corresponding to the occasions for candidate PDSCH reception in each time unit based on information such as a current state or a capability of the UE.

For example, the candidate services include MBS-1, MBS-2, MBS-3 and unicast service, as indicated in the configuration message transmitted from the network side device, a feedback order corresponding to the MBS-1 service is the first (ACK order=0), a feedback order corresponding to the MBS-2 service is the second (ACK order=1), a feedback order corresponding to the MBS-3 service is the third (ACK order=2), and a feedback order corresponding to unicast service is the fourth (ACK order=3).

For another example, the candidate services include MBS-1, MBS-2, MBS-3 and unicast service, as pre-agreed by the protocol, the feedback order corresponding to unicast service is the first (ACK order=0), the feedback order corresponding to MBS-1 is the second (ACK order=1), the feedback order corresponding to MBS-2 is the third (ACK order=2), the feedback order corresponding to MBS-3 is the fourth (ACK order=3),

In the embodiments of the present application, the time unit may be a frame, a slot, a sub-slot, etc.

Step 502: determining a value of each bit in the HARQ codebook based on whether downlink data is correctly received at each occasion for candidate PDSCH reception.

In particularly, after determining the total number of occasions for candidate PDSCH reception and the codebook order corresponding to the occasions for candidate PDSCH reception in each time unit, the UE receives data at the occasions for candidate PDSCH reception, and a first value is generated if the downlink data is received correctly and a second value is generated if the downlink data is not received correctly.

The first value and the second value may occupy 1 bit or multiple bits.

For example, in case that each occasion for candidate PDSCH reception corresponds to 1 bit of an HARQ codebook, if the downlink data is received correctly, a value corresponding to the HARQ codebook is generated as 0, and if the downlink data is not received correctly, the value corresponding to the HARQ codebook is generated as 1.

For another example, in case that one occasion for candidate PDSCH reception corresponds to A bit of the HARQ codebook, the total number of bits of the HARQ codebook is A times the occasions for candidate PDSCH reception.

Step503: transmitting the HARQ codebook.

In an embodiment, after generating the HARQ codebook, the UE transmits the HARQ codebook.

The UE may transmit the HARQ codebook through physical uplink control channel (PUCCH), or may transmit the HARQ codebook through physical uplink shared channel (PUSCH).

According to the method for transmitting HARQ codebook provided by the embodiments of the present application, the total number of occasions for candidate PDSCH reception is determined based on the sets of slot timing values for HARQ feedback for multiple candidate services, which shortens the length of generated HARQ codebook, and improves a utilization rate of resources.

In an embodiment, in case that at most one TDM is supported in one time unit, the determining the total number of occasions for candidate PDSCH reception based on the sets of slot timing values for HARQ feedback for multiple candidate services include:

determining, based on a set of slot timing values for HARQ feedback for each candidate service, the union set of sets of slot timing values for HARQ feedback for all candidate services;

determining, based on the number of occasions for candidate PDSCH reception for FDM supported by the UE and/or the maximum number of occasions for candidate PDSCH reception in frequency domain in each time unit of the union set, the number of occasions for candidate PDSCH reception in each time unit;

determining, based on the number of occasions for candidate PDSCH reception in all time units, the total number of occasions for candidate PDSCH reception.

In an embodiment, a scenario is that the UE supports at most one TDM in one time unit, or in another word, the UE does not support TDM for the PDSCH.

Firstly, the union set of sets of slot timing values for HARQ feedback for all candidate services is determined based on the set of slot timing values for HARQ feedback for each candidate service.

For example, the candidate services include MBS-1, MBS-2, MBS-3 and unicast service, a set of slot timing values for HARQ feedback *unicast_k1* configured by the network side device for unicast service is {2,3,4}, a set of slot timing values for HARQ feedback *MBS-1_k1* configured by the network side device for MBS-1 is {3,4,5}, a set of slot timing values for HARQ feedback *MBS-2_k1* configured by the network side device for MBS-2 is {3,4,5}, and a set of slot timing values for HARQ feedback *MBS-3_k1* configured by the network side device for MBS-3 is {3,4,5}.

A union set of sets of slot timing values for HARQ feedback for MBS-1, MBS-2, MBS-3 and unicast service is determined as {2,3,4,5}.

Secondly, the number of occasions for candidate PDSCH reception in each time unit is determined based on the number of occasions for candidate PDSCH reception for FDM supported by the UE and/or the maximum number of occasions for candidate PDSCH reception in frequency domain in each time unit of the union set.

For example, the number of occasions for candidate PDSCH reception in each time unit may be determined based on the number of occasions for candidate PDSCH reception for FDM supported by the UE by the following formula:

$$MA_{t(n-i)} = numFDM;$$

where $MA_{t(n-i)}$ is the number of occasions for candidate PDSCH reception in (n-i)-th time unit and *numFDM* is the number of occasions for candidate PDSCH reception for FDM supported by the UE.

The number of occasions for candidate PDSCH reception in each time unit is determined based on the number of occasions for candidate PDSCH reception for FDM supported by the UE, which reduces complexity of the system.

For another example, the number of occasions for candidate PDSCH reception in each time unit may be determined based on the maximum number of occasions for candidate PDSCH reception in frequency domain in each time unit of the union set by the following formula:

$$MA_{t(n-i)} = count_{t(n-i)};$$

where $MA_{t(n-i)}$ is the number of occasions for candidate PDSCH reception in the (n-i)-th time unit and $count_{t(n-i)}$ is a maximum number of occasions for candidate PDSCH reception in frequency domain in the (n-i)-th time unit.

The number of occasions for candidate PDSCH reception in each time unit is determined based on the maximum number of occasions for candidate PDSCH reception in frequency domain in each time unit of the union set, which reduces complexity of the system.

For another example, the number of occasions for candidate PDSCH reception in each time unit may be determined based on the number of occasions for candidate PDSCH reception for FDM supported by the UE and the maximum number of occasions for candidate PDSCH reception in frequency domain in each time unit of the union set by the following formula:

$$MA_{t(n-i)} = min( count_{t(n-i)}, numFDM);$$

where $MA_{t(n-i)}$ is the number of occasions for candidate PDSCH reception in the (n-i)-th time unit, $count_{t(n-i)}$ is the maximum number of occasions for candidate PDSCH reception in frequency domain in the (n-i)-th time unit and *numFDM* is the number of occasions for candidate PDSCH reception for FDM supported by the UE.

The number of occasions for candidate PDSCH reception in each time unit is determined based on the number of occasions for candidate PDSCH reception for FDM supported by the UE and the maximum number of occasions for candidate PDSCH reception in frequency domain in each time unit of the union set, which further reduces feedback overhead and improves the utilization rate of the resources.

The total number of occasions for candidate PDSCH reception may be determined by summing up the occasions for candidate PDSCH reception in all time units by the following formula:

$$MA = \sum MA_{t(n-i)};$$

where *MA is* the total number of occasions for candidate PDSCH reception and $MA_{t(n-i)}$ *is* the number of occasions for candidate PDSCH reception in the (n-i)-th time unit.

According to the method for transmitting HARQ codebook provided by the embodiments of the present application, for the scenario where the UE supports at most one TDM in one time unit, the number of occasions for candidate PDSCH reception in each time unit is determined based on the number of occasions for candidate PDSCH reception for FDM supported by the UE and/or the maximum number of occasions for candidate PDSCH reception in frequency domain in each time unit of the union set, which reduces complexity of a system and improves the utilization rate of the resources.

In an embodiment, in case that the number of occasions for candidate PDSCH reception in each time unit is determined based on the number of occasions for candidate PDSCH reception for FDM supported by the UE and the maximum number of occasions for candidate PDSCH reception in frequency domain in each time unit of the union set, the number of occasions for candidate PDSCH reception in each time unit may be determined by the following formula:

$$MA_{t(n-i)} = min( count_{t(n-i)}, numFDM);$$

where $MA_{t(n-i)}$ is the number of occasions for candidate PDSCH reception in the (n-i)-th time unit, $count_{t(n-i)}$ is the maximum number of occasions for candidate PDSCH reception in frequency domain in the (n-i)-th time unit and *numFDM* is the number of occasions for candidate PDSCH reception for FDM supported by the UE.

In an embodiment, the number of occasions for candidate PDSCH reception in each time unit is determined based on the number of occasions for candidate PDSCH reception for FDM supported by the UE and the maximum number of occasions for candidate PDSCH reception in frequency domain in each time unit of the union set by the following formula:

$$MA_{t(n-i)} = min(count_{t(n-i)}, numFDM);$$

where $MA_{t(n-i)}$ is the number of occasions for candidate PDSCH reception in the (n-i)-th time unit, $count_{t(n-i)}$ is the maximum number of occasions for candidate PDSCH reception in frequency domain in the (n-i)-th time unit and $numFDM$ is the number of occasions for candidate PDSCH reception for FDM supported by the UE.

According to the method for transmitting HARQ codebook provided by the embodiments of the present application, for the scenario where the UE supports at most one TDM in one time unit, the number of occasions for candidate PDSCH reception in each time unit is determined based on the number of occasions for candidate PDSCH reception for FDM supported by the UE and the maximum number of occasions for candidate PDSCH reception in frequency domain in each time unit of the union set, which further reduces the feedback overhead and improves the utilization rate of the resources.

In an embodiment, in case that at most one FDM is supported in one time unit, the determining the total number of occasions for candidate PDSCH reception based on the sets of slot timing values for HARQ feedback for multiple candidate services include:

determining, based on the set of slot timing values for HARQ feedback for each candidate service, the union set of sets of slot timing values for HARQ feedback for all candidate services;
determining, based on the number of occasions for candidate PDSCH reception for TDM supported by the UE and/or a maximum number of non-overlapping occasions for candidate PDSCH reception in time domain in each time unit of the union set, the number of occasions for candidate PDSCH reception in each time unit;
determining, based on the number of occasions for candidate PDSCH reception in all time units, the total number of occasions for candidate PDSCH reception.

In an embodiment, the scenario is that the UE supports at most one FDM in one time unit.
Firstly, the union set of sets of slot timing values for HARQ feedback for all candidate services is determined based on the set of slot timing values for HARQ feedback for each candidate service.
For example, the candidate services include MBS-1, MBS-2, MBS-3 and unicast service, the set of slot timing values for HARQ feedback *unicast_k1* configured by the network side device for unicast service is {2,3,4}, the set of slot timing values for HARQ feedback *MBS-1_k1* configured by the network side device for MBS-1 is {3,4,5}, the set of slot timing values for HARQ feedback *MBS-2_k1* configured by the network side device for MBS-2 is {3,4,5}, and the set of slot timing values for HARQ feedback *MBS-3_k1* configured by the network side device for MBS-3 is {3,4,5}.
The union set of sets of slot timing values for HARQ feedback for MBS-1, MBS-2, MBS-3 and unicast service is determined as {2,3,4,5}.
Secondly, the number of occasions for candidate PDSCH reception in each time unit is determined based on the number of occasions for candidate PDSCH reception for TDM supported by the UE and/or the maximum number of non-overlapping occasions for candidate PDSCH reception in time domain in each time unit of the union set.
For example, the number of occasions for candidate PDSCH reception in each time unit may be determined based on the number of occasions for candidate PDSCH reception for TDM supported by the UE by the following formula:

$$MA_{t(n-i)} = numTDM;$$

where $MA_{t(n-i)}$ is the number of occasions for candidate PDSCH reception in (n-i)-th time unit and $numTDM$ is the number of occasions for candidate PDSCH reception for TDM supported by the UE.
The number of occasions for candidate PDSCH reception in each time unit is determined based on the number of occasions for candidate PDSCH reception for TDM supported by the UE, which reduces the system complexity.
For another example, the number of occasions for candidate PDSCH reception in each time unit may be determined based on the maximum number of occasions for candidate PDSCH reception in time domain in each time unit of the union set by the following formula:

$$MA_{t(n-i)} = count_{t(n-i)};$$

where $MA_{t(n-i)}$ is the number of occasions for candidate PDSCH reception in the (n-i)-th time unit and $count_{t(n-i)}$ is a maximum number of occasions for candidate PDSCH reception in time domain in the (n-i)-th time unit.

The number of occasions for candidate PDSCH reception in each time unit is determined based on the maximum number of occasions for candidate PDSCH reception in time domain in each time unit of the union set, which reduces complexity of the system.

For another example, the number of occasions for candidate PDSCH reception in each time unit may be determined based on the number of occasions for candidate PDSCH reception for TDM supported by the UE and the maximum number of occasions for candidate PDSCH reception in time domain in each time unit of the union set by the following formula:

$$MA_{t(n-i)} = min(\ count_{t(n-i)}, numTDM);$$

where $MA_{t(n-i)}$ is the number of occasions for candidate PDSCH reception in the (n-i)-th time unit, $count_{t(n-i)}$ is the maximum number of occasions for candidate PDSCH reception in time domain in the (n-i)-th time unit and $numTDM$ is the number of occasions for candidate PDSCH reception for TDM supported by the UE.

The number of occasions for candidate PDSCH reception in each time unit is determined based on the number of occasions for candidate PDSCH reception for TDM supported by the UE and the maximum number of occasions for candidate PDSCH reception in time domain in each time unit of the union set, which further reduces the feedback overhead and improves the utilization rate of the resources.

The total number of occasions for candidate PDSCH reception is determined by summing up the occasions for candidate PDSCH reception in all time units, which may be expressed by the following formula:

$$MA = \sum MA_{t(n-i)};$$

where $MA$ is the total number of occasions for candidate PDSCH reception and $MA_{t(n-i)}$ is the number of occasions for candidate PDSCH reception in the (n-i)-th time unit.

According to the method for transmitting HARQ codebook provided by the embodiments of the present application, for the scenario where the UE supports at most one FDM in one time unit, the number of occasions for candidate PDSCH reception in each time unit is determined based on the number of occasions for candidate PDSCH reception for TDM supported by the UE and/or the maximum number of occasions for candidate PDSCH reception in time domain in each time unit of the union set, which reduces the complexity of the system and improves the utilization rate of the resources.

In an embodiment, in case that the number of occasions for candidate PDSCH reception in each time unit is determined based on the number of occasions for candidate PDSCH reception for TDM supported by the UE and the maximum number of non-overlapping occasions for candidate PDSCH reception in time domain in each time unit of the union set, the number of occasions for candidate PDSCH reception in each time unit may be determined by the following formula:

$$MA_{t(n-i)} = min(\ TDRA\_comput_{t(n-i)}, numTDM);$$

where $MA_{t(n-i)}$ is the number of occasions for candidate PDSCH reception in the (n-i)-th time unit, $TDRA\_comput_{t(n-i)}$ is the maximum number of non-overlapping occasions for candidate PDSCH reception in time domain in the (n-i)-th time unit and $numTDM$ is the number of occasions for candidate PDSCH reception for TDM supported by the UE.

In an embodiment, the number of occasions for candidate PDSCH reception in each time unit is determined based on the number of occasions for candidate PDSCH reception for TDM supported by the UE and the maximum number of occasions for candidate PDSCH reception in time domain in each time unit of the union set, which may be expressed by the following formula:

$$MA_{t(n-i)} = min(\ count_{t(n-i)}, numTDM);$$

where $MA_{t(n-i)}$ is the number of occasions for candidate PDSCH reception in the (n-i)-th time unit, $count_{t(n-i)}$ is the maximum number of occasions for candidate PDSCH reception in time domain in the (n-i)-th time unit and $numTDM$ is the number of occasions for candidate PDSCH reception for TDM supported by the UE.

According to the method for transmitting HARQ codebook provided by the embodiments of the present application, for the scenario where the UE supports at most one FDM in one time unit, the number of occasions for candidate PDSCH reception in each time unit is determined based on the number of occasions for candidate PDSCH reception for TDM supported by the UE and the maximum number of occasions for candidate PDSCH reception in time domain in each time unit of the union set, which further reduces the feedback overhead and improves the utilization rate of the resources.

In an embodiment, in case that the multiple candidate services only include MBSs, the determining the total number of occasions for candidate PDSCH reception based on the sets of slot timing values for HARQ feedback for multiple candidate services include:

determining, based on the set of slot timing values for HARQ feedback for each candidate service, the union set of sets of slot timing values for HARQ feedback for all candidate services;
determining, based on the number of occasions for candidate PDSCH reception for FDM supported by the UE and the number of occasions for candidate PDSCH reception for TDM supported by the UE, the number of occasions for candidate PDSCH reception in each time unit;
determining, based on the number of occasions for candidate PDSCH reception in all time units, the total number of occasions for candidate PDSCH reception.

In an embodiment, the scenario is that the UE supports multiple FDM and multiple TDM in one time unit and the multiple candidate services only include MBSs.

The union set of sets of slot timing values for HARQ feedback for all candidate services is determined based on the set of slot timing values for HARQ feedback for each candidate service.

The detailed manner is described in the above embodiments, which is not repeated herein.

The number of occasions for candidate PDSCH reception in each time unit is determined based on the number of occasions for candidate PDSCH reception for FDM supported by the UE and the number of occasions for candidate PDSCH reception for TDM supported by the UE.

For example, a product of the number of occasions for candidate PDSCH reception for FDM supported by the UE and the number of occasions for candidate PDSCH reception for TDM supported by the UE is associated with the number of occasions for candidate PDSCH reception in each time unit.

The total number of occasions for candidate PDSCH reception is determined by summing up the occasions for candidate PDSCH reception in all time units.

The detailed manner is described in the above embodiments, which is not repeated herein.

According to the method for transmitting HARQ codebook provided by the embodiments of the present application, for the scenario where the UE supports multiple FDM and multiple TDM in one time unit and the multiple candidate services only include MBSs, the number of occasions for candidate PDSCH reception in each time unit is determined based on the number of occasions for candidate PDSCH reception for FDM supported by the UE and the number of occasions for candidate PDSCH reception for TDM supported by the UE, which further reduces the feedback overhead and improves the utilization rate of the resources.

In an embodiment, the number of occasions for candidate PDSCH reception in each time unit may be determined by the following formula:

$$MA_{t(n-i)} = numTDM * numFDM;$$

where $MA_{t(n-i)}$ is the number of occasions for candidate PDSCH reception in the (n-i)-th time unit, $numTDM$ is the number of occasions for candidate PDSCH reception for TDM supported by the UE and $numFDM$ is the number of occasions for candidate PDSCH reception for FDM supported by the UE.

In an embodiment, the scenario is that the UE supports multiple FDM and multiple TDM in one time unit and the multiple candidate services only include MBSs.

The number of occasions for candidate PDSCH reception in each time unit may be determined by the following formula:

$$MA_{t(n-i)} = numTDM * numFDM;$$

where $MA_{t(n-i)}$ is the number of occasions for candidate PDSCH reception in the (n-i)-th time unit, $numTDM$ is the number of occasions for candidate PDSCH reception for TDM supported by the UE and $numFDM$ is the number of occasions for candidate PDSCH reception for FDM supported by the UE.

According to the method for transmitting HARQ codebook provided by the embodiments of the present application, for the scenario where the UE supports multiple FDM and multiple TDM in one time unit and the multiple candidate services only include MBS, the number of occasions for candidate PDSCH reception in each time unit is determined based on the number of occasions for candidate PDSCH reception for FDM supported by the UE and the number of occasions for candidate PDSCH reception for TDM supported by the UE, which further reduces the feedback overhead and improves the utilization rate of the resources.

In an embodiment, in case that the multiple candidate services only include MBSs, the determining the total number of occasions for candidate PDSCH reception based on the sets of slot timing values for HARQ feedback for multiple candidate services include:

determining, based on the set of slot timing values for HARQ feedback for each candidate service, the union set of sets of slot timing values for HARQ feedback for all candidate services;
determining the number of occasions for candidate PDSCH reception in each time unit based on the maximum number of occasions for candidate PDSCH reception in frequency domain in each time unit of the union set and the maximum number of non-overlapping occasions for candidate PDSCH reception in time domain in each time unit of the union set;
determining, based on the number of occasions for candidate PDSCH reception in all time units, the total number of occasions for candidate PDSCH reception.

In an embodiment, the scenario is that the UE supports multiple FDM and multiple TDM in one time unit and the multiple candidate services only include MBSs.

The union set of sets of slot timing values for HARQ feedback for all candidate services is determined based on the set of slot timing values for HARQ feedback for each candidate service.

The detailed manner is described in the above embodiments, which is not repeated herein.

The number of occasions for candidate PDSCH reception in each time unit is determined based on the maximum number of occasions for candidate PDSCH reception in frequency domain in each time unit of the union set and the maximum number of non-overlapping occasions for candidate PDSCH reception in time domain in each time unit of the union set.

For example, a product of the maximum number of occasions for candidate PDSCH reception in frequency domain in each time unit of the union set and the maximum number of non-overlapping occasions for candidate PDSCH reception in time domain in each time unit of the union set is associated with the number of occasions for candidate PDSCH reception in each time unit.

The total number of occasions for candidate PDSCH reception is determined by summing up the occasions for candidate PDSCH reception in all time units.

The detailed manner is described in the above embodiments, which is not repeated herein.

According to the method for transmitting HARQ codebook provided by the embodiments of the present application, for the scenario where the UE supports multiple FDM and multiple TDM in one time unit and the multiple candidate services only include MBSs, the number of occasions for candidate PDSCH reception in each time unit is determined based on the maximum number of occasions for candidate PDSCH reception in frequency domain in each time unit of the union set and the maximum number of non-overlapping occasions for candidate PDSCH reception in time domain in each time unit of the union set, which further reduces the feedback overhead and improves the utilization rate of the resources.

In an embodiment, the number of occasions for candidate PDSCH reception in each time unit may be determined by the following formula:

$$MA_{t(n-i)} = TDRA\_comput_{t(n-i)} * count_{t(n-i)};$$

where $MA_{t(n-i)}$ is the number of occasions for candidate PDSCH reception in the (n-i)-th time unit, $TDRA\_comput_{t(n-i)}$ is the maximum number of non-overlapping occasions for candidate PDSCH reception in time domain in the (n-i)-th time unit and $count_{t(n-i)}$ is the maximum number of occasions for candidate PDSCH reception in frequency domain in the (n-i)-th time unit.

In an embodiment, the scenario is that the UE supports multiple FDM and multiple TDM in one time unit and the multiple candidate services only include MBSs.

The number of occasions for candidate PDSCH reception in each time unit may be determined by the following formula:

$$MA_{t(n-i)} = TDRA\_comput_{t(n-i)} * count_{t(n-i)};$$

where $MA_{t(n-i)}$ is the number of occasions for candidate PDSCH reception in the (n-i)-th time unit, $TDRA\_comput_{t(n-i)}$ is the maximum number of non-overlapping occasions for candidate PDSCH reception in time domain in the (n-i)-th time unit and $count_{t(n-i)}$ is the maximum number of occasions for candidate PDSCH reception in frequency domain in the *(n-i)*-th time unit.

According to the method for transmitting HARQ codebook provided by the embodiments of the present application, for the scenario where the UE supports multiple FDM and multiple TDM in one time unit and the multiple candidate services only include MBSs, the number of occasions for candidate PDSCH reception in each time unit is determined based on the maximum number of occasions for candidate PDSCH reception in frequency domain in each time unit of the union set and the maximum number of non-overlapping occasions for candidate PDSCH reception in time domain in each time unit of the union set, which further reduces the feedback overhead and improves the utilization rate of the resources.

In an embodiment, in case that the multiple candidate services only include MBSs, the determining the total number of occasions for candidate PDSCH reception based on the sets of slot timing values for HARQ feedback for multiple candidate services include:

determining, based on the set of slot timing values for HARQ feedback for each candidate service, the union set of sets of slot timing values for HARQ feedback for all candidate services;
determining the number of occasions for candidate PDSCH reception in each time unit based on the number of occasions for candidate PDSCH reception for FDM supported by the UE, the number of occasions for candidate PDSCH reception for TDM supported by the UE, the maximum number of occasions for candidate PDSCH reception in frequency domain in each time unit of the union set and the maximum number of non-overlapping occasions for candidate PDSCH reception in time domain in each time unit of the union set;
determining, based on the number of occasions for candidate PDSCH reception in all time units, the total number of occasions for candidate PDSCH reception.

In an embodiment, the scenario is that the UE supports multiple FDM and multiple TDM in one time unit and the multiple candidate services only include MBSs.

The union set of sets of slot timing values for HARQ feedback for all candidate services is determined based on the set of slot timing values for HARQ feedback for each candidate service.

The detailed manner is described in the above embodiments, which is not repeated herein.

The number of occasions for candidate PDSCH reception in each time unit is determined based on the number of occasions for candidate PDSCH reception for FDM supported by the UE, the number of occasions for candidate PDSCH reception for TDM supported by the UE, the maximum number of occasions for candidate PDSCH reception in frequency domain in each time unit of the union set and the maximum number of non-overlapping occasions for candidate PDSCH reception in time domain in each time unit of the union set.

For example, a first minimum value between the number of occasions for candidate PDSCH reception for FDM supported by the UE and the maximum number of occasions for candidate PDSCH reception in frequency domain in each time unit of the union set is determined, and then a product of the first minimum value and the number of occasions for candidate PDSCH reception for TDM supported by the UE is associated with the number of occasions for candidate PDSCH reception in each time unit, or a product of the first minimum value and the maximum number of non-overlapping occasions for candidate PDSCH reception in time domain in each time unit of the union set is associated with the number of occasions for candidate PDSCH reception in each time unit.

For another example, a second minimum value between the number of occasions for candidate PDSCH reception for TDM supported by the UE and the maximum number of non-overlapping occasions for candidate PDSCH reception in time domain in each time unit of the union set is determined, and then a product of the second minimum value and the number of occasions for candidate PDSCH reception for TDM supported by the UE is associated with the number of occasions for candidate PDSCH reception in each time unit, or a product of the second minimum value and the maximum number of occasions for candidate PDSCH reception in frequency domain in each time unit of the union set is associated with the number of occasions for candidate PDSCH reception in each time unit.

For another example, the first minimum value between the number of occasions for candidate PDSCH reception for FDM supported by the UE and the maximum number of occasions for candidate PDSCH reception in frequency domain in each time unit of the union set is determined, the second minimum value between the number of occasions for candidate PDSCH reception for TDM supported by the UE and the maximum number of non-overlapping occasions for candidate PDSCH reception in time domain in each time unit of the union set is determined, and then a product of the first minimum value and the second minimum value is associated with the number of occasions for candidate PDSCH reception in each time unit.

The total number of occasions for candidate PDSCH reception is determined by summing up the occasions for candidate PDSCH reception in all time units.

The detailed manner is described in the above embodiments, which is not repeated herein.

According to the method for transmitting HARQ codebook provided by the embodiments of the present application, for the scenario where the UE supports multiple FDM and multiple TDM in one time unit and the multiple candidate services only include MBSs, the number of occasions for candidate PDSCH reception in each time unit is determined based on the number of occasions for candidate PDSCH reception for FDM supported by the UE, the number of occasions for candidate PDSCH reception for TDM supported by the UE, the maximum number of occasions for candidate PDSCH reception in frequency domain in each time unit of the union set and the maximum number of non-overlapping occasions for candidate PDSCH reception in time domain in each time unit of the union set, which further reduces the feedback overhead and improves the utilization rate of the resources.

In an embodiment, the number of occasions for candidate PDSCH reception in each time unit may be determined by the following formula:

$$MA_{t(n-i)} = TDRA\_comput_{t(n-i)} * min(count_{t(n-i)}, numFDM);$$

where $MA_{t(n-i)}$ is the number of occasions for candidate PDSCH reception in the (n-i)-th time unit, $TDRA\_comput_{t(n-i)}$ is the maximum number of non-overlapping occasions for candidate PDSCH reception in time domain in the (n-i)-th time unit, $count_{t(n-i)}$ is the maximum number of occasions for candidate PDSCH reception in frequency domain in the (n-i)-th time unit and $numFDM$ is the number of occasions for candidate PDSCH reception for FDM supported by the UE.

In an embodiment, the first minimum value between the number of occasions for candidate PDSCH reception for FDM supported by the UE and the maximum number of occasions for candidate PDSCH reception in frequency domain in each time unit of the union set is determined, and then a product of the first minimum value and the maximum number of non-overlapping occasions for candidate PDSCH reception in time domain in each time unit of the union set is associated with the number of occasions for candidate PDSCH reception in each time unit.

The number of occasions for candidate PDSCH reception in each time unit may be determined by the following formula:

$$MA_{t(n-i)} = TDRA\_comput_{t(n-i)} * min(count_{t(n-i)}, numFDM);$$

where $MA_{t(n-i)}$ is the number of occasions for candidate PDSCH reception in the (n-i)-th time unit, $TDRA\_comput_{t(n-i)}$ is the maximum number of non-overlapping occasions for candidate PDSCH reception in time domain in the (n-i)-th time unit, $count_{t(n-i)}$ is the maximum number of occasions for candidate PDSCH reception in frequency domain in the (n-i)-th time unit and $numFDM$ is the number of occasions for candidate PDSCH reception for FDM supported by the UE.

According to the method for transmitting HARQ codebook provided by the embodiments of the present application, for the scenario where the UE supports multiple FDM and multiple TDM in one time unit and the multiple candidate services only include MBS, the first minimum value between the number of occasions for candidate PDSCH reception for FDM supported by the UE and the maximum number of occasions for candidate PDSCH reception in frequency domain in each time unit of the union set is determined, and then a product of the first minimum value and the maximum number of non-overlapping occasions for candidate PDSCH reception in time domain in each time unit of the union set is regarded as the number of occasions for candidate PDSCH reception in each time unit, which further reduces the feedback overhead and improves the utilization rate of the resources.

In an embodiment, in case that the multiple candidate services include MBS and unicast service, the determining the total number of occasions for candidate PDSCH reception based on the sets of slot timing values for HARQ feedback for multiple candidate services include:

determining, based on the set of slot timing values for HARQ feedback for each candidate service, the union set of sets of slot timing values for HARQ feedback for all candidate services;
determining the number of occasions for candidate PDSCH reception in each time unit based on the number of occasions for candidate PDSCH reception for FDM supported by the UE, the maximum number of occasions for candidate PDSCH reception in frequency domain in each time unit of the union set, a maximum number of non-overlapping occasions for candidate PDSCH reception in time domain in time units only including MBS of the union set, a maximum number of non-overlapping occasions for candidate PDSCH reception in time domain in time units only including unicast service of the union set and a maximum number of non-overlapping occasions for candidate PDSCH reception in time domain in time units including MBS and unicast service of the union set;
determining, based on the number of occasions for candidate PDSCH reception in all time units, the total number of occasions for candidate PDSCH reception.

In an embodiment, the scenario is that the UE supports multiple FDM and multiple TDM in one time unit and the multiple candidate services include MBS and unicast service.

The union set of sets of slot timing values for HARQ feedback for all candidate services is determined based on the set of slot timing values for HARQ feedback for each candidate service.

The detailed manner is described in the above embodiments, which is not repeated herein.

The number of occasions for candidate PDSCH reception in each time unit is determined based on the number of occasions for candidate PDSCH reception for FDM supported by the UE, the maximum number of occasions for candidate PDSCH reception in frequency domain in each time unit of the union set, a maximum number of non-overlapping occasions for candidate PDSCH reception in time domain in time units only including MBS of the union set, a maximum number of non-overlapping occasions for candidate PDSCH reception in time domain in time units only including unicast service of the union set and a maximum number of non-overlapping occasions for candidate PDSCH reception in time domain in time units including MBS and unicast service of the union set.

The total number of occasions for candidate PDSCH reception is determined by summing up the occasions for candidate PDSCH reception in all time units.

The detailed manner is described in the above embodiments, which is not repeated herein.

According to the method for transmitting HARQ codebook provided by the embodiments of the present application, for the scenario where the UE supports multiple FDM and multiple TDM in one time unit and the multiple candidate services include MBS and unicast service, the number of occasions for candidate PDSCH reception in each time unit is determined based on the number of occasions for candidate PDSCH reception for FDM supported by the UE, the maximum number of occasions for candidate PDSCH reception in frequency domain in each time unit of the union set, a maximum number of non-overlapping occasions for candidate PDSCH reception in time domain in time units only including MBS of the union set, a maximum number of non-overlapping occasions for candidate PDSCH reception in time domain in time units only including unicast service of the union set and a maximum number of non-overlapping occasions for candidate PDSCH reception in time domain in time units including MBS and unicast service of the union set, which further reduces the feedback overhead and improves the utilization rate of the resources.

In an embodiment, the number of occasions for candidate PDSCH reception in each time unit may be determined by the following formula:

$$MA_{t(n-i)} = \begin{cases} B & , & \text{when the } (n-i)-th \text{ time unit only includes MBS} \\ max & (B, \ C) & , \text{when the } (n-i)-th \text{ time unit includes MBS and unicast service} \\ D & , & \text{when the } (n-i)-th \text{ time unit only includes unicast service} \end{cases},$$

$$B = min(\ count_{t(n-i)}, numFDM) * MBS\_TDRA\_comput_{t(n-i)},$$

$$C = unite\_TDRA\_comput_{t(n-i)}$$

$$+$$

$$[min(\ count_{t(n-i)}, numFDM) - 1] * MBS\_TDRA\_comput_{t(n-i)}, \text{ and}$$

$$D = unicast\_TDRA\_comput_{t(n-i)}$$

where $MA_{t(n-i)}$ is the number of occasions for candidate PDSCH reception in the (n-i)-th time unit, $count_{t(n-i)}$ is the maximum number of occasions for candidate PDSCH reception in frequency domain in the ($n$-$i$)-th time unit, $numFDM$ is the number of occasions for candidate PDSCH reception for FDM supported by the UE, $MBS\_TDRA\_comput_{t(n-i)}$ is the maximum number of non-overlapping occasions for candidate PDSCH reception in time domain in a time unit only including MBS of the union set, $unite\_TDRA\_comput_{t(n-i)}$ is the maximum number of non-overlapping occasions for candidate PDSCH reception in time domain in a time unit including MBS and unicast service of the union set and $unicast\_TDRA\_comput_{t(n-i)}$ is the maximum number of non-overlapping occasions for candidate PDSCH reception in time domain in a time unit only including unicast service of the union set.

In an embodiment, the scenario is that the UE supports multiple FDM and multiple TDM in one time unit and the multiple candidate services include MBS and unicast service.

The number of occasions for candidate PDSCH reception in each time unit is determined based on the number of occasions for candidate PDSCH reception for FDM supported by the UE, the maximum number of occasions for candidate PDSCH reception in frequency domain in each time unit of the union set, the maximum number of non-overlapping occasions for candidate PDSCH reception in time domain in a time unit only including MBS of the union set, the maximum number of non-overlapping occasions for candidate PDSCH reception in time domain in a time unit only including unicast service of the union set and the maximum number of non-overlapping occasions for candidate PDSCH reception in time domain in a time unit including MBS and unicast service of the union set by the following formula:

$$MA_{t(n-i)} = \begin{cases} B & , \quad when\ the\ (n-i)-th\ time\ unit\ only\ includes\ MBS \\ max\ (B,\ C) & , \quad when\ the\ (n-i)-th\ time\ unit\ includes\ MBS\ and\ unicast\ service, \\ D & , \quad when\ the\ (n-i)-th\ time\ unit\ only\ includes\ unicast\ service \end{cases}$$

$$B = min(count_{t(n-i)}, numFDM) * MBS\_TDRA\_comput_{t(n-i)},$$
$$C = unite\_TDRA\_comput_{t(n-i)}$$
$$+$$
$$[min(count_{t(n-i)}, numFDM) - 1] * MBS\_TDRA\_comput_{t(n-i)},\ and$$
$$D = unicast\_TDRA\_comput_{t(n-i)}$$

where $MA_{t(n-i)}$ is the number of occasions for candidate PDSCH reception in the (n-i)-th time unit, $count_{t(n-i)}$ is the maximum number of occasions for candidate PDSCH reception in frequency domain in the (n-i)-th time unit, $numFDM$ is the number of occasions for candidate PDSCH reception for FDM supported by the UE, $MBS\_TDRA\_comput_{t(n-i)}$ is the maximum number of non-overlapping occasions for candidate PDSCH reception in time domain in a time unit only including MBS of the union set, $unite\_TDRA\_comput_{t(n-i)}$ is the maximum number of non-overlapping occasions for candidate PDSCH reception in time domain in a time units including MBS and unicast service of the union set and $unicast\_TDRA\_comput_{t(n-i)}$ is the maximum number of non-overlapping occasions for candidate PDSCH reception in time domain in a time unit only including unicast service of the union set.

According to the method for transmitting HARQ codebook provided by the embodiments of the present application, for the scenario where the UE supports multiple FDM and multiple TDM in one time unit and the multiple candidate services include MBS and unicast service, the number of occasions for candidate PDSCH reception in each time unit is determined based on the number of occasions for candidate PDSCH reception for FDM supported by the UE, the maximum number of occasions for candidate PDSCH reception in frequency domain in each time unit of the union set, a maximum number of non-overlapping occasions for candidate PDSCH reception in time domain in a time unit only including MBS of the union set, a maximum number of non-overlapping occasions for candidate PDSCH reception in time domain in a time unit only including unicast service of the union set and a maximum number of non-overlapping occasions for candidate PDSCH reception in time domain in a time units including MBS and unicast service of the union set, which further reduces the feedback overhead and improves the utilization rate of the resources.

In an embodiment, the determining the codebook order corresponding to the occasions for candidate PDSCH reception in each time unit includes:

receiving first information, where the first information is used for indicating the codebook order corresponding to the occasions for candidate PDSCH reception in each time unit; and
determining the codebook order corresponding to the occasions for candidate PDSCH reception in each time unit based on the first information.

In an embodiment, the UE determines the codebook order corresponding to the occasions for candidate PDSCH reception in each time unit based on a configuration message transmitted from the network side device.
The network side device transmits the first information to the UE. The first information is used for indicating the codebook order corresponding to the occasions for candidate PDSCH reception in each time unit.
The UE receives the first information, and determines the codebook order corresponding to the occasions for candidate PDSCH reception in each time unit based on the first information.
For example, the candidate services include MBS-1, MBS-2, MBS-3 and unicast service, in the first information transmitted from the network side device to the UE,

in case that a codebook order corresponding to the occasions for candidate PDSCH reception for MBS-1 is 1, a codebook corresponding to the occasions for candidate PDSCH reception for MBS-1 is placed on a second position;
in case that a codebook order corresponding to the occasions for candidate PDSCH reception for MBS-2 is 2, a codebook corresponding to the occasions for candidate PDSCH reception for MBS-2 is placed on a third position;
in case that a codebook order corresponding to the occasions for candidate PDSCH reception for MBS-3 is 3, a codebook corresponding to the occasions for candidate PDSCH reception for MBS-3 is placed on a fourth position; and
in case that a codebook order corresponding to the occasions for candidate PDSCH reception for unicast service is 0, a codebook corresponding to the occasions for candidate PDSCH reception for unicast service is placed on a first position.

According to the method for transmitting HARQ codebook provided by the embodiments of the present application, the codebook order corresponding to the occasions for candidate PDSCH reception in each time unit is determined based on the configuration message transmitted from the network side device, which ensures a consistency of HARQ feedback order of PDSCH for FDM in a case that a scheduling signaling is missed.

In an embodiment, the first information is included in downlink control information (DCI).

According to the method for transmitting HARQ codebook provided by the embodiments of the present application, the codebook order corresponding to the occasions for candidate PDSCH reception in each time unit is determined based on the first information in the DCI transmitted from the network side device, which ensures the consistency of HARQ feedback order of PDSCH of FDM in the case that the scheduling signaling is missing.

In an embodiment, the first information is associated with one of the followings:

a radio network temporary identity (RNTI) used for scrambling downlink data on an occasion for candidate PDSCH reception;
a control resource set (CORESET) of physical downlink control channel (PDCCH) for transmitting DCI;
a search space of PDCCH for transmitting DCI;
a start location of PDSCH in frequency domain; and
a time domain resource allocation (TDRA).

According to the method for transmitting HARQ codebook provided by the embodiments of the present application, the first information is associated with preset information, which ensures the consistency of HARQ feedback order of PDSCH of FDM in the case that the scheduling signaling is missed.

In an embodiment, in case that a scheduled service is a unicast service, an HARQ feedback order corresponding to the unicast service is a given order.

In an embodiment, in case that the unicast service is scheduled, the HARQ feedback order corresponding to the unicast service is the given order. The given order may be the first bit, the last bit or other positions.

For example, the candidate services include MBS-1, MBS-2, MBS-3 and unicast service, by default, the codebook order corresponding to the occasions for candidate PDSCH reception of unicast service is placed on the first position.

For another example, the candidate services include MBS-1, MBS-2, MBS-3 and unicast service, by default, the codebook order corresponding to the occasions for candidate PDSCH reception of unicast service is placed on the last bit (the fourth bit).

According to the method for transmitting HARQ codebook provided by the embodiments of the present application, the HARQ feedback order corresponding to the unicast service is the given order, which ensures the consistency of HARQ feedback order of PDSCH of FDM in the case that the scheduling signaling is missed.

The method is further described below by several examples:

Example 1:

Step 1: the base station configures one or multiple $k1$ parameter sets.

The $k1$ parameter sets may be configured by a *dl-DataToUL-ACK* parameter in current NR technology, which is used for indicating time information from PDSCH to HARQ feedback, and the unit of the $k1$ parameter sets is slot or other time unit. It is assumed that three $k1$ parameter sets are configured.

Unicast_$k1$ =$\{2,3,4\}$: a $k1$ parameter set for unicast PDSCH transmission, DCI is scrambled by cell specific radio network temporary identity (C-RNTI).

*MBS1_k1 = $\{3,4,5\}$:* a $k1$ parameter set for MBS-1 PDSCH transmission, DCI is scrambled by group common radio network temporary identity 1 (G-RNTI-1), corresponding to the scheduling of service data of MBS-1.

*MBS2_k1 = $\{3,4,5\}$:* a $k1$ parameter set for MBS-2 PDSCH transmission, DCI is scrambled by group common radio network temporary identity 2 (G-RNTI-2), corresponding to the scheduling of service data of MBS-2.

It should be noted that, $k1$ parameter sets used for MBSs are configured separately, and may be the same or different, and in this example the parameters are the same, which has a same effect of configuring one $k1$ parameter set for MBS.

Step 2: determining, based on the $k1$ parameter set and an FDM capability, a number of HARQ bits needed to be fed back in each slot.

Mode 1: determining PDSCH scheduling slots that need to feed back an HARQ codebook in a slot n.

Based on the $k1$ parameter set, the PDSCH scheduling slots that need to feed back the HARQ codebook are determined. The slots are denoted as: *slot(n-x), slot(n-x+1) .... slot(n-y)*; where *x, x-1, x-2...y* belongs to the $k1$ parameter set. The calculation process is as follows:

The $k1$ parameter sets in step 1 are jointly combined, and three $k1$ parameter sets are involved:

$$Union\_k1 = \{unicast\_k1, MBS\_k1, MBS\_k2\} = \{2,3,4,5\}.$$

FIG. 6 is a first schematic diagram of generation of *union_k1* and calculation of a maximum number of candidate PDSCH (count). As shown in FIG. 6, for conveniently calculating a number of HARQ codebook bits needed to be fed back in each slot, in a jointly combined k1 parameter set, the maximum number (count) of candidate PDSCH is calculated, which is denoted as (*k1*, *count*).

*Union_k1 = {unicast_k1,MBS_k1,MBS_k2} = {(2,1),(3,3), (4,3),(5,2)}.*

Mode 2: determining the number of occasions for candidate PDSCH reception of HARQ codebook needed to be fed back in each PDSCH scheduling slot based on the following manner.

$$MA_{slot(n-i)}^{HARQ-ACK} = min(\, count_{slot(n-i)}, numFDM)$$

where $MA_{slot(n-i)}^{HARQ-ACK}$ is the number of occasions for candidate PDSCH reception of HARQ codebook needed to be fed back in corresponding *slot(n-i)*; $count_{slot(n-i)}$ is a maximum number of candidate PDSCH in the *k1* parameter set in *slot(n-i)* and *numFDM* is a number indicating a capability of multiplexing PDSCH. Taking *numFDM* = 2 as an example, in combination with previous calculation, the number of HARQ codebook bits needed to be fed back in each PDSCH scheduled slot can be calculated as:

$$MA_{slot(n-5)}^{HARQ-ACK} = min(\,2,2) = 2;$$

$$MA_{slot(n-4)}^{HARQ-ACK} = min(\,3,2) = 2;$$

$$MA_{slot(n-3)}^{HARQ-ACK} = min(\,3,2) = 2;$$

$$MA_{slot(n-3)}^{HARQ-ACK} = min(\,1,2) = 1.$$

Note 1: the mode may include another implementation with the same effect: a special processing is performed on slots corresponding to multiple *K1* values which are same in multiple *K1* parameter sets, that is, in case that a number of *K1* values which are same in multiple *K1* parameter sets is greater than *numFDM*, the number of occasions for candidate PDSCH reception is *numFDM*;

Note 2: the mode 2 reduces the feedback overhead by taking the minimum value between *count* and *numFDM*; certainly, if resource overhead is not considered in the system, for reducing operation complexity, $MA_{slot(n-i)}^{HARQ-ACK}$ can be calculated based on *count* or *numFDM* only.

Mode 3: accumulating the number of occasions for candidate PDSCH reception of HARQ codebook needed to be fed back, that is, calculating a total number of occasions for candidate PDSCH reception of HARQ codebook needed to be fed back and calculating a total length of the HARQ codebook accordingly.

According to the above mode, it is assumed that one PDSCH feeds back 1 bit of HARQ codebook information, a length of the HARQ codebook can be calculated as:

$$\sum_{k1=5}^{k1=3} O_{slot(n-k1)}^{HARQ-ACK} = 2 + 2 + 2 + 1 = 7.$$

Scheme 3: the UE feeds back bit information of the HARQ codebook based on a decoding situation of PDSCH.

For a slot during which greater than or equal to 2 bits of HARQ codebook is fed back, an order of feedback bits is determined by the base station's instruction or scheduling information. In this example, 1 bit in an MBS scheduling signaling is used to indicate a bit position of the HARQ codebook.

It is assumed that a 1-bit indication is: *ACK_order*, which is used for indicating a position of the HARQ codebook for PDSCH feedback among 2 HARQ codebook positions. For example, *ACK_order=0*, which means that the HARQ codebook is placed on the first position; and *ACK_order=1*, which means that the HARQ codebook is placed on the second position.

It is assumed that unicast data is scheduled, a feedback HARQ-ACK bit is placed on the first position (or placed on the last position by default).

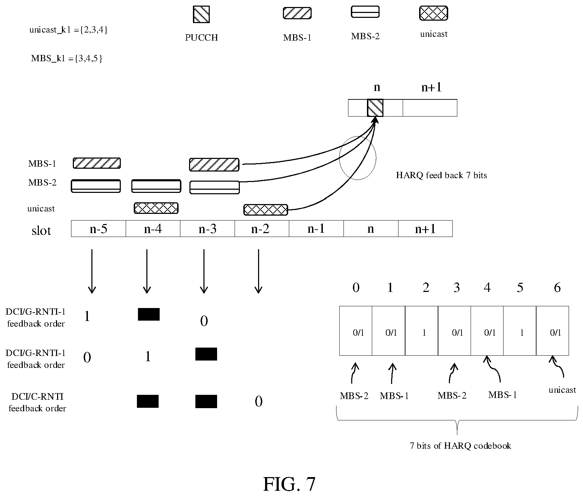

FIG. 7 is a first schematic diagram of a generation of an HARQ codebook supporting PDSCH FDM. As shown in FIG. 7, an effect of saving HARQ codebook is achieved, and at the same time, a consistency of an order of feedback bit information in a PDSCH FDM scenario is ensured even if DCI is missed.

It can be determined by the step 1 and step 2 of the example that: the HARQ codebook has 7 bits in total. *slot(n-5)* has 2 bits, *slot(n-4)* has 2 bits, *slot(n-3)* has 2 bits, and *slot(n-2)* has 1 bit; a situation of feedback HARQ bit of each slot is as follows.

In *slot(n-5)*, information of scheduling PDSCH in the slot is received: when MBS-1 is scheduled (DCI is scrambled by G-RNTI-1), an ACK order is indicated as 1, when MBS-2 is scheduled (DCI is scrambled by G-RNTI-1), the ACK order is indicated as 1. A PDSCH decoding result of MBS-2 is placed on an HARQ codebook position 0; a PDSCH decoding result of MBS-1 is placed on an HARQ codebook position 1 (for example: if a decoding is correct, place ACK(=0), and if the decoding is wrong, place NAK(=1)).

In slot*(n-4)*, information of scheduling PDSCH in the slot is received: when MBS-2 is scheduled (DCI is scrambled by G-RNTI-2), the ACK order is indicated as 1. The PDSCH decoding result of MBS-2 is placed on an HARQ codebook position 3; NAK(=1) is placed on the HARQ codebook position 2.

In slot*(n-3)*, information of scheduling PDSCH in the slot is received: when MBS-1 is scheduled (DCI is scrambled by G-RNTI-1), the ACK order is indicated as 0. The PDSCH decoding result of MBS-1 is placed on an HARQ codebook position 4; NAK(=1) is placed on an HARQ codebook position 5.

In slot*(n-2)*, information of scheduling PDSCH in the slot is received: when unicast is scheduled (DCI is scrambled by C-RNTI), by default, the ACK order is indicated as 0. A PDSCH decoding result of unicast is placed on an HARQ codebook position 6.

Note 1: for dynamic scheduling, each PDSCH corresponds to scheduling information DCI, for semi-persistent scheduling (SPS), DCI is only adopted in SPS activation or SPS deactivation, where a value of ACK order corresponding to SPS PDSCH can be determined by adopting the method for configuring the value of ACK order statically or adopting the value of ACK order in DCI of SPS activation;

Note 2: in the example, it is assumed that there are at most two FDM PDSCH in one slot, and 1 bit of information is needed to indicate the ACK order. When there are multiple FDM PDSCH, a number of required bits can be determined by rounding up a value of $log_2(numFDM)$.

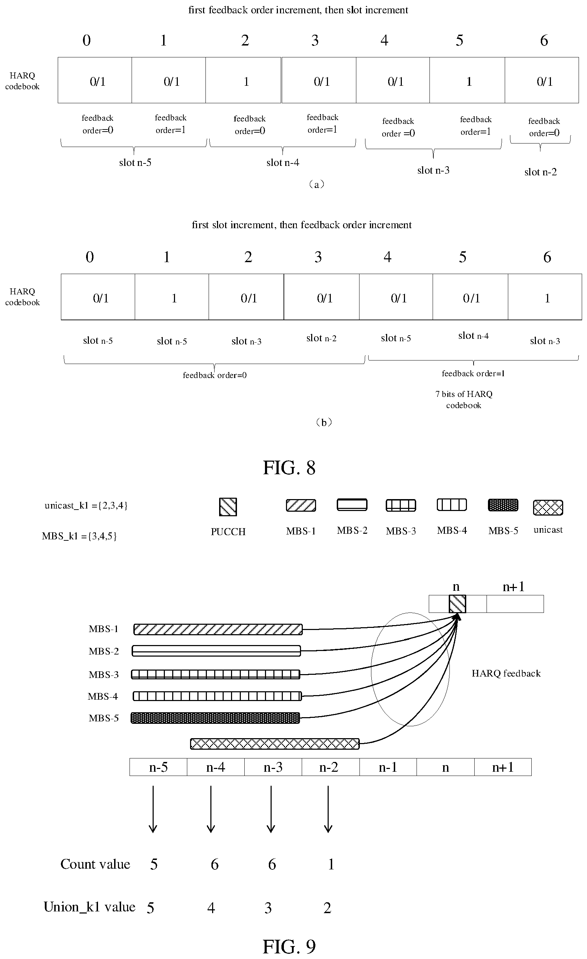

Note 3: FIG. 8 is a schematic diagram of an order of HARQ feedback bits. As shown in FIG. 8, in the example, when an order of HARQ codebook bits is fed back, the order is incremented according to the ACK orders corresponding to occasions for candidate PDSCH reception in the slots, and then incremented according to the slots. The order may also be incremented according to the slots, and then incremented according to the ACK order.


Example 2:

Step 1: the base station configures one or multiple *k1* parameter sets.

The *k1* parameter sets may be configured by the *dl-DataToUL-ACK* parameter in current NR technology, which is used for indicating time information from PDSCH to HARQ feedback, and the the unit of the *k1* parameter sets is slot or other time unit. It is assumed that two *k1* parameter sets are configured.

Unicast_*k1* ={2,3,4}: the *k1* parameter set for unicast PDSCH transmission, DCI is scrambled by C-RNTI.

*MBS_k1 = {3,4,5}*: a *k1* parameter set for MBS PDSCH transmission, DCI is scrambled by G-RNTI, corresponding to all scheduling of service data of MBS.

In addition, it is assumed that there are five MBSs (MBS-1, MBS-2, MBS-3, MBS-4 and MBS-5) configured by the base station that need to be transmitted, G-RNTIs for scrambling scheduling signaling DCI for PDSCH are: G-RNTI-1, G-RNTI-2, G-RNTI-3, G-RNTI-4 and G-RNTI-5.

Step 2: determining, based on the *k1* parameter set and the FDM capability, the number of HARQ codebook bits needed to be fed back in each slot.

Mode 1: determining the PDSCH scheduling slots that need to feed back the HARQ codebook in the slot n.

Based on the *k1* parameter set, determining the PDSCH scheduling slots that need to feed back the HARQ codebook. The slots are denoted as: *slot(n-x), slot(n-x+1) .... slot(n-y)*; where *x, x-1, x-2...y* belongs to the *k1* parameter set. The calculation process is as follows.

The k1 parameter sets in step 1 are jointly combined, and two *k1* parameter sets are involved:

$$Union\_k1= \{unicast\_k1, MBS\_k1 \} = \{2,3,4,5\}.$$

In addition, for conveniently calculating the number of occasions for candidate PDSCH reception of HARQ codebook needed to be fed back on each slot, in the jointly combined k1 parameter set, the maximum number (count) of candidate PDSCH is calculated, which is denoted as (*k1, count*).

FIG. 9 is a second schematic diagram of generation of *union_k1* and calculation of a maximum number (count) of candidate PDSCH. As shown in FIG. 9,
*Union_k1= {unicasi_k1, MBS_k1, MBS_k2} = {(2,1),(3,6),(4,6),(5,5)}.*

2: determining the number of occasions for candidate PDSCH reception of HARQ codebook needed to be fed back in each PDSCH scheduling slot based on the following manner.

$$MA_{slot(n-i)}^{HARQ-ACK} = min( count_{slot(n-i)}, numFDM)$$

where $MA_{slot(n-i)}^{HARQ-ACK}$ is the number of occasions for candidate PDSCH reception of HARQ codebook needed to be fed back in corresponding *slot(n-i)*; *count$_{slot(n-i)}$* is the maximum number of candidate PDSCH in the *k1* parameter set in *slot(n-i)* and *numFDM* is a number indicating a capability of multiplexing PDSCH. Taking *numFDM = 3* as an example, in combination with previous calculation, the number of HARQ codebook bits needed to be fed back in each PDSCH scheduled slot can be calculated as:

$$MA_{slot(n-5)}^{HARQ-ACK} = min(5,3) = 3;$$

$$MA_{slot(n-4)}^{HARQ-ACK} = min(6,3) = 3;$$

$$MA_{slot(n-3)}^{HARQ-ACK} = min(6,3) = 3;$$

$$MA_{slot(n-3)}^{HARQ-ACK} = min(1,3) = 1.$$

Mode 3: accumulating the number of occasions for candidate PDSCH reception of HARQ codebook needed to be fed back, that is, calculating a length of the HARQ codebook.

According to the above mode, it is assumed that one PDSCH feeds back 1 bit of HARQ-ACK information, the length of the HARQ codebook is (10 bits):

$$\sum_{k1=5}^{k1=3} O_{slot(n-k1)}^{HARQ-ACK} = 3 + 3 + 3 + 1 = 10.$$

Step 3: the UE feeds back bit information of the HARQ codebook based on the decoding situation of PDSCH.

For the slot during which greater than or equal to 2 bits of HARQ codebook is fed back, the order of feedback bits is determined by the base station's instruction or scheduling information. In this example, a position of the feedback information is determined based on a scrambling code of a scheduling signaling DCI corresponding to a PDSCH which is associated with an MBS scheduling signaling, that is, based on a scrambling code (G-RNTI) of a scheduling signaling corresponding to a PDSCH in the slot.

When MBS data is scheduled, the corresponding scrambling code for DCI is G-RNTI: *ACK_order = mod(G-RNTI, numFDM).* Where the definition of *numFDM* is the same as defined in the above steps, and it is assumed that the value of *numFDM* is 3. *Mod()* is the operation for calculating a remainder. And it is assumed that:

$$ACK\_order=mod(G\text{-}RNTI\text{-}1,3)=1;$$

$$ACK\_order=mod(G\text{-}RNTI\text{-}2,3)=2;$$

$$ACK\_order=mod(G\text{-}RNTI\text{-}3,3)=0;$$

$$ACK\_order=mod(G\text{-}RNTI\text{-}4,3)=1;$$

$$ACK\_order=mod(G\text{-}RNTI\text{-}5,3)=2.$$

It is assumed that unicast data is scheduled (the DCI is scrambled by the C-RNTI), the feedback bit is placed on the first position (or place on the last position by default)

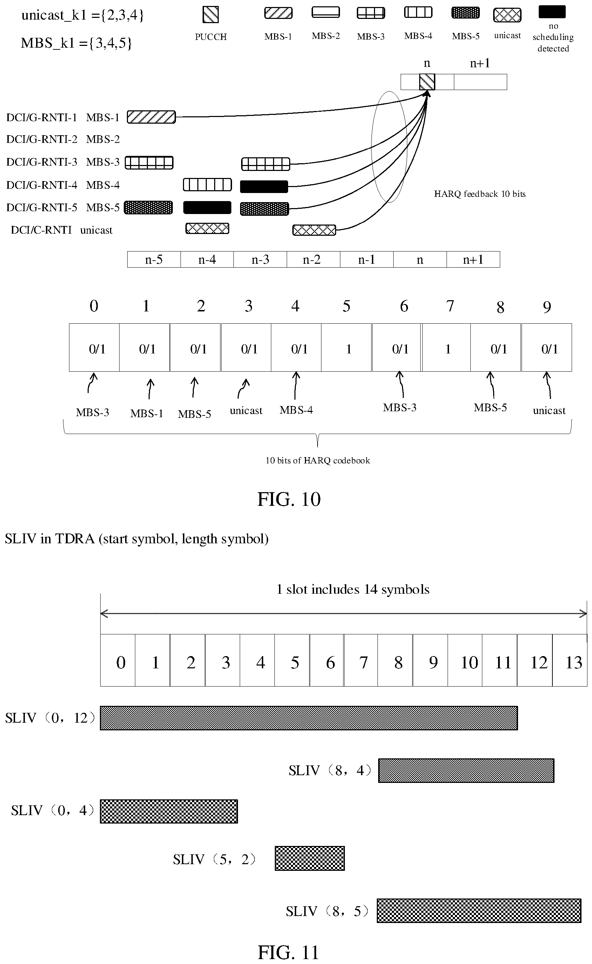

FIG. 10 is second schematic diagram of a generation of an HARQ codebook supporting PDSCH FDM. As shown in FIG. 10, the effect of saving HARQ codebook is achieved, and the consistency of the order of feedback bit information in the PDSCH FDM scenario is ensured even if DCI is missed.

The generation process of an HARQ codebook supporting PDSCH FDM is as follows.

It can be determined by the step 1 and step 2 of the example that: the HARQ codebook has 10 bits in total. The HARQ codebook has 3 bits in *slot(n-5)*, has 3 bits in *slot(n-4)*, has 3 bits in *slot(n-3)*, and has 1 bit in *slot(n-2)*; the situation of feedback HARQ bit of each slot is as follows.

In *slot(n-5)*, the information of scheduling PDSCH in the slot(*n-5*) is received: when MBS-1 is scheduled (DCI is scrambled by G-RNTI-1), the G-RNTI is associated to calculate the ACK order to be 1; when MBS-3 is scheduled (DCI is scrambled by G-RNTI-3), the G-RNTI is associated to calculate the ACK order to be 0; when MBS-5 is scheduled (DCI is scrambled by G-RNTI-5), the G-RNTI is associated to calculate the ACK order to be 2. As such the HARQ codebook bits are (0-2), and an order of placing the HARQ codebooks is: MBS-3, MBS-1, MBS-2.

In slot(n-4), the information of scheduling PDSCH in the slot is received: when MBS-4 is scheduled (DCI is scrambled by G-RNTI-4), the G-RNTI is associated to calculate the ACK order to be 1; when a scheduled service is a unicast service (DCI is scrambled by C-RNTI), the C-RNTI is associated to calculate the ACK order to be 0 (the default scheduling position of unicast is 0). As such the HARQ codebook bits are (3-5), and the order of placing the HARQ codebook is: unicast, MBS-4, NAK.

In slot(n-3), the information of scheduling PDSCH in the slot is received: when MBS-3 is scheduled (DCI is scrambled by G-RNTI-3), the G-RNTI is associated to calculate the ACK order to be 0; when MBS-5 is scheduled (DCI is scrambled by G-RNTI-5), the G-RNTI is associated to calculate the ACK order to be 2. As such the HARQ codebook bits are (6-8), and the order of placing the HARQ codebook is: MBS-3, NAK, MBS-5.

In slot(n-2), the information of scheduling PDSCH in the slot is received: when a scheduled service is a unicast service (DCI is scrambled by C-RNTI), the C-RNTI is associated to calculate the ACK order to be 0 (the default scheduling position of unicast is 0). As such the HARQ codebook bit is (9), and the decoding result of the unicast is placed accordingly.

It should be noted that the example adopts a manner of RNTI association, which has certain restrictions on scheduling service data. For example, in case that MBS-3 and unicast service are received in one slot, the UE cannot determine the order of feedback HARQ codebook. Hence, when scheduling, it needs to be limited that MBS-3 and unicast service does not appear in one slot.

Note: the example adopts the manner of associating RNTI to determine an order of feedback bits of scheduled PDSCH, which can also be determined by adopting a manner of associating information in scheduling DCI as follows.

Mode 1: control resource set ID (CORESET ID)

CORESET is a candidate space for transmitting PDCCH. DCI is transmitted on PDCCH. Each PDCCH is associated with one CORESET. The feedback order of HARQ codebook can be determined based on the CORESET ID where the DCI scheduling the PDSCH is located. For example, in case that an FDM of a PDSCH is 2, the feedback order in the slot is: *ACK order = mod(CORESET ID,2)*.

Mode 2: search space ID: search space is used to define PDCCH monitoring occasions for unicast or MBS. The feedback order of HARQ codebook can be determined based on search space ID where the DCI scheduling the PDSCH is located. For example, in case that the FDM of the PDSCH is 2, the feedback order in the slot is: *ACK order = mod(search space ID,2)*.

Mode 3: PDSCH frequency domain resource information: frequency domain resource information is frequency domain parameters for scheduling PDSCH, and the feedback order of HARQ codebook can be determined based on the parameters. For example, a start location of frequency domain resource is *PRB_start*, a bandwidth of the system is B, in case that the FDM of the PDSCH is 3, the feedback order in the slot is: $\text{ACK order} = \lfloor 3*PRB\_start/(B) \rfloor$, where $\lfloor \rfloor$ is the operation of round down. That is: in case that the start location of frequency domain resource is less than or equal to 1/3 of the bandwidth, *ACK order =0*; in case that the start location of frequency domain resource is greater than 1/3 and less than 2/3 of the bandwidth, *ACK order =1*; and in case that the start location of frequency domain resource is greater or equal to 2/3 of the bandwidth and less than the bandwidth, *ACK order =2*.

Example 3:

For the convenience of demonstrating the method, in example 1/example 2, it is assumed that the UE only supports a scenario where there is FDM of multiple PDSCH in one slot. In case that the UE capability supports TDM in one slot at the same time, a calculation of number of bits fed back in each slot and order of feedback need to be further enhanced:

(Added in step 2 of example 1/example 2) Step 2: determining, based on the *k1* parameter set and the FDM capability, the number of HARQ codebook bits needed to be fed back in each slot.

The calculation of the number of occasions for candidate PDSCH reception of HARQ codebook needed to be fed back in each PDSCH scheduled slot is modified as (method A):

$$MA^{HARQ-ACK}_{slot(n-i)} = TDRA\_comput_{slot(n-i)} * min(count_{slot(n-i)}, numFDM);$$

where *TDRA_comput* is a maximum number of PDSCH for TDM calculated based on time domain resource assign (TDRA) table (a number of non-overlapping PDSCH in time domain); in case that there is only MBS data scheduled in corresponding slots, the TDRA represents a TDRA table configured for MBS, in case that there is only unicast service data scheduled in corresponding slots, the TDRA represents a TDRA table configured for unicast service, and in case that there is MBS data and unicast service data scheduled in corresponding slots, the TDRA represents a union set of TDRA tables configured for MBS and unicast service.

FIG. 11 is a first schematic diagram of a start and length indicator value (SLIV) instance in TDRA. As shown in FIG. 11, where the TDRA table includes one or multiple SLIV information items, and each item includes a start symbol and a length symbol.

Taking *numFDM=2* for example, different situations are described.

Case 1: in case that there is only MBS data scheduled in corresponding slots, the TDRA represents the TDRA table configured for MBS.

If there is *time domain list {(start: 0, length:12), (start:8; length :4)}* in the TDRA table.

According to the related art, it can be calculated that: *TDRA_comput* = 1.

Case 2: in case that there is only unicast data scheduled in corresponding slots, the TDRA represents the TDRA table configured for unicast.

If there is *time_domain_list {(start: 0, length: 4), (start:5; length :2); (start:8; length :5)}* in the TDRA table.

According to the related art, it can be calculated that: *TDRA_comput* = 3.

Case 3: in case that there is MBS data and unicast data scheduled in corresponding slots, the TDRA represents a union set of TDRA tables configured for MBS and unicast service.

According to the related art, it can be calculated that: *TDRA_comput* = 3.

According to the above calculation, the number of occasions for candidate PDSCH reception of HARQ needed to be fed back on each slot in the above example 1 can be determined as follows:

$$MA^{HARQ-ACK}_{slot(n-5)} = 1 * min(2,2) = 2;$$

$$MA^{HARQ-ACK}_{slot(n-4)} = 3 * min(3,2) = 6;$$

$$MA^{HARQ-ACK}_{slot(n-3)} = 3 * min(3,2) = 6;$$

$$MA_{slot(n-3)}^{HARQ-ACK} = 3 * min(1,2) = 3.$$

For determining the feedback order of HARQ codebooks of multiple candidate PDSCH in a slot, a difference between the method A in example 3 and the method in example 1 or example 2 is that: one *ACK order* may corresponds to 2 or multiple (equals to the value of the above *TDRA_comput*) numbers of occasions for candidate PDSCH reception, and may be determined based on the start position and end position in time domain, the detailed manner is the same as the related arts, which is not repeated herein.

Example 4:

For the convenience of demonstrating the method, in example 1 or example 2, it is assumed that the UE only supports the scenario where there is FDM of multiple PDSCH in one slot. In case that the UE capability supports TDM in one slot at the same time (such as: supports a TDM of 2 PDSCH and an FDM of 2 PDSCH), the calculation of number of bits fed back in each slot needs to be further enhanced.

(Added in step 2 of example 1 or example 2) Step 2: based on the *k1* parameter set and the FDM capability, determining the number of HARQ codebook bits needed to be fed back in each slot.

The calculation of the number of occasions for candidate PDSCH reception of HARQ codebook needed to be fed back in each PDSCH scheduling slot is modified as (method B).

Since an FDM of unicast PDSCH is not supported, with respect to example 3, for the scenario of "there is MBS data and unicast data scheduled in corresponding slots", the method can be further improved.

$$MA_{slot(n-i)}^{HARQ-ACK} = max(A, B),$$

where *max()* represents the operation of taking the maximum value; *A* represents the number of occasions for candidate PDSCH reception of HARQ codebook needed to be fed back when only MBS PDSCH is scheduled; B represents the number of occasions for candidate PDSCH reception of HARQ codebook needed to be fed back when MBS and unicast PDSCH is scheduled.

The manner of calculating *A* is as follows:
Mode 1:

$$A = numFDM * TDRA\_comput$$

where *TDRA_comput* is calculated based on a time domain scheduling information table of MBS. The meaning of the above formula is that the number of occasions for candidate PDSCH reception of HARQ codebook needed to be fed back equals to "the number of PDSCH capable of TDM" multiplied by "the number of PDSCH capable of FDM".

The manner of calculating B is as follows.

Mode 1: merging TDRA for unicast service and MBS, and calculating the value of *uTDRA_comput* after the merging.

Mode 2:

$$B = uTDRA\_comput + (numFDM - 1) * TDRA\_comput$$

That is: when both MBS and unicast service are transmitted, a number of HARQ codebook needed to be fed back is a sum of a maximum number of unicast PDSCH for TDM and a number of MBS PDSCH for an FDM of number *(numFDM-1)*.

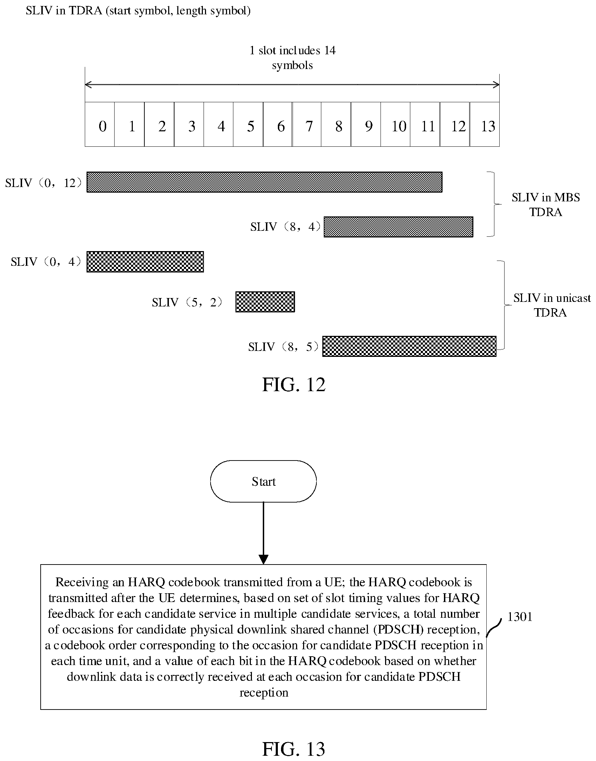

For example:
Assuming *NumFDM =2*, FIG. 12 is a second schematic diagram of a SLIV example in TDRA, the TDRA for unicast service and MBS is shown in FIG. 12.

For MBS, the TDRA table is: *time domain list {(start: 0, length:12), (start:8; length :4)}*.

For unicast service, the TDRA table is: *time domain list { (start: 0, length:4), (start:5; length :2); (start:8; length :5)}*.

According to the related art, calculating the number of PDSCH capable of TDM, for MBS, the value is: *TDRA_comput* = 1.

For a combination of MBS and unicast: *uTDRA_comput* = 3.

Then: *A = numFDM * TDRA_comput = 2.*

*B = uTDRA_comput + (numFDM - 1) * TDRA_comput = 4.*

According to the above manner of calculation, the number of occasions for candidate PDSCH reception of HARQ needed to be fed back in slot number *(n-4)/(n-3)* in the above example 3 can be determined as:

$$O_{slot(n-i)}^{HARQ-ACK} = max(A, B) = 4$$
,

that is, 4 HARQ codebook of PDSCH need to be fed back. Comparing to the value of 6 in example 3, a feedback of 2 HARQ codebook of PDSCH is saved.

Example 5:

In example 3, a situation where a TDM capability is limited is not considered, that is, determining a number of PDSCH based on the maximum number of occasions for candidate PDSCH reception calculated by the TDRA table. In this example, the situation where the TDM capability is limited is considered, and the occasions for candidate PDSCH reception is calculated.

(Enhancement of the manner in example for calculating *MA*) Step 2: determining, based on the *k1* parameter set and the FDM capability, the number of HARQ codebook bits needed to be fed back in each slot.

The calculation of the number of occasions for candidate PDSCH reception of HARQ codebook needed to be fed back in each PDSCH scheduling slot is modified as:

$$MA_{slot(n-i)}^{HARQ-ACK} = min(numTDM, TDRA\_comput_{slot(n-i)}) * min(count_{slot(n-i)}, numFDM);$$

where *NumTDM* is a maximum number of PDSCH for TDM, which is indicated by the base station or reported by a UE capability. *TDRA_comput* is a maximum number of PDSCH for TDM calculated by the TDRA table, where the TDRA table is configured for MBS, configured for unicast service, or configured for both MBS and unicast service; where a TDRA list includes 1 or multiple SLIV information items, and each item includes the start symbol and the length symbol.

Taking *numTDM=2, numFDM=2* for example, different situations are described below.

Mode 1: in case that there is only MBS data scheduled in corresponding slots, the TDRA represents the TDRA table configured for MBS:

If there is *time_domain_list {(start: 0, length: 12), (start: 8; length: 4)}* in the TDRA table.

According to the related arts, it can be calculated that: *TDRA_comput = 1.*

Mode 2: in case that there is only unicast data scheduled in corresponding slots, the TDRA represents the TDRA table configured for unicast.

If there is *time domain list {(start: 0, length: 4), (start: 5; length: 2); (start: 8; length: 5)}* in the TDRA table.

According to the related arts, it can be calculated that: *TDRA_comput = 3.*

Mode 3: in case that there is MBS data and unicast data scheduled in corresponding slots, the TDRA represents the union set of TDRA tables configured for MBS and unicast:

According to the related art, it can be calculated that: *TDRA_comput = 3.*

According to the above calculation, the number of occasions for candidate PDSCH reception of HARQ needed to be fed back on each slot in the above example 1 can be determined as follows:

$$MA_{slot(n-5)}^{HARQ-ACK} = min(2,1) * min(2,2) = 2;$$

$$MA_{slot(n-4)}^{HARQ-ACK} = min(2,3) * min(3,2) = 4;$$

$$MA_{slot(n-3)}^{HARQ-ACK} = min(2,3) * min(3,2) = 4;$$

$$MA_{slot(n-3)}^{HARQ-ACK} = min(2,3) * min(1,2) = 2.$$

In case that multiple PDSCH multiplexing is supported in a slot (2 TDM and 2 PDSCH), an expanded indication of feedback order needs to be indicated by a number of multiplexed PDSCH, such as an indication in DCI of MBS, which needs 2 bits, for the HARQ codebook feedback of unicast, the indication also needs to be indicated by the feedback order. The detailed manner is similar to that in example 1/example 2, which is not repeated herein.

FIG. 13 is a schematic flowchart of a method for receiving a hybrid automatic repeat request (HARQ) codebook according to an embodiment of the present application; As shown in FIG. 13, the present application provides a method for receiving the HARQ codebook, where the method may be performed by a network side device, such as a base station. The method includes:

Step 1301: receiving an HARQ codebook transmitted from a LTE; the HARQ codebook is transmitted after the UE determines, based on set of slot timing values for HARQ feedback for each candidate service in multiple candidate services, a total number of occasions for candidate physical downlink shared channel (PDSCH) reception, a codebook order corresponding to the occasion for candidate PDSCH reception in each time unit, and a value of each bit in the HARQ codebook based on whether downlink data is correctly received at each occasion for candidate PDSCH reception.

In an embodiment, before the receiving an HARQ codebook transmitted from the UE, the method further includes:

transmitting first information, the first information is used for indicating the codebook order corresponding to the occasions for candidate PDSCH reception in each time unit.

In an embodiment, the first information is included in downlink control information (DCI).

In an embodiment, the first information is associated with one of the followings:

a radio network temporary identity (RNTI) used for scrambling downlink data on an occasion for candidate PDSCH reception;
a control resource set (CORESET) of physical downlink control channel (PDCCH) for transmitting DCI;
a search space of PDCCH for transmitting DCI;
a start location of PDSCH in frequency domain; and
a time domain resource allocation (TDRA).

The method for receiving the HARQ codebook according to an embodiment of the present application can refer to the above-mentioned embodiment of the method for transmitting the HARQ codebook performed by the UE, and can achieve the same effect, the same parts and beneficial effects are not repeated herein.

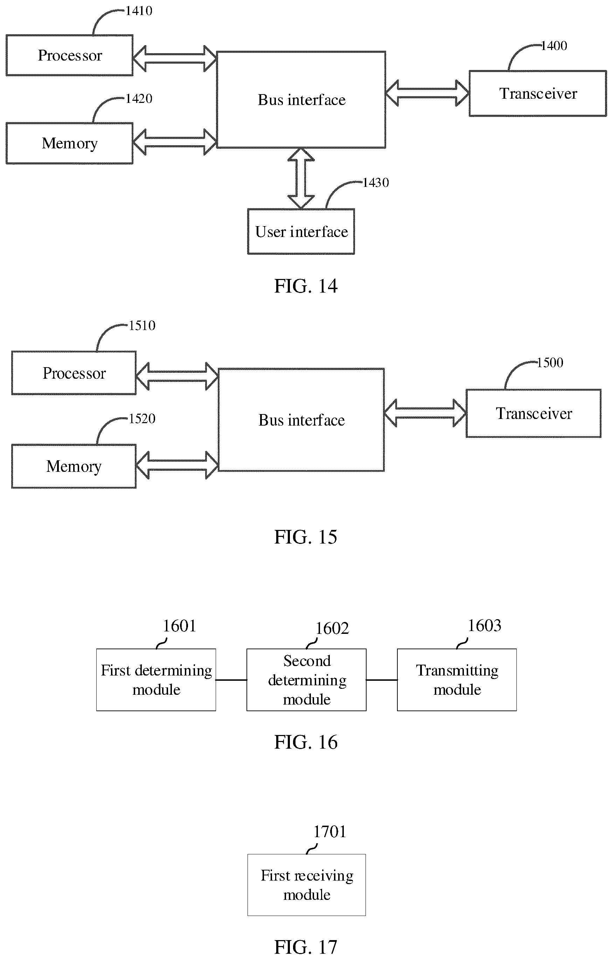

FIG. 14 is a schematic structural diagram of a UE according to an embodiment of the present application. As shown in FIG. 14, the UE includes a memory 1420, a transceiver 1400 and a processor 1410:

the memory 1420 is used for storing computer programs; the transceiver 1400 is used for transmitting and receiving data under control of the processor 1410; and the computer programs, when executed by the processor 1410, cause the UE to perform the following operations:

determining a total number of occasions for candidate physical downlink shared channel (PDSCH) reception based on sets of slot timing values for hybrid automatic repeat request (HARQ) feedback for multiple candidate services, and determining a codebook order corresponding to the occasions for candidate PDSCH reception in each time unit; determining a value of each bit in the HARQ codebook based on whether downlink data is correctly received at each occasion for candidate PDSCH reception; and transmitting the HARQ codebook.

The transceiver 1400 is used for transmitting and receiving data under control of the processor 1410.

In FIG. 14, a bus architecture may include any number of interconnected buses and bridges, linked together by various circuits of one or more processors represented by processor 1410 and circuits of memories represented by memory 1420. The bus architecture may also link various other circuits such as peripheral devices, regulators and power management circuits, which are well known in the art, and will not be described herein. The bus architecture provides an interface. The transceiver 1400 may be multiple components, that is, including a transmitter and a receiver, providing units for communication with various other devices on transmission media such as wireless channels, wired channels, optical fibers, etc. For different user devices, the user interface 1030 may also be an interface capable of connecting external and internal devices, including but not limited to small keyboards, displays, speakers, microphones, joysticks, etc.

The processor 1410 is used for managing the bus architecture and general processing. The memory 1420 may store data used by the processor 1410 in case of performing operations.

In an embodiment, the processor 1410 may be a central processing unit (CPU), an application specific integrated circuit (ASIC), a field-programmable gate array (FPGA), or a complex programmable logic device (CPLD). The processor 1410 may also adopt a multi-core architecture.

The processor is used for reading the computer program in the memory and executing any of the method provided by the embodiments in the present application according to obtained executable instructions. The processor and the memory may be physically separated.

In an embodiment, in case that at most one time division multiplexing (TDM) is supported in one time unit, the determining the total number of occasions for candidate PDSCH reception based on the sets of slot timing values for HARQ feedback for multiple candidate services include:

determining, based on a set of slot timing values for HARQ feedback for each candidate service, the union set of sets of slot timing values for HARQ feedback for all candidate services;

determining, based on the number of occasions for candidate PDSCH reception for FDM supported by the UE and/or the maximum number of occasions for candidate PDSCH reception in frequency domain in each time unit of the union set, the number of occasions for candidate PDSCH reception in each time unit; and

determining, based on the number of occasions for candidate PDSCH reception in all time units, the total number of occasions for candidate PDSCH reception.

In an embodiment, in case that the number of occasions for candidate PDSCH reception in each time unit is determined based on the number of occasions for candidate PDSCH reception for FDM supported by the UE and the maximum number of occasions for candidate PDSCH reception in frequency domain in each time unit of the union set, the number of occasions for candidate PDSCH reception in each time unit may be determined by the following formula:

$$MA_{t(n-i)} = min(count_{t(n-i)}, numFDM);$$

where $MA_{t(n-i)}$ is the number of occasions for candidate PDSCH reception in the (n-i)-th time unit, $count_{t(n-i)}$ is the maximum number of occasions for candidate PDSCH reception in frequency domain in the (n-i)-th time unit and $numFDM$ is the number of occasions for candidate PDSCH reception for FDM supported by the UE.

In an embodiment, in case that at most one FDM is supported in one time unit, the determining the total number of occasions for candidate PDSCH reception based on the sets of slot timing values for HARQ feedback for multiple candidate services include:

determining, based on the set of slot timing values for HARQ feedback for each candidate service, the union set of sets of slot timing values for HARQ feedback for all candidate services;

determining, based on the number of occasions for candidate PDSCH reception for TDM supported by the UE and/or a maximum number of non-overlapping occasions for candidate PDSCH reception in time domain in each time unit of the union set, the number of occasions for candidate PDSCH reception in each time unit; and

determining, based on the number of occasions for candidate PDSCH reception in all time units, the total number of occasions for candidate PDSCH reception.

In an embodiment, in case that the number of occasions for candidate PDSCH reception in each time unit is determined based on the number of occasions for candidate PDSCH reception for TDM supported by the UE and the maximum number of non-overlapping occasions for candidate PDSCH reception in time domain in each time unit of the union set, the number of occasions for candidate PDSCH reception in each time unit may be determined by the following formula:

$$MA_{t(n-i)} = min(TDRA\_comput_{t(n-i)}, numTDM);$$

where $MA_{t(n-i)}$ is the number of occasions for candidate PDSCH reception in the (n-i)-th time unit, $TDRA\_comput_{t(n-i)}$ is the maximum number of non-overlapping occasions for candidate PDSCH reception in time domain in the (n-i)-th time unit and $numTDM$ is the number of occasions for candidate PDSCH reception for TDM supported by the UE.

In an embodiment, in case that the multiple candidate services only include MBS, the determining the total number of occasions for candidate PDSCH reception based on the sets of slot timing values for HARQ feedback for multiple candidate services include:

determining, based on the set of slot timing values for HARQ feedback for each candidate service, the union set of sets of slot timing values for HARQ feedback for all candidate services;

determining, based on the number of occasions for candidate PDSCH reception for FDM supported by the UE and the number of occasions for candidate PDSCH reception for TDM supported by the UE, the number of occasions for candidate PDSCH reception in each time unit; and

determining, based on the number of occasions for candidate PDSCH reception in all time units, the total number of occasions for candidate PDSCH reception.

In an embodiment, the number of occasions for candidate PDSCH reception in each time unit may be determined by the following formula:

$$MA_{t(n-i)} = numTDM * numFDM;$$

where $MA_{t(n-i)}$ is the number of occasions for candidate PDSCH reception in the (n-i)-th time unit, *numTDM* is the number of occasions for candidate PDSCH reception for TDM supported by the UE and *numFDM* is the number of occasions for candidate PDSCH reception for FDM supported by the UE.

In an embodiment, in case that the multiple candidate services only include MBS, the determining the total number of occasions for candidate PDSCH reception based on the sets of slot timing values for HARQ feedback for multiple candidate services include:

> determining, based on the set of slot timing values for HARQ feedback for each candidate service, the union set of sets of slot timing values for HARQ feedback for all candidate services;
> determining the number of occasions for candidate PDSCH reception in each time unit based on the maximum number of occasions for candidate PDSCH reception in frequency domain in each time unit of the union set and the maximum number of non-overlapping occasions for candidate PDSCH reception in time domain in each time unit of the union set; and
> determining, based on the number of occasions for candidate PDSCH reception in all time units, the total number of occasions for candidate PDSCH reception.

The number of occasions for candidate PDSCH reception in each time unit may be determined by the following formula:

$$MA_{t(n-i)} = TDRA\_comput_{t(n-i)} * count_{t(n-i)};$$

where $MA_{t(n-i)}$ is the number of occasions for candidate PDSCH reception in the (n-i)-th time unit, $TDRA\_comput_{t(n-i)}$ is the maximum number of non-overlapping occasions for candidate PDSCH reception in time domain in the (n-i)-th time unit and $count_{t(n-i)}$ is the maximum number of occasions for candidate PDSCH reception in frequency domain in the *(n-i)*-th time unit.

In an embodiment, in case that the multiple candidate services only include MBS, the determining the total number of occasions for candidate PDSCH reception based on the sets of slot timing values for HARQ feedback for multiple candidate services include:

> determining, based on the set of slot timing values for HARQ feedback for each candidate service, the union set of sets of slot timing values for HARQ feedback for all candidate services;
> determining the number of occasions for candidate PDSCH reception in each time unit based on the number of occasions for candidate PDSCH reception for FDM supported by the UE, the number of occasions for candidate PDSCH reception for TDM supported by the UE, the maximum number of occasions for candidate PDSCH reception in frequency domain in each time unit of the union set and the maximum number of non-overlapping occasions for candidate PDSCH reception in time domain in each time unit of the union set; and
> determining, based on the number of occasions for candidate PDSCH reception in all time units, the total number of occasions for candidate PDSCH reception.

In an embodiment, the number of occasions for candidate PDSCH reception in each time unit may be determined by the following formula:

$$MA_{t(n-i)} = TDRA\_comput_{t(n-i)} * min(count_{t(n-i)}, numFDM);$$

where $MA_{t(n-i)}$ is the number of occasions for candidate PDSCH reception in the (n-i)-th time unit, $TDRA\_comput_{t(n-i)}$ is the maximum number of non-overlapping occasions for candidate PDSCH reception in time domain in the (n-i)-th time unit, $count_{t(n-i)}$ is the maximum number of occasions for candidate PDSCH reception in frequency domain in the *(n-i)*-th time unit and *numFDM* is the number of occasions for candidate PDSCH reception for FDM supported by the UE.

In an embodiment, in case that the multiple candidate services include MBS and unicast service, the determining the total number of occasions for candidate PDSCH reception based on the sets of slot timing values for HARQ feedback for multiple candidate services include:

determining, based on the set of slot timing values for HARQ feedback for each candidate service, the union set of sets of slot timing values for HARQ feedback for all candidate services;

determining the number of occasions for candidate PDSCH reception in each time unit based on the number of occasions for candidate PDSCH reception for FDM supported by the UE, the maximum number of occasions for candidate PDSCH reception in frequency domain in each time unit of the union set, a maximum number of non-overlapping occasions for candidate PDSCH reception in time domain in time units only including MBS of the union set, a maximum number of non-overlapping occasions for candidate PDSCH reception in time domain in time units only including unicast service of the union set and a maximum number of non-overlapping occasions for candidate PDSCH reception in time domain in time units including MBS and unicast service of the union set; and

determining, based on the number of occasions for candidate PDSCH reception in all time units, the total number of occasions for candidate PDSCH reception.

In an embodiment, the number of occasions for candidate PDSCH reception in each time unit may be determined by the following formula:

$$MA_{t(n-i)} = \begin{cases} B & , & \text{when the } (n-i)-\text{th time unit only includes MBS} \\ max \ (B, \ C) & , & \text{when the } (n-i)-\text{th time unit includes MBS and unicast service} \\ D & , & \text{when the } (n-i)-\text{th time unit only includes unicast service} \end{cases},$$

$$B = min(count_{t(n-i)}, numFDM) * MBS\_TDRA\_comput_{t(n-i)},$$

$$C = unite\_TDRA\_comput_{t(n-i)}$$
$$+$$
$$[min(count_{t(n-i)}, numFDM) - 1] * MBS\_TDRA\_comput_{t(n-i)}, \text{ and}$$

$$D = unicast\_TDRA\_comput_{t(n-i)}$$

where $MA_{t(n-i)}$ is the number of occasions for candidate PDSCH reception in the (n-i)-th time unit, $count_{t(n-i)}$ is the maximum number of occasions for candidate PDSCH reception in frequency domain in the (n-i)-th time unit, $numFDM$ is the number of occasions for candidate PDSCH reception for FDM supported by the UE, $MBS\_TDRA\_comput_{t(n-i)}$ is the maximum number of non-overlapping occasions for candidate PDSCH reception in time domain in a time unit only including MBS of the union set, $unite\_TDRA\_comput_{t(n-i)}$ is the maximum number of non-overlapping occasions for candidate PDSCH reception in time domain in a time unit including MBS and unicast service of the union set and $unicast\_TDRA\_comput_{t(n-i)}$ is the maximum number of non-overlapping occasions for candidate PDSCH reception in time domain in a time unit only including unicast service of the union set.

In an embodiment, the determining the codebook order corresponding to the occasions for candidate PDSCH reception in each time unit includes:

receiving first information, where the first information is used for indicating the codebook order corresponding to the occasions for candidate PDSCH reception in each time unit; and

determining the codebook order corresponding to the occasions for candidate PDSCH reception in each time unit based on the first information.

In an embodiment, the first information is included in downlink control information (DCI).

In an embodiment, the first information is associated with one of the followings:

a radio network temporary identity (RNTI) used for scrambling downlink data on an occasion for candidate PDSCH reception;

a control resource set (CORESET) of physical downlink control channel (PDCCH) for transmitting DCI;

a search space of PDCCH for transmitting DCI;

a start location of PDSCH in frequency domain; and

a time domain resource allocation (TDRA).

In an embodiment, in case that a scheduled service is a unicast service, an HARQ feedback order corresponding to the unicast service is a given order.

It should be noted that, the UE provided by an embodiment of the present application, can realize all the steps and methods in the above embodiments performed by the UE, and achieve the same technical effect, the same parts and beneficial effects are not repeated herein.

FIG. 15 is a schematic structural diagram of a network side device according to an embodiment of the present application; As shown in FIG. 15, the network side device includes: a memory 1520, a transceiver 1500 and a processor 1510:

the memory 1520 is used for storing computer programs; the transceiver 1500 is used for transmitting and receiving data under control of the processor 1510; and the computer programs, when executed by the processor 1510 cause the network side device to perform the following operations:

receiving an HARQ codebook transmitted from a UE; the HARQ codebook is transmitted after the UE, based on set of slot timing values for HARQ feedback for each candidate service in multiple candidate services, determines a total number of occasions for candidate physical downlink shared channel (PDSCH) reception, a codebook order corresponding to the occasion for candidate PDSCH reception in each time unit, and a value of each bit in the HARQ codebook based on whether downlink data is correctly received at each occasion for candidate PDSCH reception.

The transceiver 1500 is used for transmitting and receiving data under control of the processor 1510.

In FIG. 15, a bus architecture may include any number of interconnected buses and bridges, linked together by various circuits of one or more processors represented by processor 1510 and circuits of memories represented by memory 1520. The bus architecture may also link various other circuits such as peripheral devices, regulators and power management circuits, which are well known in the art, and will not be described herein. The bus architecture provides an interface. The transceiver 1500 may be multiple components, that is, including a transmitter and a receiver, providing units for communication with various other devices on transmission media such as wireless channels, wired channels, optical fibers, etc. The processor 1510 is used for managing the bus architecture and general processing. The memory 1520 may store data used by the processor 1510 in case of performing operations.

The processor 1510 may be a central processing unit (CPU), an application specific integrated circuit (ASIC), a field-programmable gate array (FPGA), or a complex programmable logic device (CPLD). The processor 1410 may also adopt a multi-core architecture.

In an embodiment, before the receiving an HARQ codebook transmitted from the UE, the computer programs, when executed by the processor 1510 cause the network side device to further:

transmit first information, where the first information is used for indicating the codebook order corresponding to the occasions for candidate PDSCH reception in each time unit.

In an embodiment, the first information is included in downlink control information (DCI).

In an embodiment, the first information is associated with one of the followings:

a radio network temporary identity (RNTI) used for scrambling downlink data on an occasion for candidate PDSCH reception;
a control resource set (CORESET) of physical downlink control channel (PDCCH) for transmitting DCI;
a search space of PDCCH for transmitting DCI;
a start location of PDSCH in frequency domain; and
a time domain resource allocation (TDRA).

It should be noted that, the network side device provided by an embodiment of the present application, can realize all the steps and methods in the above embodiments performed by the network side device, and achieve the same technical effect, the same parts and beneficial effects are not repeated herein.

FIG. 16 is a schematic structural diagram of an apparatus for transmitting HARQ codebook provided by an embodiment of the present application. As shown in FIG. 16, the present application provides an apparatus for transmitting HARQ codebook, including a first determining module 1601, a second determining module 1602 and a transmitting module 1603, where:

the first determining module 1601 is used for determining a total number of occasions for candidate physical downlink shared channel (PDSCH) reception based on sets of slot timing values for HARQ feedback for multiple candidate services, and determining a codebook order corresponding to the occasions for candidate PDSCH reception in each time unit; the second determining unit 1602 is used for determining a value of each bit in the HARQ codebook based on whether downlink data is correctly received at each occasion for candidate PDSCH reception; and the transmitting module 1603 is used for transmitting the HARQ codebook.

In an embodiment, in case that at most one time division multiplexing (TDM) is supported in one time unit, the first determining module includes a first determining unit, a second determining unit and a third determining unit;

the first determining unit is used for determining, based on a set of slot timing values for HARQ feedback for each candidate service, the union set of sets of slot timing values for HARQ feedback for all candidate services;
the second determining unit is used for determining, based on the number of occasions for candidate PDSCH reception for FDM supported by the UE and/or the maximum number of occasions for candidate PDSCH reception in frequency domain in each time unit of the union set, the number of occasions for candidate PDSCH reception in each time unit; and
the third determining unit is used for determining, based on the number of occasions for candidate PDSCH reception in all time units, the total number of occasions for candidate PDSCH reception.

In an embodiment, in case that the number of occasions for candidate PDSCH reception in each time unit is determined based on the number of occasions for candidate PDSCH reception for FDM supported by the UE and the maximum number of occasions for candidate PDSCH reception in frequency domain in each time unit of the union set, the number of occasions for candidate PDSCH reception in each time unit may be determined by the following formula:

$$MA_{t(n-i)} = min(count_{t(n-i)}, numFDM);$$

where $MA_{t(n-i)}$ is the number of occasions for candidate PDSCH reception in the (n-i)-th time unit, $count_{t(n-i)}$ is the maximum number of occasions for candidate PDSCH reception in frequency domain in the (n-i)-th time unit and $numFDM$ is the number of occasions for candidate PDSCH reception for FDM supported by the UE.

In an embodiment, in case that at most one FDM is supported in one time unit, the first determining module includes a fourth determining unit, a fifth determining unit and a sixth determining unit;

the fourth determining unit is used for determining, based on the set of slot timing values for HARQ feedback for each candidate service, the union set of sets of slot timing values for HARQ feedback for all candidate services;
the fifth determining unit is used for determining, based on the number of occasions for candidate PDSCH reception for TDM supported by the UE and/or a maximum number of non-overlapping occasions for candidate PDSCH reception in time domain in each time unit of the union set, the number of occasions for candidate PDSCH reception in each time unit; and
the sixth determining unit is used for determining, based on the number of occasions for candidate PDSCH reception in all time units, the total number of occasions for candidate PDSCH reception.

In an embodiment, in case that the number of occasions for candidate PDSCH reception in each time unit is determined based on the number of occasions for candidate PDSCH reception for TDM supported by the UE and the maximum number of non-overlapping occasions for candidate PDSCH reception in time domain in each time unit of the union set, the number of occasions for candidate PDSCH reception in each time unit may be determined by the following formula:

$$MA_{t(n-i)} = min(TDRA\_comput_{t(n-i)}, numTDM);$$

where $MA_{t(n-i)}$ is the number of occasions for candidate PDSCH reception in the (n-i)-th time unit, $TDRA\_comput_{t(n-i)}$ is the maximum number of non-overlapping occasions for candidate PDSCH reception in time domain in the (n-i)-th time unit and $numTDM$ is the number of occasions for candidate PDSCH reception for TDM supported by the UE.
In an embodiment, in case that the multiple candidate services only include MBS, the first determining module includes a seventh determining unit, a eighth determining unit and a ninth determining unit;

the seventh determining unit is used for determining, based on the set of slot timing values for HARQ feedback for each candidate service, the union set of sets of slot timing values for HARQ feedback for all candidate services;
the eighth determining unit is used for determining, based on the number of occasions for candidate PDSCH reception for FDM supported by the UE and the number of occasions for candidate PDSCH reception for TDM supported by the UE, the number of occasions for candidate PDSCH reception in each time unit;
the ninth determining unit is used for determining, based on the number of occasions for candidate PDSCH reception in all time units, the total number of occasions for candidate PDSCH reception.

In an embodiment, the number of occasions for candidate PDSCH reception in each time unit may be determined by the following formula:

$$MA_{t(n-i)} = numTDM * numFDM;$$

where $MA_{t(n-i)}$ is the number of occasions for candidate PDSCH reception in the (n-i)-th time unit, $numTDM$ is the number of occasions for candidate PDSCH reception for TDM supported by the UE and $numFDM$ is the number of occasions for candidate PDSCH reception for FDM supported by the UE.

In an embodiment, in case that the multiple candidate services only include MBS, the first determining module includes a tenth determining unit, a eleventh determining unit and a twelfth determining unit;

the tenth determining unit is used for determining, based on the set of slot timing values for HARQ feedback for each candidate service, the union set of sets of slot timing values for HARQ feedback for all candidate services;
the eleventh determining unit is used for determining the number of occasions for candidate PDSCH reception in each time unit based on the maximum number of occasions for candidate PDSCH reception in frequency domain in each time unit of the union set and the maximum number of non-overlapping occasions for candidate PDSCH reception in time domain in each time unit of the union set;
the twelfth determining unit is used for determining, based on the number of occasions for candidate PDSCH reception in all time units, the total number of occasions for candidate PDSCH reception.

In an embodiment, the number of occasions for candidate PDSCH reception in each time unit may be determined by the following formula:

$$MA_{t(n-i)} = TDRA\_comput_{t(n-i)} * count_{t(n-i)};$$

where $MA_{t(n-i)}$ is the number of occasions for candidate PDSCH reception in the (n-i)-th time unit, $TDRA\_comput_{t(n-i)}$ is the maximum number of non-overlapping occasions for candidate PDSCH reception in time domain in the (n-i)-th time unit and $count_{t(n-i)}$ is the maximum number of occasions for candidate PDSCH reception in frequency domain in the (n-i)-th time unit.

In an embodiment, in case that the multiple candidate services only include MBS, the first determining module includes a thirteenth determining unit, a fourteenth determining unit and a fifteenth determining unit;

the thirteenth determining unit is used for determining, based on the set of slot timing values for HARQ feedback for each candidate service, the union set of sets of slot timing values for HARQ feedback for all candidate services;
the fourteenth determining unit is used for determining the number of occasions for candidate PDSCH reception in each time unit based on the number of occasions for candidate PDSCH reception for FDM supported by the UE, the number of occasions for candidate PDSCH reception for TDM supported by the UE, the maximum number of occasions for candidate PDSCH reception in frequency domain in each time unit of the union set and the maximum number of non-overlapping occasions for candidate PDSCH reception in time domain in each time unit of the union set; and
the fifteenth determining unit is used for determining, based on the number of occasions for candidate PDSCH reception in all time units, the total number of occasions for candidate PDSCH reception.

In an embodiment, the number of occasions for candidate PDSCH reception in each time unit may be determined by the following formula:

$$MA_{t(n-i)} = TDRA\_comput_{t(n-i)} * min(count_{t(n-i)}, numFDM);$$

where $MA_{t(n-i)}$ is the number of occasions for candidate PDSCH reception in the (n-i)-th time unit, $TDRA\_comput_{t(n-i)}$ is the maximum number of non-overlapping occasions for candidate PDSCH reception in time domain in the (n-i)-th time unit, $count_{t(n-i)}$ is the maximum number of occasions for candidate PDSCH reception in frequency domain in the (n-i)-th time unit and $numFDM$ is the number of occasions for candidate PDSCH reception for FDM supported by the UE.

In an embodiment, in case that the multiple candidate services include MBS and unicast service, the first determining module includes a sixteenth determining unit, a seventeenth determining unit and an eighteenth determining unit;

the sixteenth determining unit is used for determining, based on the set of slot timing values for HARQ feedback for each candidate service, the union set of sets of slot timing values for HARQ feedback for all candidate services;

the seventeenth determining unit is used for determining the number of occasions for candidate PDSCH reception in each time unit based on the number of occasions for candidate PDSCH reception for FDM supported by the UE, the maximum number of occasions for candidate PDSCH reception in frequency domain in each time unit of the union set, a maximum number of non-overlapping occasions for candidate PDSCH reception in time domain in time units only including MBS of the union set, a maximum number of non-overlapping occasions for candidate PDSCH reception in time domain in time units only including unicast service of the union set and a maximum number of non-overlapping occasions for candidate PDSCH reception in time domain in time units including MBS and unicast service of the union set; and

the eighteenth determining unit is used for determining, based on the number of occasions for candidate PDSCH reception in all time units, the total number of occasions for candidate PDSCH reception.

In an embodiment, the number of occasions for candidate PDSCH reception in each time unit may be determined by the following formula:

$$MA_{t(n-i)} = \begin{cases} B, & \text{when the } (n-i)-th \text{ time unit only includes MBS} \\ max \ (B, \ C), & \text{when the } (n-i)-th \text{ time unit includes MBS and unicast service}, \\ D, & \text{when the } (n-i)-th \text{ time unit only includes unicast service} \end{cases}$$

$$B = min(count_{t(n-i)}, numFDM) * MBS\_TDRA\_comput_{t(n-i)},$$
$$C = unite\_TDRA\_comput_{t(n-i)}$$
$$+$$
$$[min(count_{t(n-i)}, numFDM) - 1] * MBS\_TDRA\_comput_{t(n-i)}, and$$
$$D = unicast\_TDRA\_comput_{t(n-i)};$$

where $MA_{t(n-i)}$ is the number of occasions for candidate PDSCH reception in the (n-i)-th time unit, $count_{t(n-i)}$ is the maximum number of occasions for candidate PDSCH reception in frequency domain in the (n-i)-th time unit, $numFDM$ is the number of occasions for candidate PDSCH reception for FDM supported by the UE, $MBS\_TDRA\_comput_{t(n-i)}$ is the maximum number of non-overlapping occasions for candidate PDSCH reception in time domain in a time unit only including MBS of the union set, $unite\_TDRA\_comput_{t(n-i)}$ is the maximum number of non-overlapping occasions for candidate PDSCH reception in time domain in a time unit including MBS and unicast service of the union set and $unicast\_TDRA\_comput_{t(n-i)}$ is the maximum number of non-overlapping occasions for candidate PDSCH reception in time domain in a time unit only including unicast service of the union set.

In an embodiment, the first determining module further includes a first receiving unit and a nineteenth determining unit;

the first receiving unit is used for receiving first information, where the first information is used for indicating the codebook order corresponding to the occasions for candidate PDSCH reception in each time unit; and

the nineteenth determining unit is used for determining the codebook order corresponding to the occasions for candidate PDSCH reception in each time unit based on the first information.

In an embodiment, the first information is included in downlink control information (DCI).

In an embodiment, the first information is associated with one of the followings:

a radio network temporary identity (RNTI) used for scrambling downlink data on an occasion for candidate PDSCH reception;
a control resource set (CORESET) of physical downlink control channel (PDCCH) for transmitting DCI;
a search space of PDCCH for transmitting DCI;
a start location of PDSCH in frequency domain; and
a time domain resource allocation (TDRA).

In an embodiment, in case that a scheduled service is a unicast service, an HARQ feedback order corresponding to the unicast service is a given order.

It should be noted that, the apparatus for transmitting HARQ codebook provided by an embodiment of the present application, can realize all the steps and methods in the above embodiments performed by the UE, and achieve the same technical effect, the same parts and beneficial effects are not repeated herein.

FIG. 17 is a schematic structural diagram of an apparatus for receiving HARQ codebook according to an embodiment of the present application; As shown in FIG. 17, the present application provides an apparatus for receiving HARQ codebook, including a first receiving module 1701, where:
the first receiving module 1701 is used for receiving an HARQ codebook transmitted from a UE; the HARQ codebook is transmitted after the UE, based on set of slot timing values for HARQ feedback for each candidate service in multiple candidate services, determines a total number of occasions for candidate physical downlink shared channel (PDSCH) reception, a codebook order corresponding to the occasion for candidate PDSCH reception in each time unit, and a value of each bit in the HARQ codebook based on whether downlink data is correctly received at each occasion for candidate PDSCH reception.

The apparatus further includes a second receiving module;
the second receiving module is used for receiving a random access request transmitted from the UE, and the UE transmits the HARQ codebook after accesses a network.

In an embodiment, the apparatus further includes a first transmitting module:
the first transmitting module is used for transmitting first information, the first information is used for indicating the codebook order corresponding to the occasions for candidate PDSCH reception in each time unit.

In an embodiment, the first information is included in downlink control information (DCI).

In an embodiment, the first information is associated with one of the followings:

a radio network temporary identity (RNTI) used for scrambling downlink data on an occasion for candidate PDSCH reception;
a control resource set (CORESET) of physical downlink control channel (PDCCH) for transmitting DCI;
a search space of PDCCH for transmitting DCI;
a start location of PDSCH in frequency domain; and
a time domain resource allocation (TDRA).

It should be noted that, the apparatus for receiving HARQ codebook provided by an embodiment of the present application, can realize all the steps and methods in the above embodiments performed by the network side device, and achieve the same technical effect, the same parts and beneficial effects are not repeated herein.

It should be noted that, the division of units/modules in the embodiments of the present application is schematic, and is only a logical function division, and there can be other division manners in actual implementation. In an embodiment, the functional units in the various embodiments of the present application can be integrated into one processing unit, or each unit can exist alone physically, or two or more units can be integrated into one unit. The aforementioned integrated unit can be implemented in the form of hardware or software functional unit.

In the case that the integrated unit is implemented in the form of a software functional unit and sold or used as an independent product, it can be stored in a computer readable storage medium. Based on such understanding, the solutions of the present application in essence or a part of the solutions that contributes to the related art, or all or part of the solutions, can be embodied in the form of a software product, which is stored in a storage medium, including several instructions to cause a computer device (which can be a personal computer, server, or network device, etc.) or a processor to perform all or part of the steps of the methods described in the respective embodiments of the present application. The storage medium described above includes various media that can store program codes, such as USB flash disk, mobile hard disk, read-only memory (ROM), random access memory (RAM), magnetic disk, or optical disk.

In an embodiment, an embodiment of the present application provides a processor-readable storage medium storing a computer program that causes, when executed by a processor, the processor to perform any one of the above methods, where the method includes:

determining a total number of occasions for candidate physical downlink shared channel (PDSCH) reception based on sets of slot timing values for hybrid automatic repeat request (HARQ) feedback for multiple candidate services, and determining a codebook order corresponding to the occasions for candidate PDSCH reception in each time unit;
determining a value of each bit in the HARQ codebook based on whether downlink data is correctly received at each occasion for candidate PDSCH reception; and
transmitting the HARQ codebook.

Alternatively, the method includes:
receiving an HARQ codebook transmitted from a UE; the HARQ codebook is transmitted after the UE, based on set of slot timing values for HARQ feedback for each candidate service in multiple candidate services, determines a total number of occasions for candidate physical downlink shared channel (PDSCH) reception, a codebook order corresponding to the occasion for candidate PDSCH reception in each time unit, and a value of each bit in the HARQ codebook based on whether downlink data is correctly received at each occasion for candidate PDSCH reception.

It should be noted that, the processor readable storage medium can be any available medium or data storage device that can be accessed by the processor, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

It also should be noted that, the term "and/or" in the embodiments of the present application describes three situations of the related objects. For example, A and/or B can represent three situations: only A, A and B together, and only B. The character "/" generally represents that the two objects on two sides have a relationship of "or".

The term "multiple" in the embodiments of the present application refers to two or more, and other quantifiers are similar to it.

The solutions according to the embodiments of the present application can be applicable to various systems, for example, 5G systems. For example, the applicable systems can be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal and a network device, and can further include a core network part, such as an evolved packet system (EPS), a 5G system (5GS), and the like.

The terminal device in the embodiments of the present application can be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device can communicate with one or more core networks (CNs) via a radio access network (RAN), and the wireless terminal can be a mobile terminal device, such as a mobile phone (or cellular phone) and a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session-initiated protocol (SIP) phone, a wireless local loop (WLL) station, a personal digital assistant (PDA) and other devices. A wireless terminal device may also be called a system, a subscriber unit, a subscriber station, a mobile station, a mobile platform, a remote station, an access point, a remote terminal, an access terminal, a user terminal, a user agent, or a user device, which is not limited in the embodiments of the present application.

The network device in the embodiments of the present application can be a network side device, and the network side device can include multiple cells providing services for the terminal. Depending on the specific scenario, the network side device may be called an access point, or a device communicating with a wireless terminal device through one or more sectors on the air interface in the access network, or other names. The network device can be used for exchanging received air frames with internet protocol (IP) packets, and acting as a router between the wireless terminal device and the rest of the access network, where the rest of the access network can include an IP communication network. The network device can also coordinate attribute management for the air interface. For example, the network device in the embodiments of the present application may be a base transceiver station (BTS) in a global system for mobile communications (GSM) or a code division multiple access (CDMA), or may be a node B in a wide-band code division multiple access (WCDMA), or may be an evolutional node B (eNB or e-Node B) in a long term evolution (LTE) system, or may be a 5G gNB in 5G network architecture (next generation system), or may be a home evolved node B (HeNB), a relay node, a femto, or a pico, etc., which is not limited in the embodiments of the present application. In some network structures, the network device may include a centralized unit (CU) node and a distributed unit (DU) node, and the centralized unit and the distributed unit may be geographically separated.

A multi-input multi-output (MIMO) transmission may be performed between the network device and the terminal device by using one or more antennas. The MIMO transmission may be single-user MIMO (SU-MIMO) or multi-user MIMO (MU-MIMO). Depending on the form and number of antenna combinations, MIMO transmission can be 2D-MIMO, 3D-MIMO, FD-MIMO or massive-MIMO, and may also be diversity transmission, precoding transmission, beamforming transmission, etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof can be implemented by processor-executable instructions. These processor-executable instructions may be provided to processors of a general-purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may be stored in processor-readable memory capable of directing a computer or other programmable data processing apparatus to operate in a particular manner, and the instructions stored in the processor-readable memory may result in a manufacture including instruction means, the instruction means can perform the functions specified in one or more flows of the flowchart and/or one or more blocks of the block diagram.

These processor-executable instructions can also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations can be made in the present application without departing from the scope of the present application. Thus, provided that these modifications and variations of the present application are within the scope of the claims of the present application and their equivalents, the present application is also intended to cover such modifications and variations.

**Claims**

1. A method for transmitting a hybrid automatic repeat request, HARQ, codebook, applied to a user equipment, UE, comprising:

    determining a total number of occasions for candidate physical downlink shared channel, PDSCH, reception based on sets of slot timing values for HARQ feedback for multiple candidate services, and determining a codebook order corresponding to occasions for candidate PDSCH reception in each time unit;
    determining a value of each bit in an HARQ codebook based on whether downlink data is correctly received at each occasion for candidate PDSCH reception; and
    transmitting the HARQ codebook.

2. The method of claim 1, wherein in case that at most one time division multiplexing, TDM, is supported in one time unit, the determining the total number of occasions for candidate PDSCH reception based on the sets of slot timing values for HARQ feedback for multiple candidate services comprises:

    determining, based on a set of slot timing values for HARQ feedback for each candidate service, a union set of sets of slot timing values for HARQ feedback for all candidate services;
    determining, based on the number of occasions for candidate PDSCH reception for frequency division multiplexing, FDM, supported by the UE and/or a maximum number of occasions for candidate PDSCH reception in frequency domain in each time unit of the union set, the number of occasions for candidate PDSCH reception in each time unit; and
    determining, based on the number of occasions for candidate PDSCH reception in all time units, the total number of occasions for candidate PDSCH reception.

3. The method of claim 2, wherein in case that the number of occasions for candidate PDSCH reception in each time unit is determined based on the number of occasions for candidate PDSCH reception for FDM supported by the UE and the maximum number of occasions for candidate PDSCH reception in frequency domain in each time unit of the union set, the number of occasions for candidate PDSCH reception in each time unit is determined by the following formula:

$$MA_{t(n-i)} = min(count_{t(n-i)}, numFDM);$$

wherein $MA_{t(n-i)}$ is the number of occasions for candidate PDSCH reception in (n-i)-th time unit, $count_{t(n-i)}$ is the maximum number of occasions for candidate PDSCH reception in frequency domain in the (n-i)-th time unit and $numFDM$ is the number of occasions for candidate PDSCH reception for FDM supported by the UE.

4. The method of claim 1, wherein in case that at most one FDM is supported in one time unit, the determining the total number of occasions for candidate PDSCH reception based on the sets of slot timing values for HARQ feedback for multiple candidate services comprises:

    determining, based on a set of slot timing values for HARQ feedback for each candidate service, a union set of sets of slot timing values for HARQ feedback for all candidate services;
    determining, based on the number of occasions for candidate PDSCH reception for TDM supported by the UE and/or a maximum number of non-overlapping occasions for candidate PDSCH reception in time domain in each time unit of the union set, the number of occasions for candidate PDSCH reception in each time unit; and
    determining, based on the number of occasions for candidate PDSCH reception in all time units, the total number of occasions for candidate PDSCH reception.

5. The method of claim 4, wherein in case that the number of occasions for candidate PDSCH reception in each time unit is determined based on the number of occasions for candidate PDSCH reception for TDM supported by the UE and the maximum number of non-overlapping occasions for candidate PDSCH reception in time domain in each time unit of the union set, the number of occasions for candidate PDSCH reception in each time unit is determined by the following formula:

$$MA_{t(n-i)} = min(TDRA\_comput_{t(n-i)}, numTDM);$$

wherein $MA_{t(n-i)}$ is the number of occasions for candidate PDSCH reception in (n-i)-th time unit, $TDRA\_comput_{t(n-i)}$ is the maximum number of non-overlapping occasions for candidate PDSCH reception in time domain in the (n-i)-th time unit and $numTDM$ is the number of occasions for candidate PDSCH reception for TDM supported by the UE.

6. The method of claim 1, wherein in case that the multiple candidate services only comprise multicast broadcast services, MBSs, the determining the total number of occasions for candidate PDSCH reception based on the sets of slot timing values for HARQ feedback for multiple candidate services comprises:

    determining, based on a set of slot timing values for HARQ feedback for each candidate service, a union set of sets of slot timing values for HARQ feedback for all candidate services;
    determining, based on the number of occasions for candidate PDSCH reception for FDM supported by the UE and the number of occasions for candidate PDSCH reception for TDM supported by the UE, the number of occasions for candidate PDSCH reception in each time unit; and
    determining, based on the number of occasions for candidate PDSCH reception in all time units, the total number of occasions for candidate PDSCH reception.

7. The method of claim 6, wherein the number of occasions for candidate PDSCH reception in each time unit is determined by the following formula:

$$MA_{t(n-i)} = numTDM * numFDM;$$

wherein $MA_{t(n-i)}$ is the number of occasions for candidate PDSCH reception in (n-i)-th time unit, $numTDM$ is the number of occasions for candidate PDSCH reception for TDM supported by the UE and $numFDM$ is the number of occasions for candidate PDSCH reception for FDM supported by the UE.

8. The method of claim 1, wherein in case that the multiple candidate services only comprise MBSs, the determining the total number of occasions for candidate PDSCH reception based on the sets of slot timing values for HARQ feedback for multiple candidate services comprises:

    determining, based on a set of slot timing values for HARQ feedback for each candidate service, a union set of sets of slot timing values for HARQ feedback for all candidate services;
    determining the number of occasions for candidate PDSCH reception in each time unit based on a maximum number of occasions for candidate PDSCH reception in frequency domain in each time unit of the union set and a maximum number of non-overlapping occasions for candidate PDSCH reception in time domain in each time unit of the union set; and
    determining, based on the number of occasions for candidate PDSCH reception in all time units, the total number of occasions for candidate PDSCH reception.

9. The method of claim 8, wherein the number of occasions for candidate PDSCH reception in each time unit is determined by the following formula:

$$MA_{t(n-i)} = TDRA\_comput_{t(n-i)} * count_{t(n-i)};$$

wherein $MA_{t(n-i)}$ is the number of occasions for candidate PDSCH reception in (n-i)-th time unit, $TDRA\_comput_{t(n-i)}$ is the maximum number of non-overlapping occasions for candidate PDSCH reception in time domain in the (n-i)-th time unit and $count_{t(n-i)}$ is the maximum number of occasions for candidate PDSCH reception in frequency domain in the (n-i)-th time unit.

10. The method of claim 1, wherein in case that the multiple candidate services only comprise MBSs, the determining the total number of occasions for candidate PDSCH reception based on the sets of slot timing values for HARQ feedback for multiple candidate services comprises:

determining, based on a set of slot timing values for HARQ feedback for each candidate service, a union set of sets of slot timing values for HARQ feedback for all candidate services;
determining the number of occasions for candidate PDSCH reception in each time unit based on the number of occasions for candidate PDSCH reception for FDM supported by the UE, the number of occasions for candidate PDSCH reception for TDM supported by the UE, a maximum number of occasions for candidate PDSCH reception in frequency domain in each time unit of the union set and a maximum number of non-overlapping occasions for candidate PDSCH reception in time domain in each time unit of the union set; and
determining, based on the number of occasions for candidate PDSCH reception in all time units, the total number of occasions for candidate PDSCH reception.

11. The method of claim 10, wherein the number of occasions for candidate PDSCH reception in each time unit is determined by the following formula:

$$MA_{t(n-i)} = TDRA\_comput_{t(n-i)} * min(count_{t(n-i)}, numFDM);$$

wherein $MA_{t(n-i)}$ is the number of occasions for candidate PDSCH reception in (n-i)-th time unit, $TDRA\_comput_{t(n-i)}$ is the maximum number of non-overlapping occasions for candidate PDSCH reception in time domain in the (n-i)-th time unit, $count_{t(n-i)}$ is the maximum number of occasions for candidate PDSCH reception in frequency domain in the (n-i)-th time unit and $numFDM$ is the number of occasions for candidate PDSCH reception for FDM supported by the UE.

12. The method of claim 1, wherein in case that the multiple candidate services comprise MBS and unicast service, the determining the total number of occasions for candidate PDSCH reception based on the sets of slot timing values for HARQ feedback for multiple candidate services comprises:

determining, based on a set of slot timing values for HARQ feedback for each candidate service, a union set of sets of slot timing values for HARQ feedback for all candidate services;
determining the number of occasions for candidate PDSCH reception in each time unit based on the number of occasions for candidate PDSCH reception for FDM supported by the UE, a maximum number of occasions for candidate PDSCH reception in frequency domain in each time unit of the union set, a maximum number of non-overlapping occasions for candidate PDSCH reception in time domain in time units only comprising MBS of the union set, a maximum number of non-overlapping occasions for candidate PDSCH reception in time domain in time units only comprising unicast service of the union set and a maximum number of non-overlapping occasions for candidate PDSCH reception in time domain in time units comprising MBS and unicast service of the union set; and
determining, based on the number of occasions for candidate PDSCH reception in all time units, the total number of occasions for candidate PDSCH reception.

13. The method of claim 12, wherein the number of occasions for candidate PDSCH reception in each time unit is determined by the following formula:

$$MA_{t(n-i)} = \begin{cases} B & , & when\ the\ (n-i)-th\ time\ unit\ only\ comprises\ MBS \\ max(B,C) & , & when\ the\ (n-i)-th\ time\ unit\ comprises\ MBS\ and\ unicast\ service, \\ D & , & when\ the\ (n-i)-th\ time\ unit\ only\ comprises\ unicast\ service \end{cases}$$

$$B = min(count_{t(n-i)}, numFDM) * MBS\_TDRA\_comput_{t(n-i)},$$
$$C = unite\_TDRA\_comput_{t(n-i)}$$
$$+$$
$$[min(count_{t(n-i)}, numFDM) - 1] * MBS\_TDRA\_comput_{t(n-i)}, and$$
$$D = unicast\_TDRA\_comput_{t(n-i)};$$

wherein $MA_{t(n-i)}$ is the number of occasions for candidate PDSCH reception in (n-i)-th time unit, $count_{t(n-i)}$ is the maximum number of occasions for candidate PDSCH reception in frequency domain in the (n-i)-th time unit, $numFDM$ is the number of occasions for candidate PDSCH reception for FDM supported by the UE, $MBS\_TDRA\_comput_{t(n-i)}$ is the maximum number of non-overlapping occasions for candidate PDSCH reception in time domain in a time unit only comprising MBS of the union set, $unite\_TDRA\_comput_{t(n-i)}$ is the maximum number of non-overlapping occasions for candidate PDSCH reception in time domain in a time unit comprising MBS and unicast service of the union set and $unicast\_TDRA\_comput_{t(n-i)}$ is the maximum number of non-overlapping occasions for candidate PDSCH reception in time domain in a time unit only comprising unicast service of the union set.

14. The method of claim 13, wherein a value of $numFDM$ is 1 or 2.

15. The method of claim 1, wherein the determining the codebook order corresponding to the occasions for candidate PDSCH reception in each time unit comprises:

   receiving first information, wherein the first information is used for indicating the codebook order corresponding to the occasions for candidate PDSCH reception in each time unit; and
   determining the codebook order corresponding to the occasions for candidate PDSCH reception in each time unit based on the first information.

16. The method of claim 15, wherein the first information is comprised in downlink control information, DCI.

17. The method of claim 15, wherein the first information is associated with one of the followings:

   a radio network temporary identity, RNTI, used for scrambling downlink data on an occasion for candidate PDSCH reception;
   a control resource set, CORESET, of physical downlink control channel, PDCCH, for transmitting DCI;
   a search space of PDCCH for transmitting DCI;
   a start location of PDSCH in frequency domain; and
   a time domain resource allocation, TDRA.

18. The method of claim 1, wherein in case that a scheduled service is a unicast service, an HARQ feedback order corresponding to the unicast service is a given order.

19. A method for receiving a hybrid automatic repeat request, HARQ, codebook, applied to a network side device, comprising:
   receiving an HARQ codebook transmitted from a user equipment, UE, wherein the HARQ codebook is transmitted after the UE, based on a set of slot timing values for HARQ feedback for each candidate service in multiple candidate services, determines a total number of occasions for candidate physical downlink shared channel, PDSCH, reception, and determines a codebook order corresponding to occasions for candidate PDSCH reception in each time unit and a value of each bit in the HARQ codebook based on whether downlink data is correctly received at each occasion for candidate PDSCH reception.

20. The method of claim 19, wherein before the receiving the HARQ codebook transmitted from the UE, the method further comprises:
   transmitting first information, wherein the first information is used for indicating the codebook order corresponding to the occasions for candidate PDSCH reception in each time unit.

21. The method of claim 20, wherein the first information is comprised in downlink control information, DCI.

22. The method of claim 21, wherein the first information is associated with one of the followings:

a radio network temporary identity, RNTI, used for scrambling downlink data on an occasion for candidate PDSCH reception;
a control resource set, CORESET, of physical downlink control channel, PDCCH, for transmitting DCI;
a search space of PDCCH for transmitting DCI;
a start location of PDSCH in frequency domain; and
a time domain resource allocation, TDRA.

23. A user equipment, UE, comprises a memory, a transceiver and a processor;
wherein the memory is used for storing computer programs; the transceiver is used for transmitting and receiving data under control of the processor; and the computer programs, when executed by the processor, cause the UE to perform the following operations:

determining a total number of occasions for candidate physical downlink shared channel, PDSCH, reception based on sets of slot timing values for hybrid automatic repeat request, HARQ, feedback for multiple candidate services, and determining a codebook order corresponding to the occasions for candidate PDSCH reception in each time unit;
determining a value of each bit in an HARQ codebook based on whether downlink data is correctly received at each occasion for candidate PDSCH reception; and
transmitting the HARQ codebook.

24. The UE of claim 23, wherein in case that at most one time division multiplexing, TDM, is supported in one time unit, the determining the total number of occasions for candidate PDSCH reception based on the sets of slot timing values for HARQ feedback for multiple candidate services comprises:

determining, based on a set of slot timing values for HARQ feedback for each candidate service, a union set of sets of slot timing values for HARQ feedback for all candidate services;
determining, based on the number of occasions for candidate PDSCH reception for frequency division multiplexing, FDM, supported by the UE and/or a maximum number of occasions for candidate PDSCH reception in frequency domain in each time unit of the union set, the number of occasions for candidate PDSCH reception in each time unit; and
determining, based on the number of occasions for candidate PDSCH reception in all time units, the total number of occasions for candidate PDSCH reception.

25. The UE of claim 24, wherein in case that the number of occasions for candidate PDSCH reception in each time unit is determined based on the number of occasions for candidate PDSCH reception for FDM supported by the UE and the maximum number of occasions for candidate PDSCH reception in frequency domain in each time unit of the union set, the number of occasions for candidate PDSCH reception in each time unit is determined by the following formula:

$$MA_{t(n-i)} = min(count_{t(n-i)}, numFDM);$$

wherein $MA_{t(n-i)}$ is the number of occasions for candidate PDSCH reception in (n-i)-th time unit, $count_{t(n-i)}$ is the maximum number of occasions for candidate PDSCH reception in frequency domain in the (n-i)-th time unit and $numFDM$ is the number of occasions for candidate PDSCH reception for FDM supported by the UE.

26. The UE of claim 23, wherein in case that at most one FDM is supported in one time unit, the determining the total number of occasions for candidate PDSCH reception based on the sets of slot timing values for HARQ feedback for multiple candidate services comprises:

determining, based on a set of slot timing values for HARQ feedback for each candidate service, a union set of sets of slot timing values for HARQ feedback for all candidate services;

determining, based on the number of occasions for candidate PDSCH reception for TDM supported by the UE and/or a maximum number of non-overlapping occasions for candidate PDSCH reception in time domain in each time unit of the union set, the number of occasions for candidate PDSCH reception in each time unit; and

determining, based on the number of occasions for candidate PDSCH reception in all time units, the total number of occasions for candidate PDSCH reception.

27. The UE of claim 26, wherein in case that the number of occasions for candidate PDSCH reception in each time unit is determined based on the number of occasions for candidate PDSCH reception for TDM supported by the UE and the maximum number of non-overlapping occasions for candidate PDSCH reception in time domain in each time unit of the union set, the number of occasions for candidate PDSCH reception in each time unit is determined by the following formula:

$$MA_{t(n-i)} = min(TDRA\_comput_{t(n-i)}, numTDM);$$

wherein $MA_{t(n-i)}$ is the number of occasions for candidate PDSCH reception in (n-i)-th time unit, $TDRA\_comput_{t(n-i)}$ is the maximum number of non-overlapping occasions for candidate PDSCH reception in time domain in the (n-i)-th time unit and $numTDM$ is the number of occasions for candidate PDSCH reception for TDM supported by the UE.

28. The UE of claim 23, wherein in case that the multiple candidate services only comprise multicast broadcast services, MBSs, the determining the total number of occasions for candidate PDSCH reception based on the sets of slot timing values for HARQ feedback for multiple candidate services comprises:

determining, based on a set of slot timing values for HARQ feedback for each candidate service, a union set of sets of slot timing values for HARQ feedback for all candidate services;

determining, based on the number of occasions for candidate PDSCH reception for FDM supported by the UE and the number of occasions for candidate PDSCH reception for TDM supported by the UE, the number of occasions for candidate PDSCH reception in each time unit; and

determining, based on the number of occasions for candidate PDSCH reception in all time units, the total number of occasions for candidate PDSCH reception.

29. The UE of claim 28, wherein the number of occasions for candidate PDSCH reception in each time unit is determined by the following formula:

$$MA_{t(n-i)} = numTDM * numFDM;$$

wherein $MA_{t(n-i)}$ is the number of occasions for candidate PDSCH reception in (n-i)-th time unit, $numTDM$ is the number of occasions for candidate PDSCH reception for TDM supported by the UE and $numFDM$ is the number of occasions for candidate PDSCH reception for FDM supported by the UE.

30. The UE of claim 23, wherein in case that the multiple candidate services only comprise MBSs, the determining the total number of occasions for candidate PDSCH reception based on the sets of slot timing values for HARQ feedback for multiple candidate services comprises:

determining, based on a set of slot timing values for HARQ feedback for each candidate service, a union set of sets of slot timing values for HARQ feedback for all candidate services;

determining the number of occasions for candidate PDSCH reception in each time unit based on a maximum number of occasions for candidate PDSCH reception in frequency domain in each time unit of the union set and a maximum number of non-overlapping occasions for candidate PDSCH reception in time domain in each time unit of the union set; and

determining, based on the number of occasions for candidate PDSCH reception in all time units, the total number of occasions for candidate PDSCH reception.

31. The UE of claim 30, wherein the number of occasions for candidate PDSCH reception in each time unit is determined by the following formula:

$$MA_{t(n-i)} = TDRA\_comput_{t(n-i)} * count_{t(n-i)};$$

wherein $MA_{t(n-i)}$ is the number of occasions for candidate PDSCH reception in (n-i)-th time unit, $TDRA\_comput_{t(n-i)}$ is a maximum number of non-overlapping occasions for candidate PDSCH reception in time domain in the (n-i)-th time unit and $count_{t(n-i)}$ is a maximum number of occasions for candidate PDSCH reception in frequency domain in the *(n-i)*-th time unit.

32. The UE of claim 23, wherein in case that the multiple candidate services only comprise MBSs, the determining the total number of occasions for candidate PDSCH reception based on the sets of slot timing values for HARQ feedback for multiple candidate services comprises:

   determining, based on a set of slot timing values for HARQ feedback for each candidate service, a union set of sets of slot timing values for HARQ feedback for all candidate services;
   determining the number of occasions for candidate PDSCH reception in each time unit based on the number of occasions for candidate PDSCH reception for FDM supported by the UE, the number of occasions for candidate PDSCH reception for TDM supported by the UE, a maximum number of occasions for candidate PDSCH reception in frequency domain in each time unit of the union set and a maximum number of non-overlapping occasions for candidate PDSCH reception in time domain in each time unit of the union set; and
   determining, based on the number of occasions for candidate PDSCH reception in all time units, the total number of occasions for candidate PDSCH reception.

33. The UE of claim 32, wherein the number of occasions for candidate PDSCH reception in each time unit is determined by the following formula:

$$MA_{t(n-i)} = TDRA\_comput_{t(n-i)} * min(\,count_{t(n-i)}, numFDM);$$

wherein $MA_{t(n-i)}$ is the number of occasions for candidate PDSCH reception in (n-i)-th time unit, $TDRA\_comput_{t(n-i)}$ is a maximum number of non-overlapping occasions for candidate PDSCH reception in time domain in the *(n-i)*-th time unit, $count_{t(n-i)}$ is a maximum number of occasions for candidate PDSCH reception in frequency domain in the (n-i)-th time unit and *numFDM* is the number of occasions for candidate PDSCH reception for FDM supported by the UE.

34. The UE of claim 23, wherein in case that the multiple candidate services comprise MBS and unicast service, the determining the total number of occasions for candidate PDSCH reception based on the sets of slot timing values for HARQ feedback for multiple candidate services comprises:

   determining, based on a set of slot timing values for HARQ feedback for each candidate service, a union set of sets of slot timing values for HARQ feedback for all candidate services;
   determining the number of occasions for candidate PDSCH reception in each time unit based on the number of occasions for candidate PDSCH reception for FDM supported by the UE, a maximum number of occasions for candidate PDSCH reception in frequency domain in each time unit of the union set, a maximum number of non-overlapping occasions for candidate PDSCH reception in time domain in time units only comprising MBS of the union set, a maximum number of non-overlapping occasions for candidate PDSCH reception in time domain in time units only comprising unicast service of the union set and a maximum number of non-overlapping occasions for candidate PDSCH reception in time domain in time units comprising MBS and unicast service of the union set;
   determining, based on the number of occasions for candidate PDSCH reception in all time units, the total number of occasions for candidate PDSCH reception.

35. The UE of claim 34, wherein the number of occasions for candidate PDSCH reception in each time unit is determined by the following formula:

$$MA_{t(n-i)} = \begin{cases} B & , & \text{when the } (n-i)-th \text{ time unit only comprises } MBS \\ max(B,C) & , & \text{when the } (n-i)-th \text{ time unit comprises } MBS \text{ and unicast service}, \\ D & , & \text{when the } (n-i)-th \text{ time unit only comprises } unicast \text{ service} \end{cases}$$

$$B = min(count_{t(n-i)}, numFDM) * MBS\_TDRA\_comput_{t(n-i)},$$

$$C = unite\_TDRA\_comput_{t(n-i)}$$

$$+$$

$$[min(count_{t(n-i)}, numFDM) - 1] * MBS\_TDRA\_comput_{t(n-i)}, \text{ and}$$

$$D = unicast\_TDRA\_comput_{t(n-i)};$$

wherein $MA_{t(n-i)}$ is the number of occasions for candidate PDSCH reception in (n-i)-th time unit, $count_{t(n-i)}$ is a maximum number of occasions for candidate PDSCH reception in frequency domain in the (n-i)-th time unit, $numFDM$ is the number of occasions for candidate PDSCH reception for FDM supported by the UE, $MBS\_TDRA\_comput_{t(n-i)}$ is a maximum number of non-overlapping occasions for candidate PDSCH reception in time domain in a time unit only comprising MBS of the union set, $unite\_TDRA\_comput_{t(n-i)}$ is a maximum number of non-overlapping occasions for candidate PDSCH reception in time domain in a time unit comprising MBS and unicast service of the union set and $unicast\_TDRA\_comput_{t(n-i)}$ is a maximum number of non-overlapping occasions for candidate PDSCH reception in time domain in a time unit only comprising unicast service of the union set.

36. The UE of claim 35, wherein a value of *numFDM* is 1 or 2.

37. The UE of claim 23, wherein the determining the codebook order corresponding to the occasions for candidate PDSCH reception in each time unit comprises:

    receiving first information, wherein the first information is used for indicating the codebook order corresponding to the occasions for candidate PDSCH reception in each time unit; and
    determining the codebook order corresponding to the occasions for candidate PDSCH reception in each time unit based on the first information.

38. The UE of claim 37, wherein the first information is comprised in downlink control information, DCI.

39. The UE of claim 37, wherein the first information is associated with one of the followings:

    a radio network temporary identity, RNTI, used for scrambling downlink data on an occasion for candidate PDSCH reception;
    a control resource set, CORESET, of physical downlink control channel, PDCCH, for transmitting DCI;
    a search space of PDCCH for transmitting DCI;
    a start location of PDSCH in frequency domain; and
    a time domain resource allocation, TDRA.

40. The UE of claim 23, wherein in case that a scheduled service is a unicast service, an HARQ feedback order corresponding to the unicast service is a given order.

41. A network side device, comprises a memory, a transceiver and a processor;
    wherein the memory is used for storing computer programs; the transceiver is used for transmitting and receiving data under control of the processor; and the computer programs, when executed by the processor, cause the network side device to perform the following operations:
    receiving an HARQ codebook transmitted from a user equipment, UE, wherein the HARQ codebook is transmitted after the UE, based on a set of slot timing values for HARQ feedback for each candidate service in multiple candidate services, determines a total number of occasions for candidate physical downlink shared channel, PDSCH, reception, and determines a codebook order corresponding to occasions for candidate PDSCH reception in each time unit and a value of each bit in the HARQ codebook based on whether downlink data is correctly received at each occasion for candidate PDSCH reception.

42. The network side device of claim 41, wherein before the receiving the HARQ codebook transmitted from the UE, the computer programs, when executed by the processor, cause the network side device to further perform:

transmitting first information, wherein the first information is used for indicating the codebook order corresponding to the occasions for candidate PDSCH reception in each time unit.

43. The network side device of claim 42, wherein the first information is comprised in downlink control information, DCI.

44. The network side device of claim 43, wherein the first information is associated with one of the followings:

a radio network temporary identity, RNTI, used for scrambling downlink data on an occasion for candidate PDSCH reception;
a control resource set, CORESET, of physical downlink control channel, PDCCH, for transmitting DCI;
a search space of PDCCH for transmitting DCI;
a start location of PDSCH in frequency domain; and
a time domain resource allocation, TDRA.

45. An apparatus for transmitting a hybrid automatic repeat request, HARQ, codebook, comprising:

a first determining module, used for determining a total number of occasions for candidate physical downlink shared channel, PDSCH, reception based on HARQ feedback timing sets for multiple candidate services, and determining a codebook order corresponding to occasions for candidate PDSCH reception in each time unit;
a second determining module, used for determining a value of each bit in an HARQ codebook based on whether downlink data is correctly received at each occasion for candidate PDSCH reception; and
a transmitting module, used for transmitting the HARQ codebook.

46. The apparatus of claim 45, wherein in case that at most one time division multiplexing, TDM, is supported in one time unit, the first determining module comprises a first determining unit, a second determining unit and a third determining unit;

the first determining unit is used for determining, based on an HARQ feedback timing set for each candidate service, a union set of HARQ feedback timing sets for all candidate services;
the second determining unit is used for determining, based on the number of occasions for candidate PDSCH reception for FDM supported by the UE and/or a maximum number of occasions for candidate PDSCH reception in frequency domain in each time unit of the union set, the number of occasions for candidate PDSCH reception in each time unit; and
the third determining unit is used for determining, based on the number of occasions for candidate PDSCH reception in all time units, the total number of occasions for candidate PDSCH reception.

47. The apparatus of claim 46, wherein in case that the number of occasions for candidate PDSCH reception in each time unit is determined based on the number of occasions for candidate PDSCH reception for FDM supported by the UE and the maximum number of occasions for candidate PDSCH reception in frequency domain in each time unit of the union set, the number of occasions for candidate PDSCH reception in each time unit is determined by the following formula:

$$MA_{t(n-i)} = min(\ count_{t(n-i)}, numFDM);$$

wherein $MA_{t(n-i)}$ is the number of occasions for candidate PDSCH reception in (n-i)-th time unit, $count_{t(n-i)}$ is the maximum number of occasions for candidate PDSCH reception in frequency domain in the (n-i)-th time unit and $numFDM$ is the number of occasions for candidate PDSCH reception for FDM supported by the UE.

48. The apparatus of claim 45, wherein in case that at most one FDM is supported in one time unit, the first determining module comprises a fourth determining unit, a fifth determining unit and a sixth determining unit;

the fourth determining unit is used for determining, based on an HARQ feedback timing set for each candidate service, a union set of HARQ feedback timing sets for all candidate services;
the fifth determining unit is used for determining, based on the number of occasions for candidate PDSCH reception for TDM supported by the UE and/or a maximum number of non-overlapping occasions for candidate PDSCH reception in time domain in each time unit of the union set, the number of occasions for candidate PDSCH reception in each time unit; and

the sixth determining unit is used for determining, based on the number of occasions for candidate PDSCH reception in all time units, the total number of occasions for candidate PDSCH reception.

49. The apparatus of claim 48, wherein in case that the number of occasions for candidate PDSCH reception in each time unit is determined based on the number of occasions for candidate PDSCH reception for TDM supported by the UE and the maximum number of non-overlapping occasions for candidate PDSCH reception in time domain in each time unit of the union set, the number of occasions for candidate PDSCH reception in each time unit is determined by the following formula:

$$MA_{t(n-i)} = min(TDRA\_comput_{t(n-i)}, numTDM);$$

wherein $MA_{t(n-i)}$ is the number of occasions for candidate PDSCH reception in (n-i)-th time unit, $TDRA\_comput_{t(n-i)}$ is the maximum number of non-overlapping occasions for candidate PDSCH reception in time domain in the (n-i)-th time unit and $numTDM$ is the number of occasions for candidate PDSCH reception for TDM supported by the UE.

50. The apparatus of claim 45, wherein in case that the multiple candidate services only comprise multicast broadcast services, MBSs, the first determining module comprises a seventh determining unit, an eighth determining unit and a ninth determining unit;

the seventh determining unit is used for determining, based on an HARQ feedback timing set for each candidate service, a union set of HARQ feedback timing sets for all candidate services;
the eighth determining unit is used for determining, based on the number of occasions for candidate PDSCH reception for FDM supported by the UE and the number of occasions for candidate PDSCH reception for TDM supported by the UE, the number of occasions for candidate PDSCH reception in each time unit; and
the ninth determining unit is used for determining, based on the number of occasions for candidate PDSCH reception in all time units, the total number of occasions for candidate PDSCH reception.

51. The apparatus of claim 50, wherein the number of occasions for candidate PDSCH reception in each time unit is determined by the following formula:

$$MA_{t(n-i)} = numTDM * numFDM;$$

wherein $MA_{t(n-i)}$ is the number of occasions for candidate PDSCH reception in (n-i)-th time unit, $numTDM$ is the number of occasions for candidate PDSCH reception for TDM supported by the UE and $numFDM$ is the number of occasions for candidate PDSCH reception for FDM supported by the UE.

52. The apparatus of claim 45, wherein in case that the multiple candidate services only comprise MBSs, the first determining module comprises a tenth determining unit, an eleventh determining unit and a twelfth determining unit;

the tenth determining unit is used for determining, based on an HARQ feedback timing set for each candidate service, a union set of HARQ feedback timing sets for all candidate services;
the eleventh determining unit is used for determining the number of occasions for candidate PDSCH reception in each time unit based on a maximum number of occasions for candidate PDSCH reception in frequency domain in each time unit of the union set and a maximum number of non-overlapping occasions for candidate PDSCH reception in time domain in each time unit of the union set; and
the twelfth determining unit is used for determining, based on the number of occasions for candidate PDSCH reception in all time units, the total number of occasions for candidate PDSCH reception.

53. The apparatus of claim 52, wherein the number of occasions for candidate PDSCH reception in each time unit is determined by the following formula:

$$MA_{t(n-i)} = TDRA\_comput_{t(n-i)} * count_{t(n-i)};$$

wherein $MA_{t(n-i)}$ is the number of occasions for candidate PDSCH reception in (n-i)-th time unit, $TDRA\_comput_{t(n-i)}$ is the maximum number of non-overlapping occasions for candidate PDSCH reception in time domain in the (n-i)-th time unit and $count_{t(n-i)}$ is the maximum number of occasions for candidate PDSCH reception in frequency domain in the *(n-i)*-th time unit.

**54.** The apparatus of claim 45, wherein in case that the multiple candidate services only comprise MBSs, the first determining module comprises a thirteenth determining unit, a fourteenth determining unit and a fifteenth determining unit;

the thirteenth determining unit is used for determining, based on an HARQ feedback timing set for each candidate service, a union set of HARQ feedback timing sets for all candidate services;
the fourteenth determining unit is used for determining the number of occasions for candidate PDSCH reception in each time unit based on the number of occasions for candidate PDSCH reception for FDM supported by the UE, the number of occasions for candidate PDSCH reception for TDM supported by the UE, a maximum number of occasions for candidate PDSCH reception in frequency domain in each time unit of the union set and a maximum number of non-overlapping occasions for candidate PDSCH reception in time domain in each time unit of the union set; and
the fifteenth determining unit is used for determining, based on the number of occasions for candidate PDSCH reception in all time units, the total number of occasions for candidate PDSCH reception.

**55.** The apparatus of claim 54, wherein the number of occasions for candidate PDSCH reception in each time unit is determined by the following formula:

$$MA_{t(n-i)} = TDRA\_comput_{t(n-i)} * min(count_{t(n-i)}, numFDM);$$

wherein $MA_{t(n-i)}$ is the number of occasions for candidate PDSCH reception in (n-i)-th time unit, $TDRA\_comput_{t(n-i)}$ is the maximum number of non-overlapping occasions for candidate PDSCH reception in time domain in the (n-i)-th time unit, $count_{t(n-i)}$ is the maximum number of occasions for candidate PDSCH reception in frequency domain in the *(n-i)*-th time unit and *numFDM* is the number of occasions for candidate PDSCH reception for FDM supported by the UE.

**56.** The apparatus of claim 45, wherein in case that the multiple candidate services comprise MBS and unicast service, the first determining module comprises a sixteenth determining unit, a seventeenth determining unit and an eighteenth determining unit;

the sixteenth determining unit is used for determining, based on an HARQ feedback timing set for each candidate service, a union set of HARQ feedback timing sets for all candidate services;
the seventeenth determining unit is used for determining the number of occasions for candidate PDSCH reception in each time unit based on the number of occasions for candidate PDSCH reception for FDM supported by the UE, a maximum number of occasions for candidate PDSCH reception in frequency domain in each time unit of the union set, a maximum number of non-overlapping occasions for candidate PDSCH reception in time domain in time units only comprising MBS of the union set, a maximum number of non-overlapping occasions for candidate PDSCH reception in time domain in time units only comprising unicast service of the union set and a maximum number of non-overlapping occasions for candidate PDSCH reception in time domain in time units comprising MBS and unicast service of the union set; and
the eighteenth determining unit is used for determining, based on the number of occasions for candidate PDSCH reception in all time units, the total number of occasions for candidate PDSCH reception.

**57.** The apparatus of claim 56, wherein the number of occasions for candidate PDSCH reception in each time unit is determined by the following formula:

$$MA_{t(n-i)} = \begin{cases} B & , & \text{when the } (n-i)-th \text{ time unit only comprises } MBS \\ max(B,C) & , & \text{when the } (n-i)-th \text{ time unit comprises } MBS \text{ and unicast service}, \\ D & , & \text{when the } (n-i)-th \text{ time unit only comprises unicast service} \end{cases}$$

$$B = min(count_{t(n-i)}, numFDM) * MBS\_TDRA\_comput_{t(n-i)},$$

$$C = unite\_TDRA\_comput_{t(n-i)}$$

$$+$$

$$[min(count_{t(n-i)}, numFDM) - 1] * MBS\_TDRA\_comput_{t(n-i)}, \text{ and}$$

$$D = unicast\_TDRA\_comput_{t(n-i)};$$

wherein $MA_{t(n-i)}$ is the number of occasions for candidate PDSCH reception in (n-i)-th time unit, $count_{t(n-i)}$ is the maximum number of occasions for candidate PDSCH reception in frequency domain in the $(n-i)$-th time unit, $numFDM$ is the number of occasions for candidate PDSCH reception for FDM supported by the UE, $MBS\_TDRA\_comput_{t(n-i)}$ is the maximum number of non-overlapping occasions for candidate PDSCH reception in time domain in a time unit only comprising MBS of the union set, $unite\_TDRA\_comput_{t(n-i)}$ is the maximum number of non-overlapping occasions for candidate PDSCH reception in time domain in a time unit comprising MBS and unicast service of the union set and $unicast\_TDRA\_comput_{t(n-i)}$ is the maximum number of non-overlapping occasions for candidate PDSCH reception in time domain in a time unit only comprising unicast service of the union set.

58. The apparatus of claim 45, wherein the first determining module further comprises a first receiving unit and a nineteenth determining unit;

    the first receiving unit is used for receiving first information, wherein the first information is used for indicating the codebook order corresponding to the occasions for candidate PDSCH reception in each time unit; and
    the nineteenth determining unit is used for determining the codebook order corresponding to the occasions for candidate PDSCH reception in each time unit based on the first information.

59. The apparatus of claim 58, wherein the first information is comprised in downlink control information, DCI.

60. The apparatus of claim 58, wherein the first information is associated with one of the followings:

    a radio network temporary identity, RNTI, used for scrambling downlink data on an occasion for candidate PDSCH reception;
    a control resource set, CORESET, of physical downlink control channel, PDCCH, for transmitting DCI;
    a search space of PDCCH for transmitting DCI;
    a start location of PDSCH in frequency domain; and
    a time domain resource allocation, TDRA.

61. The apparatus of claim 45, wherein in case that a scheduled service is a unicast service, an HARQ feedback order corresponding to the unicast service is a given order.

62. An apparatus for receiving a hybrid automatic repeat request, HARQ, codebook, comprising:
    a first receiving module, used for receiving an HARQ codebook transmitted from a user equipment, LTE; the HARQ codebook is transmitted after the UE, based on an HARQ feedback timing set for each candidate service in multiple candidate services, determines a total number of occasions for candidate physical downlink shared channel, PDSCH, reception, and determines a codebook order corresponding to occasions for candidate PDSCH reception in each time unit and a value of each bit in the HARQ codebook based on whether downlink data is correctly received at each occasion for candidate PDSCH reception.

63. The apparatus of claim 62, further comprising a second receiving module;
    the second receiving module is used for receiving a random access request transmitted from the UE, and the UE transmits the HARQ codebook after accesses a network.

64. The apparatus of claim 62, further comprising a first transmitting module:
    the first transmitting module is used for transmitting first information, the first information is used for indicating the codebook order corresponding to the occasions for candidate PDSCH reception in each time unit.

**65.** The apparatus of claim 64, wherein the first information is comprised in downlink control information, DCI.

**66.** The apparatus of claim 64, wherein the first information is associated with one of the followings:

a radio network temporary identity, RNTI, used for scrambling downlink data on an occasion for candidate PDSCH reception;
a control resource set, CORESET, of physical downlink control channel, PDCCH, for transmitting DCI;
a search space of PDCCH for transmitting DCI;
a start location of PDSCH in frequency domain; and
a time domain resource allocation, TDRA.

**67.** A processor readable storage medium, storing computer programs that, when executed by a processor, causes the processor to perform the method for transmitting HARQ codebook of any one of the claims 1 to 18, or causes the processor to perform the method for receiving HARQ codebook of any one of claims 19 to 22.

FIG. 1

FIG. 2

MBS_k1={3,4,5}

PUCCH          MBS-1          MBS-2          unicast

unicast_k1={2,3,4}

n          n+1

MBS-1

MBS-2

three 4-bit sub-codebook = 12 bits

unicast

slot          n-5          n-4          n-3          n-2          n-1          n          n+1

## FIG. 3

PUCCH          MBS-1          MBS-2          unicast

n          n+1

MBS-1

MBS-2

three 4-bit sub-codebook = 12 bits

unicast

slot          n-5          n-4          n-3          n-2          n-1          n          n+1

transmit 12 bits
information

| 2 bits | 2 bits | 2 bits | 1 bit |

slot          n-5          n-4          n-3          n-2

actually 7 bits of
effective information

## FIG. 4

Determining a total number of occasions for candidate physical downlink shared channel (PDSCH) reception based on sets of slot timing values for HARQ feedback for multiple candidate services, and determining a codebook order corresponding to the occasions for candidate PDSCH reception in each time unit ⟍ 501

Determining a value of each bit in the HARQ codebook based on whether downlink data is correctly received at each occasion for candidate PDSCH reception ⟋ 502

Transmitting the HARQ codebook ⟋ 503

FIG. 5

unicast_k1 = {2,3,4}

MBS_k1 = {3,4,5}

PUCCH    MBS-1    MBS-2    unicast

n    n+1

MBS-1

MBS-2

HARQ feedback

| slot | n-5 | n-4 | n-3 | n-2 | n-1 | n | n+1 |
|---|---|---|---|---|---|---|---|

| Count value | 2 | 3 | 3 | 1 |
|---|---|---|---|---|
| Union_k1 value | 5 | 4 | 3 | 2 |

FIG. 6

unicast_k1 ={2,3,4}

MBS_k1 ={3,4,5}

PUCCH   MBS-1   MBS-2   unicast

n   n+1

MBS-1

MBS-2

unicast

HARQ feed back 7 bits

| slot | n-5 | n-4 | n-3 | n-2 | n-1 | n | n+1 |
|------|-----|-----|-----|-----|-----|---|-----|

| | 0 | 1 | 2 | 3 | 4 | 5 | 6 |
|---|---|---|---|---|---|---|---|

DCI/G-RNTI-1 feedback order    1    █    0

DCI/G-RNTI-1 feedback order    0    1    █

DCI/C-RNTI feedback order    █    █    0

| 0/1 | 0/1 | 1 | 0/1 | 0/1 | 1 | 0/1 |
|-----|-----|---|-----|-----|---|-----|

MBS-2   MBS-1   MBS-2   MBS-1   unicast

7 bits of HARQ codebook

FIG. 7

first feedback order increment, then slot increment

| | 0 | 1 | 2 | 3 | 4 | 5 | 6 |
|---|---|---|---|---|---|---|---|
| HARQ codebook | 0/1 | 0/1 | 1 | 0/1 | 0/1 | 1 | 0/1 |

feedback order=0    feedback order=1    feedback order=0    feedback order=1    feedback order =0    feedback order=1    feedback order=0

slot n-5      slot n-4      slot n-3      slot n-2

(a)

first slot increment, then feedback order increment

| | 0 | 1 | 2 | 3 | 4 | 5 | 6 |
|---|---|---|---|---|---|---|---|
| HARQ codebook | 0/1 | 1 | 0/1 | 0/1 | 0/1 | 0/1 | 1 |

slot n-5    slot n-5    slot n-3    slot n-2    slot n-5    slot n-4    slot n-3

feedback order=0        feedback order=1

7 bits of HARQ codebook

(b)

## FIG. 8

unicast_k1 ={2,3,4}

MBS_k1 ={3,4,5}

PUCCH   MBS-1   MBS-2   MBS-3   MBS-4   MBS-5   unicast

n    n+1

MBS-1
MBS-2
MBS-3
MBS-4
MBS-5

HARQ feedback

| n-5 | n-4 | n-3 | n-2 | n-1 | n | n+1 |
|---|---|---|---|---|---|---|

| Count value | 5 | 6 | 6 | 1 |
|---|---|---|---|---|

| Union_k1 value | 5 | 4 | 3 | 2 |
|---|---|---|---|---|

## FIG. 9

unicast_k1 ={2,3,4}

MBS_k1 ={3,4,5}

PUCCH   MBS-1   MBS-2   MBS-3   MBS-4   MBS-5   unicast   no scheduling detected

n   n+1

DCI/G-RNTI-1  MBS-1

DCI/G-RNTI-2  MBS-2

DCI/G-RNTI-3  MBS-3

DCI/G-RNTI-4  MBS-4

DCI/G-RNTI-5  MBS-5

DCI/C-RNTI  unicast

HARQ feedback 10 bits

| n-5 | n-4 | n-3 | n-2 | n-1 | n | n+1 |

| 0 | 1 | 2 | 3 | 4 | 5 | 6 | 7 | 8 | 9 |
|---|---|---|---|---|---|---|---|---|---|
| 0/1 | 0/1 | 0/1 | 0/1 | 0/1 | 1 | 0/1 | 1 | 0/1 | 0/1 |

MBS-3  MBS-1  MBS-5  unicast  MBS-4  MBS-3  MBS-5  unicast

10 bits of HARQ codebook

FIG. 10

SLIV in TDRA (start symbol, length symbol)

1 slot includes 14 symbols

| 0 | 1 | 2 | 3 | 4 | 5 | 6 | 7 | 8 | 9 | 10 | 11 | 12 | 13 |

SLIV（0，12）

SLIV（8，4）

SLIV（0，4）

SLIV（5，2）

SLIV（8，5）

FIG. 11

SLIV in TDRA (start symbol, length symbol)

1 slot includes 14
symbols

| 0 | 1 | 2 | 3 | 4 | 5 | 6 | 7 | 8 | 9 | 10 | 11 | 12 | 13 |

SLIV（0, 12）

SLIV（8, 4）

SLIV in MBS
TDRA

SLIV（0, 4）

SLIV（5, 2）

SLIV in unicast
TDRA

SLIV（8, 5）

FIG. 12

Start

Receiving an HARQ codebook transmitted from a UE; the HARQ codebook is
transmitted after the UE determines, based on set of slot timing values for HARQ
feedback for each candidate service in multiple candidate services, a total number
of occasions for candidate physical downlink shared channel (PDSCH) reception,
a codebook order corresponding to the occasion for candidate PDSCH reception in
each time unit, and a value of each bit in the HARQ codebook based on whether
downlink data is correctly received at each occasion for candidate PDSCH
reception

1301

FIG. 13

FIG. 14

FIG. 15

FIG. 16

FIG. 17

## INTERNATIONAL SEARCH REPORT

| International application No. |
| --- |
| **PCT/CN2022/080778** |

### A. CLASSIFICATION OF SUBJECT MATTER

H04L 5/00(2006.01)i

According to International Patent Classification (IPC) or to both national classification and IPC

### B. FIELDS SEARCHED

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNTXT; WPABSC; ENTXTC; WPABS; ENTXT; CNKI; 3GPP: PDSCH时机, PDSCH接收时机, 数目, 数量, 总数, 个数, 码本, 顺序, 反馈时间集, HARQ, PDSCH opportunity, PDSCH receiving opportunity, number, codebook, sequence, feedback time set

### C. DOCUMENTS CONSIDERED TO BE RELEVANT

| Category* | Citation of document, with indication, where appropriate, of the relevant passages | Relevant to claim No. |
| --- | --- | --- |
| A | CN 110635870 A (HUAWEI TECHNOLOGIES CO., LTD.) 31 December 2019 (2019-12-31) entire document | 1-67 |
| A | CN 110505040 A (VIVO COMMUNICATION TECHNOLOGY CO., LTD.) 26 November 2019 (2019-11-26) entire document | 1-67 |
| A | WO 2020144833 A1 (NTT DOCOMO INC.) 16 July 2020 (2020-07-16) entire document | 1-67 |
| A | WO 2020205315 A1 (QUALCOMM INC.) 08 October 2020 (2020-10-08) entire document | 1-67 |
| A | WO 2020168351 A1 (APPLE INC.) 20 August 2020 (2020-08-20) entire document | 1-67 |

☐ Further documents are listed in the continuation of Box C.   ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **23 May 2022** | **01 June 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/080778**

| Patent document cited in search report | | | Publication date (day/month/year) | Patent family member(s) | | | Publication date (day/month/year) |
|---|---|---|---|---|---|---|---|
| CN | 110635870 | A | 31 December 2019 | EP | 3800816 | A1 | 07 April 2021 |
| | | | | US | 2021135793 | A1 | 06 May 2021 |
| | | | | WO | 2019242711 | A1 | 26 December 2019 |
| CN | 110505040 | A | 26 November 2019 | KR | 20210010927 | A | 28 January 2021 |
| | | | | US | 2021218537 | A1 | 15 July 2021 |
| | | | | EP | 3817261 | A1 | 05 May 2021 |
| | | | | BR | 112020023554 | A2 | 09 February 2021 |
| | | | | JP | 2021524202 | A | 09 September 2021 |
| | | | | WO | 2019219072 | A1 | 21 November 2019 |
| | | | | AU | 2019270848 | A1 | 07 January 2021 |
| WO | 2020144833 | A1 | 16 July 2020 | JP | WO2020144833 | A1 | 25 November 2021 |
| | | | | US | 2022116156 | A1 | 14 April 2022 |
| | | | | EP | 3911004 | A1 | 17 November 2021 |
| WO | 2020205315 | A1 | 08 October 2020 | US | 2020313803 | A1 | 01 October 2020 |
| | | | | EP | 3949196 | A1 | 09 February 2022 |
| | | | | CN | 113615113 | A | 05 November 2021 |
| WO | 2020168351 | A1 | 20 August 2020 | JP | 2022521702 | A | 12 April 2022 |
| | | | | CN | 113475144 | A | 01 October 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110363931